# EUROPEAN PATENT APPLICATION

(11) **EP 4 566 852 A1**
(43) Date of publication of application: **11.06.2025**
(21) Application number: 23859134.1
(22) Date of filing: 11.08.2023
(51) Int. Cl.: B60H 1/00

(54) **THERMAL MANAGEMENT SYSTEM, CONTROL METHOD, AND VEHICLE**

(30) Priority: 31.08.2022 CN 202211059210
(71) Applicant: Shenzhen Yinwang Intelligent Technologies Co., Ltd., Shenzhen, Guangdong 518129 (CN)
(72) Inventor: NIU, Weichen, Shenzhen, Guangdong 518129 (CN); LU, Shuqiang, Shenzhen, Guangdong 518129 (CN); HU, Haomang, Shenzhen, Guangdong 518129 (CN)
(74) Representative: Thun, Clemens
(86) International application number: PCT/CN2023/112738
(87) International publication number: WO 2024/046100

(57) **Abstract**

This application relates to the field of internet of vehicles technologies, and in particular, to a thermal management system, a control method, and a vehicle. The thermal management system includes a first loop and a second loop, where a cooler core on the first loop gets a coolant output from a first heat exchange pipe, one end of the first loop is connected to a first end of the valve body assembly, and the other end of the first loop is connected to a second end of the valve body assembly A battery, a second water pump, a first valve body, and a second valve body are disposed on the second loop. One end of the second loop is connected to a third end of the valve body assembly, and the other end of the second loop is connected to a fourth end of the valve body assembly The first valve body enables a coolant passing through the valve body assembly to flow back to the valve body assembly after the coolant flows into the battery through the second water pump. Alternatively, the first valve body enables a coolant to flow back from the valve body assembly to the valve body assembly through the first valve body, and the second valve body enables a coolant in the battery to flow back from a second end of the battery to a first end of the battery through the second valve body. The thermal management system in this application can improve coordination efficiency between loops.

## Description

### CROSS-REFERENCE TO RELATED APPLICATIONS

This application claims priority to Chinese Patent Application No. 202211059210.9, filed with the China National Intellectual Property Administration on August 31, 2022 and entitled "THERMAL MANAGEMENT SYSTEM, CONTROL METHOD, AND VEHICLE", which is incorporated herein by reference in its entirety.

### TECHNICAL FIELD

This application relates to the field of internet of vehicles technologies, and in particular, to a thermal management system, a control method, and a vehicle.

### BACKGROUND

With shortage of energy and aggravation of environmental pollution, electric vehicles are increasingly widely used because the electric vehicles have higher energy utilization and lower pollution emissions than conventional fuel vehicles.

In an electric vehicle, a thermal management system is generally used to manage temperatures of a passenger cabin and a battery in the electric vehicle. However, the thermal management system controls the temperature of the passenger cabin and the temperature of the battery separately. Consequently, collaboration efficiency of a loop in which the battery is located and a loop for controlling the passenger cabin in the thermal management system is low.

### SUMMARY

This application provides a thermal management system, a control method, and a vehicle, to improve coordination efficiency between a loop in which a battery is located and a loop for controlling a passenger cabin in the thermal management system.

According to a first aspect, this application provides a thermal management system. The thermal management system includes a first loop a, a second loop, and a valve body assembly. A cooler core in an air conditioner box assembly and a first heat exchange pipe are disposed on the first loop. A first water pump is further disposed on the first loop, the cooler core is configured to get a coolant output from the first heat exchange pipe, a first port of the first loop is connected to a first end of the valve body assembly, and a second port of the first loop is connected to a second end of the valve body assembly. A battery, a second water pump, a first valve body, and a second valve body are disposed on the second loop. A first port of the second loop is connected to a third end of the valve body assembly, a second port of the second loop is connected to a fourth end of the valve body assembly, and the first valve body is configured to: enable a coolant passing through the third end or the fourth end of the valve body assembly to flow into the battery through the second water pump, and flow back to the fourth end or the third end of the valve body assembly. Alternatively, the first valve body is configured to enable a coolant to flow back from the third end or the fourth end of the valve body assembly to the fourth end or the third end of the valve body assembly through the first valve body, and the second valve body is configured to enable a coolant in the battery to flow back from a second end of the battery to a first end of the battery through the second valve body.

In the thermal management system, the air conditioner box assembly is generally disposed in a passenger cabin of a vehicle. When the passenger cabin is cooled, the first end of the valve body assembly needs to be connected to the third end of the valve body assembly, and the second end of the valve body assembly needs to be connected to the fourth end of the valve body assembly, so that a coolant in the first loop can circulate to continuously provide a cooling capacity for the cooler core. In this case, the passenger cabin is in a refrigeration state. Specifically, the coolant may be driven by the first water pump to directly flow back to the third end of the valve body assembly after passing through the cooler core, the second end of the valve body assembly, the fourth end of the valve body assembly, and the first valve body, and flow back to the first heat exchange pipe after passing through the third end of the valve body assembly and the first end of the valve body assembly. After the first heat exchange pipe performs heat exchange with the outside, the coolant is driven by the first water pump to provide a cooling capacity for the cooler core. In this process, the coolant in the battery may be driven by the second valve body and the second water pump to internally circulate. In this way, a battery temperature is equalized and cooling of the passenger cabin is not affected. In addition, when driven by the first water pump pass through the cooler core, the second end of the valve body assembly, the fourth end of the valve body assembly, and the first valve body, the coolant may alternatively enter the battery to flow back to the third end of the valve body assembly and flow back to the first heat exchange pipe after passing through the third end of the valve body assembly. After the first heat exchange pipe performs heat exchange with the outside, the coolant is driven by the first water pump to provide a cooling capacity for the cooler core. In this process, the coolant passing through the first heat exchange pipe may cool both the cooler core and the battery.

In the foregoing implementation, under the effect of the valve body assembly, the first valve body, and the second valve body, the coolant in the first loop may provide a cooling capacity for only the cooler core and provide a cooling capacity for both the cooler core and the battery. When the cooling capacity is provided for only the cooler core, the battery can further equalize a temperature under the effect of the second valve body and the second water pump. In this way, collaboration efficiency of each loop in the thermal management system is improved.

In the foregoing embodiment, the first valve body and the second valve body may be specifically in a plurality of forms. Specifically, the first valve body may be a first three-way valve, and the second valve body may be a first one-way valve. A first end of the first three-way valve may be connected to the fourth end of the valve body assembly, and a second end of the first three-way valve is connected to the first end of the battery. The second water pump may be disposed on a pipeline between the second end of the first three-way valve and the first end of the battery. A third end of the first three-way valve is connected to a pipeline between the second end of the battery and the third end of the valve body assembly. An inlet of the first one-way valve is connected to a pipeline between the third end of the first three-way valve and the second end of the battery, and an outlet of the first one-way valve is connected to a pipeline between the second end of the first three-way valve and the first end of the battery. When the cooling capacity is provided for only the cooler core, the first end of the valve body assembly is connected to the third end of the valve body assembly, and the second end of the valve body assembly is connected to the fourth end of the valve body assembly. In this case, the first end and the third end of the first three-way valve may be controlled to be open, and the second end of the first three-way valve is in a closed state, so that the coolant may directly flow back to the third end of the valve body assembly after passing through the cooler core, the second end of the valve body assembly, the fourth end of the valve body assembly, and the first three-way valve, and flow back to the first heat exchange pipe after passing through the third end of the valve body assembly and the first end of the valve body assembly. In this process, the first one-way valve may be in an open state, and the coolant in the battery may be driven by the second water pump to flow back to the first end of the battery through the second end of the battery, the inlet of the first one-way valve, the outlet of the first one-way valve, and the second water pump, to complete temperature equalization of the battery. When the cooling capacity is provided for both the cooler core and the battery, the first end of the valve body assembly is connected to the third end of the valve body assembly, and the second end of the valve body assembly is connected to the fourth end of the valve body assembly. In this case, the first end and the second end of the first three-way valve may be controlled to be open, the third end of the first three-way valve is in a closed state, and the first one-way valve may also be in a closed state, so that the coolant may flow to the battery through the cooler core, the second end of the valve body assembly, the fourth end of the valve body assembly, and the first end and the second end of the first three-way valve. The coolant passes through the battery to flow back to the third end of the valve body assembly, and flows back to the first heat exchange pipe through the third end of the valve body assembly and the first end of the valve body assembly.

When the first valve body is a first three-way valve, the second valve body may be a second three-way valve. A first end of the first three-way valve is connected to a pipeline between the fourth end of the valve body assembly and the battery. A second end of the first three-way valve is connected to the second end of the battery. A third end of the first three-way valve is connected to the third end of the valve body assembly. A first end of the second three-way valve is connected to the fourth end of the valve body assembly. A second end of the second three-way valve is connected to the first end of the battery. The second water pump is disposed on a pipeline between the second end of the second three-way valve and the first end of the battery. A third end of the second three-way valve and the second end of the battery are connected to a pipeline between the second end of the first three-way valve and the second end of the battery. When the cooling capacity is provided for only the cooler core, the first end of the valve body assembly is connected to the third end of the valve body assembly, and the second end of the valve body assembly is connected to the fourth end of the valve body assembly. In this case, the first end of the first three-way valve and the third end of the first three-way valve may be controlled to be open, and the second end of the first three-way valve is in a closed state, so that the coolant may directly flow back to the third end of the valve body assembly through the cooler core, the second end of the valve body assembly, the fourth end of the valve body assembly, and the first three-way valve, and flow back to the first heat exchange pipe through the third end of the valve body assembly and the first end of the valve body assembly. In this process, each end of the second three-way valve may be in a closed state, or the second end of the second three-way valve and the third end of the second three-way valve are in an open state, and the first end of the second three-way valve is in a closed state, so that the coolant at the battery may be driven by the second water pump to flow back to the first end of the battery through the second end of the battery, the second end of the second three-way valve, the third end of the second three-way valve, and the second water pump, to complete temperature equalization of the battery. When the cooling capacity is provided for both the cooler core and the battery, the first end of the valve body assembly is connected to the third end of the valve body assembly, and the second end of the valve body assembly is connected to the fourth end of the valve body assembly. In this case, the second end and the third end of the first three-way valve may be controlled to be open, the second end of the first three-way valve is in a closed state, the first end of the second three-way valve and the second end of the second three-way valve are controlled to be in a closed state, and the third end of the second three-way valve is in a closed state, so that the coolant may flow back to the third end of the valve body assembly through the cooler core, the second end of the valve body assembly, the fourth end of the valve body assembly, the first end of the second three-way valve, the second end of the second three-way valve, the battery, and the second end and the third end of the first three-way valve, and flow back to the first heat exchange pipe through the third end of the valve body assembly and the first end of the valve body assembly.

In a possible embodiment, the thermal management system may further include a third loop, a fourth loop, a compressor, a water-cooled condenser, and a water-cooled evaporator. The water-cooled evaporator includes a first heat exchange pipe and a second heat exchange pipe, and the water-cooled condenser includes a third heat exchange pipe and a fourth heat exchange pipe. The compressor, the third heat exchange pipe, and the second heat exchange pipe are connected in series in the third loop, and the second heat exchange pipe is configured to perform heat exchange with the first heat exchange pipe. The fourth heat exchange pipe and a heater core in an air conditioner box assembly are connected in series in the fourth loop. A third water pump is further disposed in the fourth loop. A first port of the fourth loop is connected to a fifth end of the valve body assembly, and a second port of the fourth loop is connected to a sixth end of the valve body assembly. The fourth heat exchange pipe is configured to perform heat exchange with the third heat exchange pipe, the fourth heat exchange pipe is configured to transmit a coolant obtained after performing heat exchange with the third heat exchange pipe to the heater core, and the third water pump is configured to flow back a coolant passing through the heater core to the third water pump of the second heat exchange pipe. A high-temperature and high-pressure coolant output from the compressor may flow back to the compressor after passing through the third heat exchange pipe and the second heat exchange pipe. The third heat exchange pipe may perform heat exchange with the third heat exchange pipe, to reduce a temperature of the coolant in the third heat exchange pipe. The cooled coolant may enter the second heat exchange pipe, and the second heat exchange pipe may perform heat exchange with the first heat exchange pipe, to cool a coolant in the first heat exchange pipe. In this solution, the valve body assembly may be controlled to implement cooling or heating for one or more of the passenger cabin and the battery. When the thermal management system is disposed in an electric vehicle, more temperature modes can be implemented in this manner by using fewer components. This can not only reduce costs and reduce process complexity of the electric vehicle, but also help control temperatures at all positions in the electric vehicle flexibly.

In the foregoing embodiment, to cool a coolant that enters the second heat exchange pipe, a throttling apparatus is further disposed in the third loop. The throttling apparatus is configured to perform temperature and pressure reduction on a coolant output from the third heat exchange pipe, and an inlet of the first heat exchange pipe is configured to get a low-temperature low-pressure coolant output from the throttling apparatus.

In a possible embodiment, the thermal management system further includes a cooler, an electrical driver, a tank, and a fourth water pump. The cooler, the electrical driver, the tank, and the fourth water pump are disposed on the fifth loop in sequence. A first port of the fifth loop is connected to a seventh end of the valve body assembly, a second port of the fifth loop is connected to an eighth end of the valve body assembly, and a ninth end of the valve body assembly is connected to a pipeline between the cooler and the electrical driver. The fifth loop may provide a cooling capacity for the electrical driver, and the fifth loop may be connected to the seventh end, the eighth end, and the ninth end of the valve body assembly. A housing of the thermal management system controls the valve body assembly to implement cooling or heating on one or more of the passenger cabin, the electrical driver, and the battery.

In a possible embodiment, the valve body assembly may be a nine-way valve.

On the first loop, a first end of the nine-way valve is connected to an inlet of the first heat exchange pipe, an outlet of the first heat exchange pipe is connected to an inlet of the first water pump, an outlet of the first water pump is connected to the cooler core, and an outlet of the cooler core is connected to a second end of the nine-way valve. On the second loop, a fourth end of the nine-way valve is configured to be connected to the second end of the battery, and the first end of the battery is configured to be connected to a third end of the nine-way valve. On the fourth loop, a fifth end of the nine-way valve is connected to an inlet of the third water pump, an outlet of the third water pump is connected to an inlet of the fourth heat exchange pipe, an outlet of the fourth heat exchange pipe is connected to an inlet of the heater core, and an outlet of the heater core is connected to a sixth end of the nine-way valve. On the fifth loop, a seventh end of the nine-way valve is connected to an inlet of the cooler, an outlet of the cooler is connected to an inlet of the electrical driver, an outlet of the electrical driver is connected to an inlet of the tank, an outlet of the tank is connected to an inlet of the fourth water pump, and an outlet of the fourth water pump is connected to an eighth end of the nine-way valve. A ninth end of the nine-way valve is connected to a pipeline between the cooler and the electrical driver. Using the nine-way valve can simplify a structure of the thermal management system, improve convenience of controlling the valve body assembly, and help reduce space occupied by the thermal management system.

In a possible embodiment, the thermal management system further includes a heater, where the heater is disposed on the fourth loop, an inlet of the heater is connected to the outlet of the fourth heat exchange pipe, and an outlet of the heater is connected to the inlet of the heater core. When a temperature of the coolant output from the fourth heat exchange pipe cannot meet a heating requirement of the passenger cabin or the battery, the coolant may be further heated by using the heater, to improve heating effect.

In a possible embodiment, the thermal management system further includes a third valve body, a fourth valve body, and a fifth valve body. A first end of the third valve body is connected to the outlet of the first heat exchange pipe, a second end of the third valve body is connected to an inlet of the cooler core, and a third end of the third valve body is connected to the second end of the valve body assembly. A first end of the fourth valve body is connected to the outlet of the heater core, a second end of the fourth valve body is connected to the inlet of the cooler core, and a third end of the fourth valve body is connected to the sixth end of the valve body assembly. A first end of the fifth valve body is connected to an outlet of the cooler core, a second end of the fifth valve body is connected to the second end of the valve body assembly, and a third end of the fifth valve body is connected to the sixth end of the valve body assembly. When the heater core gets a high-temperature coolant output from the fourth heat exchange pipe, a coolant output from the heater core gets the cooler core through the first end and the second end of the fourth valve body, and a coolant output from the cooler core gets the sixth end of the valve body assembly through the first end of the fifth valve body and the third end of the fifth valve body. In this manner, the high-temperature coolant in the fourth heat exchange pipe may first heat, by using the heater core, air that enters the passenger cabin, then enters the cooler core through the fourth valve body to continue heating gas in the passenger cabin, and returns to the fourth loop through the fifth valve body. At the same time, a low-temperature coolant in the first heat exchange pipe directly enters the nine-way valve through the third valve body, and then absorbs heat in another coolant loop. In this arrangement manner, the heater core and the cooler core in the air conditioner box assembly are connected in series while heating gas, to improve a heat exchange area of the air conditioner box assembly, and improve heat exchange effect.

In a possible embodiment, the thermal management system further includes a sixth valve body, a seventh valve body, and an eighth valve body. A first end of the sixth valve body is connected to the outlet of the first heat exchange pipe, a second end of the sixth valve body is connected to an inlet of the cooler core, and a third end of the sixth valve body is connected to the second end of the valve body assembly. A first end of the seventh valve body is connected to the outlet of the fourth heat exchange pipe, a second end of the seventh valve body is connected to the inlet of the heater core, and a third end of the seventh valve body is connected to a pipeline between the inlet of the cooler core and a sixth end of the sixth valve body. A first end of the eighth valve body is connected to an outlet of the cooler core, a second end of the eighth valve body is connected to the second end of the valve body assembly, and a third end of the eighth valve body is connected to the sixth end of the valve body assembly. When both the cooler core and the heater core are configured to get a high-temperature coolant output from the fourth heat exchange pipe, a coolant output from the cooler core flows back to the second heat exchange pipe through the first end of the eighth valve body, the second end of the eighth valve body, and the sixth end and the fifth end of the valve body assembly, and a coolant output from the heater core flows back to the fourth heat exchange pipe through the sixth end and the fifth end of the valve body assembly. In this manner, a hot refrigerant in the fourth heat exchange pipe is first distributed through the seventh valve body, a part of hot water passes through the heater core to heat air that enters the passenger cabin, and the other part of hot water enters the cooler core through the seventh valve body to continue heating gas in the passenger cabin, and returns to a coolant pipeline of the heater core through the eighth valve body. At the same time, a low-temperature coolant in the first heat exchange pipe may directly enter the nine-way valve through the sixth valve body, and then absorb heat in another coolant loop. In this arrangement manner, the heater core and the cooler core in the air conditioner box assembly are connected in parallel when heating air, and a high-temperature refrigerant passes through both the heater core and the cooler core, thereby increasing a heat exchange area of the air conditioner box assembly and improving heat exchange effect.

In a possible embodiment, the thermal management system further includes an inlet air heat exchanger and a ninth valve body, the inlet air heat exchanger is disposed at an inlet of the air conditioner box assembly, an inlet of the inlet air heat exchanger is connected to a first end of the ninth three-way valve, an outlet of the inlet air heat exchanger is connected to the sixth end of the valve body assembly, a second end of the ninth valve body is connected to the outlet of the heater core, and a third end of the ninth three-way valve is connected to the sixth end of the valve body assembly. When the passenger cabin is heated, a hot refrigerant in the fourth heat exchange pipe first heats air that enters the passenger cabin by using the heater core, then enters the inlet air heat exchanger through the ninth valve body to preheat low-temperature gas of external-circulation inlet air, and returns to the coolant pipeline of the heater core. In this arrangement manner, a temperature of outlet air of the passenger cabin can be ensured, and utilization of energy of hot water that is heated by using the heater core and that has a higher temperature can be maximized, thereby improving heat exchange effect.

In a possible embodiment, the thermal management system further includes a tenth valve body, an eleventh valve body, and a twelfth valve body, a first end of the tenth valve body is connected to the outlet of the first heat exchange pipe, a second end of the tenth valve body is connected to an inlet of the cooler core, and a third end of the tenth valve body is connected to the second end of the valve body assembly. A first end of the eleventh valve body is connected to the outlet of the fourth heat exchange pipe, a second end of the eleventh valve body is connected to the inlet of the heater core, and a third end of the eleventh valve body is connected to the inlet of the cooler core. A first end of the twelfth valve body is connected to the outlet of the cooler core, a second end of the twelfth valve body is connected to the second end of the valve body assembly, and a third end of the eleventh valve body is connected to the sixth end of the valve body assembly. When both the cooler core and the heater core are configured to get a high-temperature coolant output from the second heat exchange pipe, a coolant output from the cooler core flows back to the fourth heat exchange pipe through the eleventh valve body and the sixth end and the fifth end of the valve body assembly, and the cooler core is reused as the heater core. A coolant output from the heater core flows back to the fourth heat exchange pipe through a middle inlet of the fourth heat exchange pipe. In this manner, a hot refrigerant in the fourth heat exchange pipe is first distributed through the eleventh valve body, and a part of hot water enters the heater core to heat air that enters the passenger cabin, and then directly returns to the middle inlet of the liquid-cooled condenser. Other hot water enters the cooler core to preheat gas of the inlet air, and then returns to the fourth loop. In this arrangement manner, a ladder distribution of a coolant in the liquid-cooled condenser may be implemented. A low-temperature coolant that is cooled after being preheated starts from the inlet of the fourth heat exchange pipe, is mixed with a medium-temperature coolant that enters the heater core after reaching the middle inlet of the fourth heat exchange pipe, and finally is heated to a high-temperature coolant. In addition, a low-temperature coolant in the first heat exchange pipe directly enters the nine-way valve through the tenth valve body, and then absorbs heat from another coolant loop. Such an arrangement manner can ensure that a temperature change curve of a coolant matches a temperature change curve of a refrigerant by adjusting a flow rate of the eleventh valve body, thereby reducing an energy loss of the system and improving efficiency.

In a possible embodiment, the thermal management system further includes a thirteenth valve body and a fourteenth valve body. A first end of the thirteenth valve body is connected to the outlet of the fourth heat exchange pipe, a second end of the thirteenth valve body is connected to the outlet of the first heat exchange pipe, and a third end of the fourteenth valve body is connected to an inlet of the heater core. An outlet of the fourteenth valve body is connected to a pipeline between the heater core and the valve body assembly, and an inlet of the fourteenth valve body is connected to a pipeline between the cooler core and the valve body assembly. In this manner, the fourth heat exchange pipe and the first heat exchange pipe may be connected by using thirteenth valve body. A part of the hot and cold water in the fourth heat exchange pipe and a part of hot and cold water in the first heat exchange pipe are controlled to be in direct contact with each other, so that a temperature of an entire water path is increased. Finally, the water path returns from the fourteenth valve body to the fourth loop in which the fourth heat exchange pipe is located. In this mode, power generated by the compressor may be used to generate heat, and a temperature of the entire water path is increased at an extremely low temperature to meet a requirement for starting a heat pump.

In a possible embodiment, the air conditioner box assembly further includes an additional core, and the thermal management system further includes a fifteenth valve body, a sixteenth valve body, and a seventeenth valve body. A first end of the fifteenth valve body is connected to the outlet of the first heat exchange pipe, a second end of the fifteenth valve body is connected to an inlet of the cooler core, a third end of the fifteenth valve body is connected to a first end of the sixteenth valve body, a second end of the sixteenth valve body is connected to the outlet of the fourth heat exchange pipe, a third end of the sixteenth valve body is connected to the inlet of the heater core, an inlet of the additional core is connected to a pipeline between the third end of the fifteenth valve body and the first end of the sixteenth valve body, an outlet of the additional core is connected to a first end of the seventeenth valve body, a second end of the seventeenth valve body is connected to a pipeline between the second end of the fifteenth valve body and the inlet of the cooler core, and a third end of the seventeenth valve body is connected to a pipeline between the third end of the sixteenth valve body and the inlet of the heater core. In this arrangement manner, the heater core and the cooler core may further separately perform cooling or heating on the passenger cabin, and the additional core may be used as an additional cooler core or heater core to participate in cooling or heating based on different cold and hot loads.

In the foregoing embodiment, the second valve body to the thirteenth valve body and the fifteenth valve body to the seventeenth valve body are all three-way valves, and the fourteenth valve body is a one-way valve.

In a possible embodiment, the thermal management system further includes a heat-recovery liquid collector. The heat-recovery liquid collector is disposed on the third loop, and includes a fifth heat exchange pipe and a sixth heat exchange pipe. An inlet of the fifth heat exchange pipe is connected to an outlet of the third heat exchange pipe, an outlet of the fifth heat exchange pipe is connected to an inlet of the throttling apparatus, an inlet of the sixth heat exchange pipe is connected to an outlet of the second heat exchange pipe, and an outlet of the sixth heat exchange pipe is connected to an inlet of the compressor. The heat-recovery liquid collector may further reduce a temperature of the refrigerant at the outlet of the first heat exchange pipe, reduce dryness of the refrigerant after throttling, and improve a cooling capability of the water-cooled evaporator.

It should be noted that there may be a plurality of structures of the heat-recovery liquid collector. For example, the heat-recovery liquid collector includes a regenerator and a first gas-liquid separator. The regenerator includes the fifth heat exchange pipe and the sixth heat exchange pipe. An inlet of the first gas-liquid separator is connected to the outlet of the sixth heat exchange pipe, and an outlet of the first gas-liquid separator is connected to an inlet of the compressor. Alternatively, the heat-recovery liquid collector includes a regenerator and a liquid storage tank. The regenerator includes the fifth heat exchange pipe and the sixth heat exchange pipe, an inlet of the fifth heat exchange pipe is connected to an outlet of the liquid storage tank, and an inlet of the liquid storage tank is connected to the outlet of the third heat exchange pipe.

In the foregoing embodiment, the throttling apparatus may be a first throttle valve.

The thermal management system further includes an outdoor heat exchanger, a second throttle valve, and a first valve. An end of the second throttle valve is connected to the outlet of the third heat exchange pipe, a second end of the second throttle valve is connected to an inlet of the outdoor heat exchanger, an outlet of the outdoor heat exchanger is connected to an inlet of the first throttle valve, one end of the first valve is connected to the outlet of the third heat exchange pipe, and the other end of the first valve is connected to the inlet of the first throttle valve. The outdoor heat exchanger allows the refrigerant to directly exchange heat with the external environment. In extreme high and low temperature conditions, the outdoor heat exchanger can compensate the problem of insufficient secondary heat exchange efficiency on a water side and improve a system capability.

The first valve is a stop valve.

In a possible embodiment, the thermal management system further includes a second gas-liquid separator. The second gas-liquid separator is located on the third loop, an inlet of the second gas-liquid separator is connected to an outlet of the second heat exchange pipe, and an outlet of the second gas-liquid separator is connected to an inlet of a compressor. The second gas-liquid separator in use can not only implement a function of storing a liquid, but also leave a liquid in the gas-liquid mixture, and only let gas flow into the compressor, thereby ensuring an overheating degree requirement at the inlet of the compressor and improving compression efficiency.

In the foregoing embodiment, the throttling apparatus may be a first throttle valve, or the throttling apparatus may further include an ejector and a third gas-liquid separator. An injection end of the ejector is connected to an outlet of the third heat exchange pipe, a drainage end of the ejector is connected to an outlet of the second heat exchange pipe, an output end of the ejector is connected to an inlet of the third gas-liquid separator, a gas-phase output end of the third gas-liquid separator is connected to an inlet of the compressor, and a liquid-phase output end of the third gas-liquid separator is connected to an inlet of the second heat exchange pipe. In a running process of the third loop, a high-temperature and high-pressure coolant passes through the third heat exchange pipe for heat exchange to obtain a coolant, and the coolant enters an injector through the injection end of the ejector. In this case, a gas refrigerant passing through the outlet of the second heat exchange pipe is brought into the drainage end of the ejector by a main injected flow with a lower pressure before the ejector. After being mixed in the ejector, the coolant and the gas refrigerant that pass through the injection end and the drainage end are ejected out from the output end of the ejector to enter the third gas-liquid separator, so that a gas refrigerant and a liquid refrigerant are separated in the third gas-liquid separator. The gas refrigerant enters the inlet of the compressor, and the liquid refrigerant enters the inlet of the third heat exchange pipe of the water-cooled evaporator. Using the ejector instead of the conventional electronic expansion valve can effectively recover energy lost during a throttling process, improve suction pressure, and improve system efficiency.

On the basis of the foregoing embodiment, the throttling apparatus may further include a first electronic expansion valve. An inlet of the first electronic expansion valve is connected to the gas-phase output end of the third gas-liquid separator, and an outlet of the first electronic expansion valve is connected to the inlet of the second heat exchange pipe. The first electronic expansion valve is additionally disposed on a path of the drainage end of the ejector, to adjust a flow rate of injected flow that enters the ejector. In this way, a problem of an insufficient flow rate adjustment capability of the ejector is compensated, and a state parameter of the thermal management system can be adjusted effectively.

The throttling apparatus may further include a second electronic expansion valve. When the second electronic expansion valve is disposed, the first electronic expansion valve may be disposed, or the first electronic expansion valve may not be disposed. An inlet of the second electronic expansion valve may be connected to the outlet of the third heat exchange pipe, and an outlet of the second electronic expansion valve is connected to the injection end of the ejector. The second electronic expansion valve may be disposed to adjust a flow rate of the injected flow that enters the ejector. In this way, a problem of insufficient flow rate adjustment capability of the ejector is compensated, and a state parameter of the thermal management system can be adjusted effectively.

In a possible embodiment, the throttling apparatus further includes a third electronic expansion valve, a second valve, a third valve, a fourth valve, and a fifth valve. An inlet of the second valve is connected to the outlet of the third heat exchange pipe, an outlet of the second valve is connected to the injection end of the ejector, one end of the third valve is connected to the outlet of the second heat exchange pipe, the other end of the third valve is connected to the drainage end of the ejector, one end of the fourth valve is connected to the outlet of the second heat exchange pipe, the other end of the fourth valve is connected to a pipeline between the output end of the ejector and the inlet of the third gas-liquid separator, one end of the fifth valve is connected to the liquid-phase output end of the third gas-liquid separator, the other end of the fifth valve is connected to the inlet of the second heat exchange pipe, one end of the third electronic expansion valve is connected to a pipeline between the inlet of the second valve and the outlet of the third heat exchange pipe, and the other end of the third electronic expansion valve is connected to a pipeline between an outlet of the fifth valve and the inlet of the second heat exchange pipe. In this implementation, the outlet of the third heat exchange pipe is divided into two channels, and one channel is one channel using the ejector. When the mode runs, the third electronic expansion valve needs to be closed, the fourth valve is closed, and the second valve, the third valve, and the fifth valve are opened, so that the coolant passing through the outlet of the third heat exchange pipe enters the ejector from the injection end through the second valve. The injected flow enters the drainage end of the ejector through the third valve, and the coolant at the drainage end and injection end enters the third gas-liquid separator from the output end of the ejector. The other channel is one channel using the third electronic expansion valve. When the mode runs, the second valve, the third valve, and the fifth valve are closed, the fourth valve is opened, and the third electronic expansion valve is opened and adjusted, so that the coolant flowing out of the outlet of the third heat exchange pipe enters the second heat exchange pipe for evaporation after entering third electronic expansion valve for throttling. The evaporated coolant enters the third gas-liquid separator through the fourth valve. In this mode, an efficient running condition of the ejector is considered. When a system state is not suitable for running the ejector, a normal working mode of the electronic expansion valve can be switched to.

The first valve to the fifth valve are stop valves.

In the foregoing embodiment, the valve body assembly and several components of the plurality of water pumps may be integrated.

For example, one or more of the first water pump, the second water pump, the third water pump, the fourth water pump, the first valve body, and the valve body assembly are integrated into a first integrated unit.

The water-cooled condenser, the water-cooled evaporator, the heater, and the throttling apparatus into a second integrated unit.

The water-cooled condenser, the water-cooled evaporator, the heater, the heat-recovery liquid collector, the throttling apparatus, and the compressor are integrated into a third integrated unit. Integrating various components not only helps reduce structural complexity of the thermal management system and the occupied space, but also can shorten routes between the components by using the compact structure arrangement, and help resolve a problem that components of a thermal management system are dispersed in an electric vehicle and that a pipeline is excessively long in a current phase. When a coolant or a refrigerant circulates in such a short circulation link, a pressure loss of the coolant or refrigerant in a circulation process is reduced, and efficiency of the refrigerant loop is improved. In addition, in this integration mode, modular components that are easy to maintain and carry can be made.

In the foregoing embodiment, the valve body assembly may alternatively be integrated by a nine-way valve and a first valve body (the first three-way valve).

According to a second aspect, this application further provides a control method for the thermal management system in any technical solution of the first aspect. A first end of a valve body assembly is controlled to be connected to a third end of the valve body assembly, a second end of the valve body assembly is controlled to be connected to a fourth end of the valve body assembly, and a coolant in a first heat exchange pipe passes through a cooler core for cooling gas passing through the cooler core. Opening and closing of each end of a first valve body are controlled, so that the coolant passing through the cooler core, after passing through the second end of the valve body assembly and the fourth end of the valve body assembly, flows back to the third end of the valve body assembly and the first end of the valve body assembly through the first valve body to enter the first heat exchange pipe. The second valve body is controlled, so that a coolant in a battery flows back from a second end of the battery to a first end of the battery through a second valve body, the coolant passing through the cooler core, after passing through the second end of the valve body assembly and the fourth end of the valve body assembly, flows back to the third end of the valve body assembly and the first end of the valve body assembly through the first valve body and the battery to enter the first heat exchange pipe. Effect generated by the method is the same as effect of the thermal management system in the first aspect. Details are not described again.

According to a third aspect, this application further provides a thermal management system. The thermal management system may include a compressor, an air conditioner box assembly, a water-cooled condenser, and a stop valve. The air conditioner box assembly may include a heater core and a cooler core. The first loop includes a main loop, a first branch, and a second branch. The compressor, the heater core, and the stop valve are disposed on the main loop. An outlet of the compressor is connected to an inlet of the heater core, an outlet of the heater core is connected to an inlet of the stop valve, and an outlet of the stop valve is connected to an inlet of the compressor. A first throttle valve and a first heat exchange pipe of the water-cooled evaporator are disposed on the first branch. An inlet of the first throttle valve is connected to a pipeline between the stop valve and the heater core, an outlet of the first throttle valve is connected to an inlet of the first heat exchange pipe, and an outlet of the first heat exchange pipe is connected to a pipeline between the outlet of the stop valve and the inlet of the compressor. A second throttle valve and the cooler core are disposed on the second branch. An inlet of the second throttle valve is connected to a pipeline between the stop valve and the heater core, an outlet of the second throttle valve is connected to an inlet of the cooler core, and an outlet of the cooler core is connected to a pipeline between the outlet of the stop valve and the inlet of the compressor. In this arrangement manner, the first branch and the second branch are disposed in parallel. The main loop may provide heat for the heater core, so that the passenger cabin is in a heating state. The second branch may be disposed to provide a cooling capacity for the cooler core in the air conditioner box assembly, so that the passenger cabin can be in a cooling state.

In a possible embodiment, the thermal management system further includes a water-cooled condenser, a valve body assembly, a second loop, and a third loop, and the water-cooled condenser includes a third heat exchange pipe and a fourth heat exchange pipe. An inlet of the third heat exchange pipe is connected to the outlet of the heater core, and an outlet of the third heat exchange pipe is connected to the inlet of the stop valve. A first water pump and the fourth heat exchange pipe are disposed on the second loop, the fourth heat exchange pipe is configured to perform heat exchange with the third heat exchange pipe, a first port of the second loop is connected to a first end of the valve body assembly, and a second port of the second loop is connected to a second end of the valve body assembly. The third loop passes through a battery to perform heat exchange with the battery, a second water pump configured to enable a coolant in the third loop to flow is disposed on the third loop, a first port of the third loop is connected to a third end of the valve body assembly, and a second port of the third loop is connected to a fourth end of the valve body assembly. In the thermal management system, the first end in the valve body assembly may be controlled to be connected to the third end in the valve body assembly. The second end in the valve body assembly is connected to the fourth end in the valve body assembly. In this case, the second loop is connected to the third loop by using the valve body assembly. The fourth heat exchange pipe may heat a coolant in the third heat exchange pipe through heat exchange with the third heat exchange pipe, and the warmed coolant may enter the third loop by using the valve body assembly. In this case, a high-temperature and high-pressure refrigerant output from the compressor enters the third heat exchange pipe and the fourth heat exchange pipe for heat exchange after passing through the heater core, that is, the high-temperature and high-pressure refrigerant that passes through the heater core in the air conditioner box assembly may further heat the battery, to improve collaboration efficiency of loops in the thermal management system. When all ports in the valve body assembly are in a disconnected state, the high-temperature and high-pressure refrigerant output from the compressor may also pass through the heater core, so that the passenger cabin is a full heating mode.

A third throttle valve and an outdoor heat exchanger are further disposed on the main loop. An inlet of the third throttle valve is connected to the outlet of the third heat exchange pipe, an outlet of the third throttle valve is connected to an inlet of the outdoor heat exchanger, and an outlet of the outdoor heat exchanger is connected to an inlet of the stop valve.

In the foregoing embodiment, the thermal management system further includes a fourth loop, and the water-cooled evaporator includes the first heat exchange pipe and the second heat exchange pipe. A third water pump and the second heat exchange pipe of the water-cooled evaporator are disposed on the fourth loop, the second heat exchange pipe is configured to perform heat exchange with the first heat exchange pipe, a first port of the fourth loop is connected to a fifth end of the valve body assembly, and a second port of the fourth loop is connected to a sixth end of the valve body assembly. In this manner, connections of ports in the valve body assembly are controlled, so that the fourth loop can provide a cooling capacity for the third loop in which the battery is located, to cool the battery.

The thermal management system further includes a fifth loop, and a cooler, an electrical driver, a tank, and a fourth water pump that are disposed on the fifth loop. A first port of the fifth loop is connected to a seventh end of the valve body assembly, a second port of the fifth loop is connected to an eighth end of the valve body assembly, and a ninth end of the valve body assembly is connected to a pipeline between the cooler and the electrical driver. The fifth loop may be connected to one or more of the second loop, the third loop, and the fourth loop by using the valve body assembly.

In the foregoing embodiment, one or more of the passenger cabin, the battery, and the electrical driver may be cooled or heated by controlling connection between different ports in the valve body assembly, and connection and disconnection of the three throttle valves and the stop valve. When the thermal management system is disposed in an electric vehicle, more temperature modes can be implemented in this manner by using fewer components. This can not only reduce costs and reduce process complexity of the electric vehicle, but also help control temperatures at all positions in the electric vehicle flexibly.

In a possible embodiment, the valve body assembly is a nine-way valve. On the second loop, a first end of the nine-way valve is connected to an inlet of the first water pump, an outlet of the first water pump is connected to an inlet of the fourth heat exchange pipe, and an outlet of the fourth heat exchange pipe is connected to a second end of the nine-way valve. On the third loop, a third end of the nine-way valve is connected to an inlet of the second water pump, an outlet of the second water pump is connected to an inlet of the battery, and an outlet of the battery is connected to a fourth end of the nine-way valve. On the fourth loop, a fifth end of the nine-way valve is connected to an inlet of the third water pump, an outlet of the third water pump is connected to an inlet of the second heat exchange pipe, and an outlet of the second heat exchange pipe is connected to a sixth end of the nine-way valve. On the fifth loop, a seventh end of the nine-way valve is connected to an inlet of the cooler, an outlet of the cooler is connected to an inlet of the electrical driver, an outlet of the electrical driver is connected to an inlet of the tank, an outlet of the tank is connected to an inlet of the fourth water pump, and an outlet of the fourth water pump is connected to an eighth end of the nine-way valve. A ninth end of the nine-way valve is connected to a pipeline between the cooler and the electrical driver. Using the nine-way valve can simplify a structure of the thermal management system, improve convenience of controlling the valve body assembly, and help reduce space occupied by the thermal management system.

According to a fourth aspect, this application further provides a thermal management system, including a compressor, a first pipe, a second pipe, a throttling apparatus, and a heat-recovery liquid collector. An outlet of the compressor is connected to an inlet of the first pipe, an outlet of the first pipe is connected to an inlet of a third pipe in the heat-recovery liquid collector, an outlet of the third pipe is connected to an inlet of the throttling apparatus, an outlet of the throttling apparatus is connected to an inlet of the second pipe, an outlet of the second pipe is connected to an inlet of a fourth pipe in the heat-recovery liquid collector, and an outlet of the fourth pipe is connected to an inlet of the compressor. The heat-recovery liquid collector may further reduce a temperature of the refrigerant at the outlet of the first heat exchange pipe, reduce dryness of the refrigerant after throttling, and improve a cooling capability of the water-cooled evaporator.

Specifically, the heat-recovery liquid collector may be in a plurality of forms. For example, the heat-recovery liquid collector may include a regenerator and a gas-liquid separator. The regenerator includes the third pipe and the fourth pipe, an inlet of the gas-liquid separator is connected to the outlet of the fourth pipe, and an outlet of the gas-liquid separator is connected to an inlet of the compressor.

Alternatively, the heat-recovery liquid collector may include a regenerator and a liquid storage tank. The regenerator includes the third pipe and the fourth pipe, an inlet of the third pipe is connected to an outlet of the liquid storage tank, and an inlet of the liquid storage tank is connected to an outlet of the first pipe.

According to a fifth aspect, this application further provides a vehicle. The vehicle may include a controller, and the thermal management system, the air conditioner box assembly, a battery, and a driver according to any one of the first aspect and the third aspect. The controller may be connected to each valve in the thermal management system; and the controller can implement any one of the following modes by controlling opening and closing of each valve: a mode of cooling both the passenger cabin and the battery, a mode of cooling only the passenger cabin, a mode of cooling only the battery, a mode of cooling the battery but heating the passenger cabin, a mode of naturally cooling the battery, a mode of automatically cooling the driver, a mode of heating both the passenger cabin and the battery, a mode of heating the battery and dehumidifying the passenger cabin, a mode of heating only the passenger cabin, a mode of heating only the battery, and a mode of dehumidifying the entire vehicle. According to this design, the vehicle can implement free switching between one or more cooling modes or heating modes of the passenger cabin, the battery, and the driver, so that the vehicle can meet different requirements of various users, and driving experience of the users is improved.

### BRIEF DESCRIPTION OF DRAWINGS

FIG. 01 is a diagram of a structure of a thermal management system according to an embodiment of this application;
FIG. 02 is a diagram of a structure of another thermal management system according to an embodiment of this application;

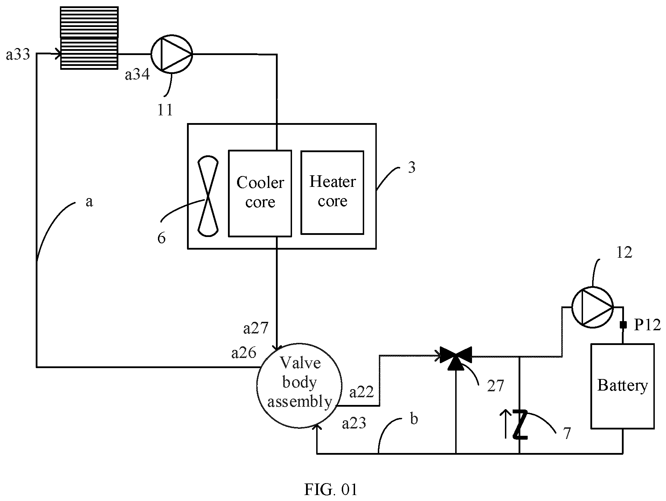

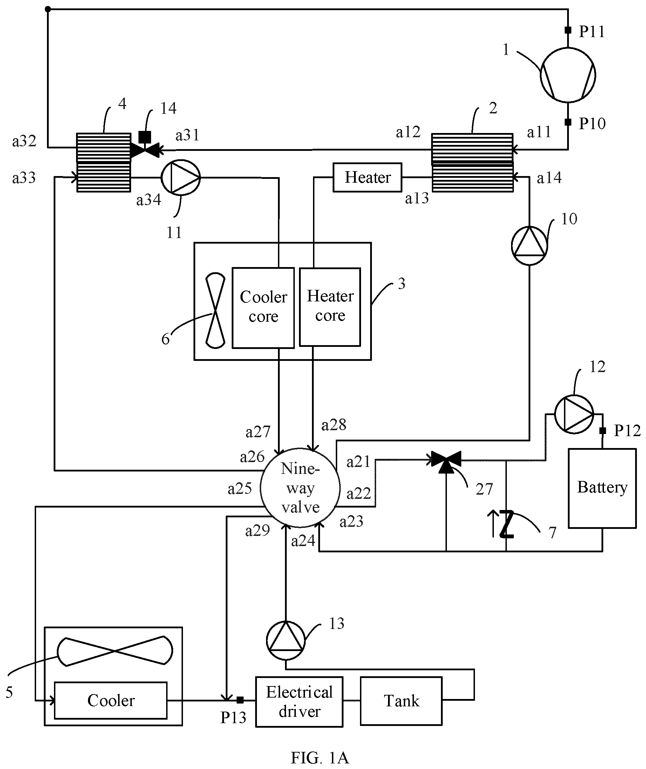

FIG. 1A is a diagram of a structure of a thermal management system according to Embodiment 1 of this application;

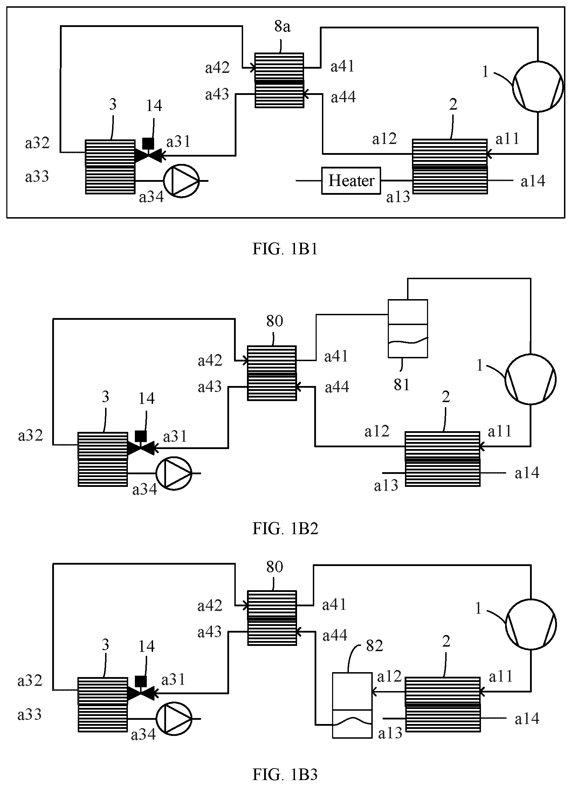

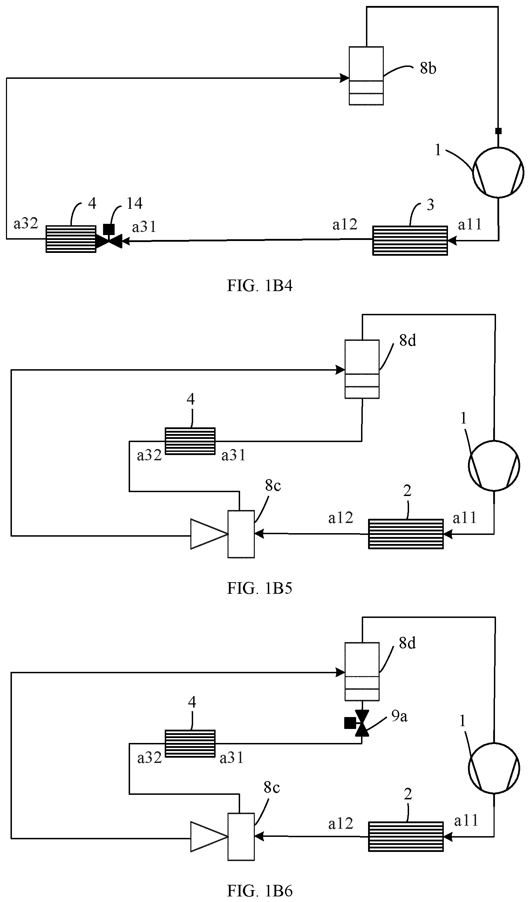

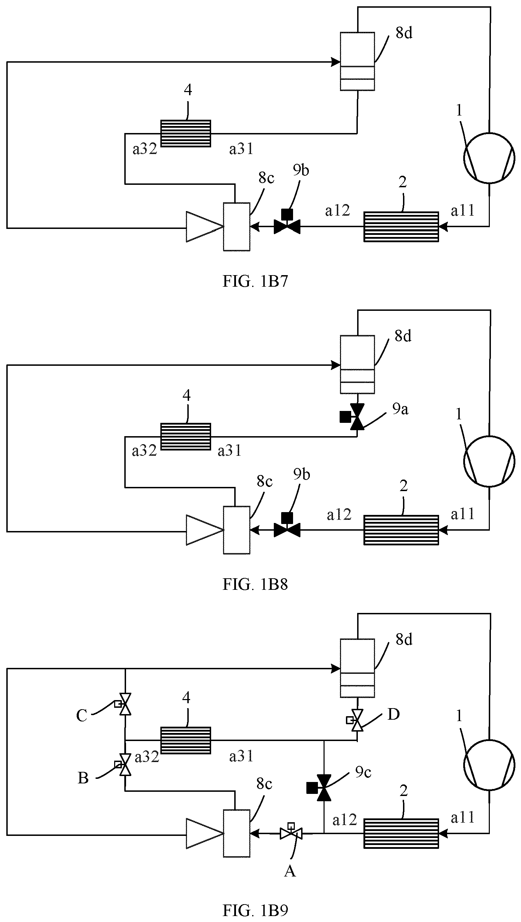

FIG. 1B1 is a diagram of a structure in which a heat-recovery liquid collector is used in a thermal management system according to Embodiment 1 of this application;
FIG. 1B2 is a diagram of a structure in which the heat-recovery liquid collector in FIG. 1B1 is specifically disposed in a third loop;
FIG. 1B3 is a diagram of a structure in which the heat-recovery liquid collector in FIG. 1B1 is specifically disposed in a third loop;
FIG. 1B4 is a diagram of a structure in which a second gas-liquid separator is used in a thermal management system according to Embodiment 1 of this application;
FIG. 1B5 is a diagram of a structure in which a throttling apparatus is used in a thermal management system according to Embodiment 1 of this application;
FIG. 1B6 is a diagram of a structure in which a throttling apparatus is used in a thermal management system according to Embodiment 1 of this application;
FIG. 1B7 is a diagram of a structure in which a throttling apparatus is used in a thermal management system according to Embodiment 1 of this application;
FIG. 1B8 is a diagram of a structure in which a throttling apparatus is used in a thermal management system according to Embodiment 1 of this application;
FIG. 1B9 is a diagram of a structure in which a throttling apparatus is used in a thermal management system according to Embodiment 1 of this application;

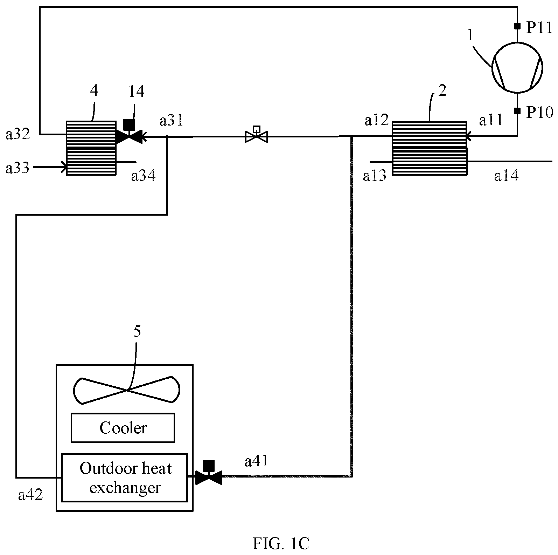

FIG. 1C is a diagram of a structure in which an outdoor heat exchanger is used in a thermal management system according to Embodiment 1 of this application;

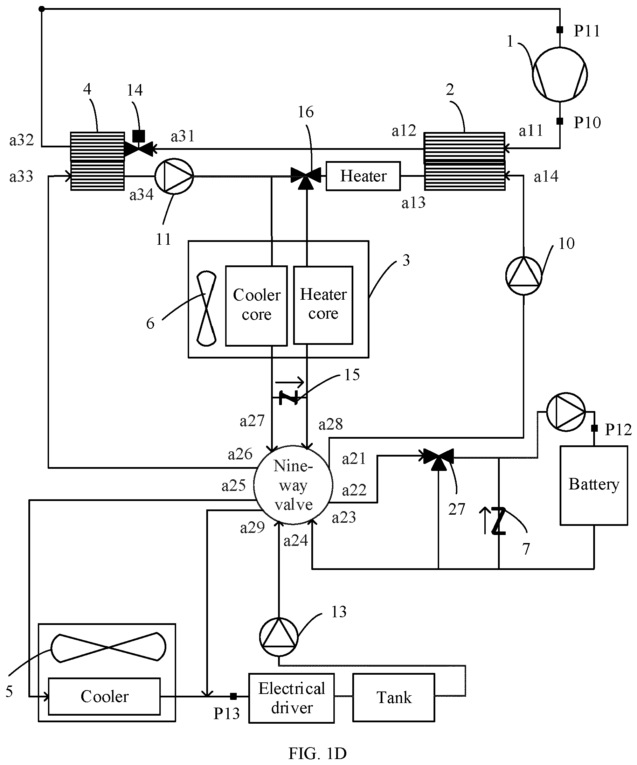

FIG. 1D is a diagram of another structure of a thermal management system according to Embodiment 1 of this application;

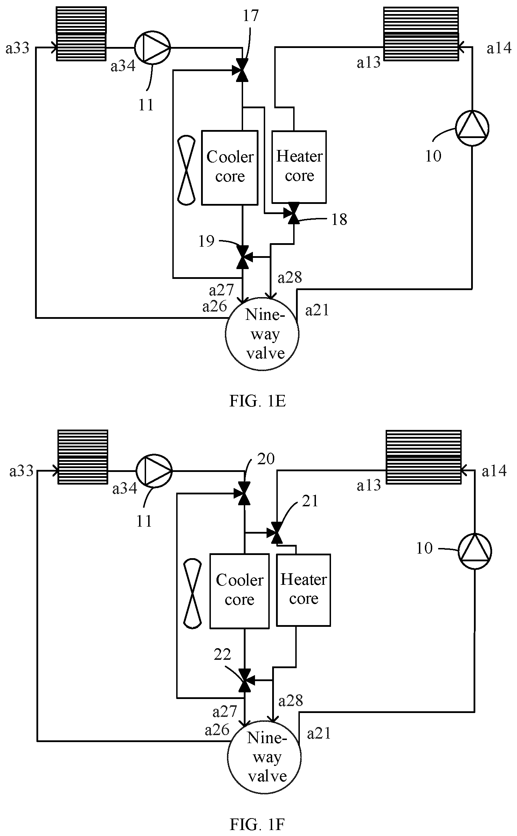

FIG. 1E is a diagram of another structure of a thermal management system according to Embodiment 1 of this application;
FIG. 1F is a diagram of another structure of a thermal management system according to Embodiment 1 of this application;

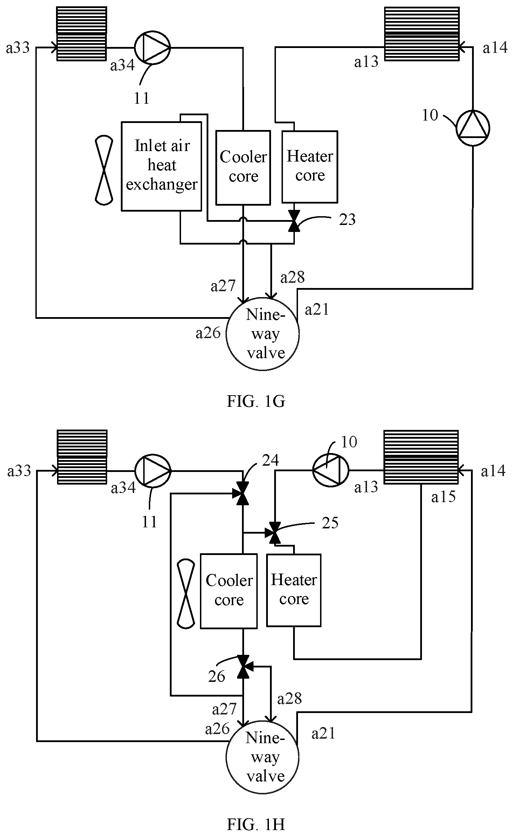

FIG. 1G is a diagram of another structure of a thermal management system according to Embodiment 1 of this application;
FIG. 1H is a diagram of another structure of a thermal management system according to Embodiment 1 of this application;

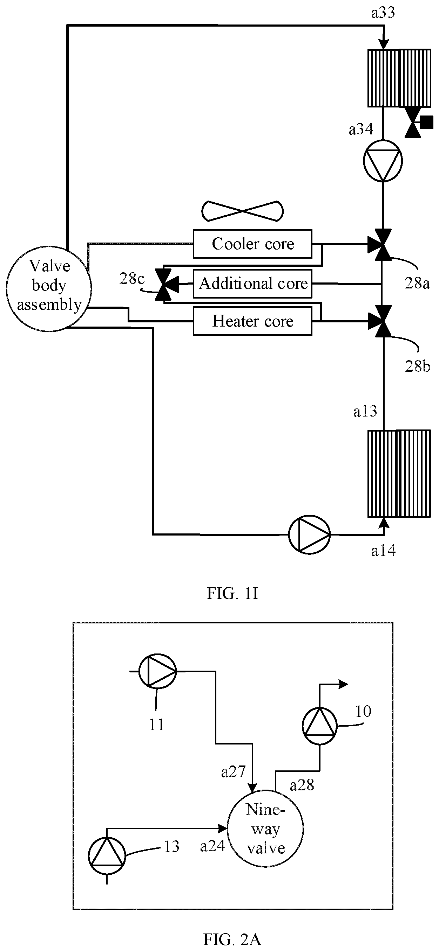

FIG. 1I is a diagram of another structure of a thermal management system according to Embodiment 1 of this application;

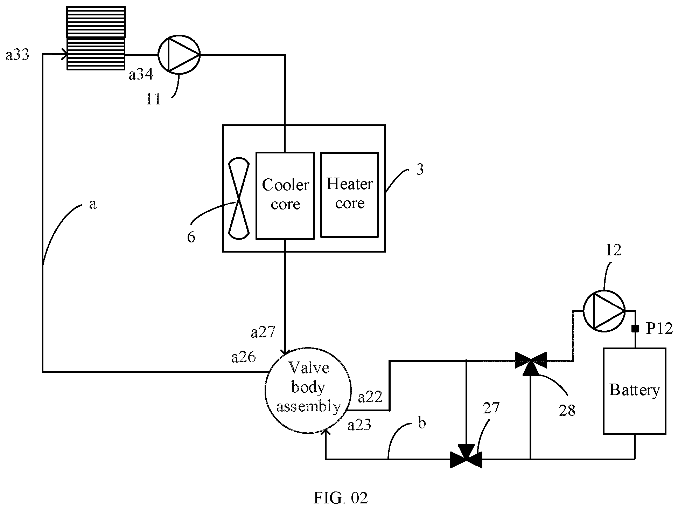

FIG. 2A is a diagram of a structure of a thermal management system in an integration mode according to Embodiment 1 of this application;

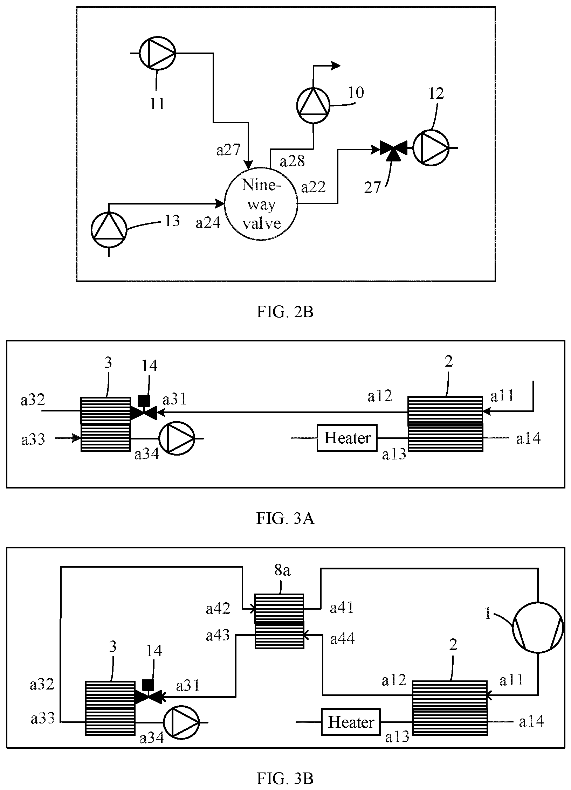

FIG. 2B is a diagram of a structure of a thermal management system in another integration mode according to Embodiment 1 of this application;
FIG. 3A is a diagram of a structure of a thermal management system in another integration mode according to Embodiment 1 of this application;
FIG. 3B is a diagram of a structure of a thermal management system in another integration mode according to Embodiment 1 of this application;

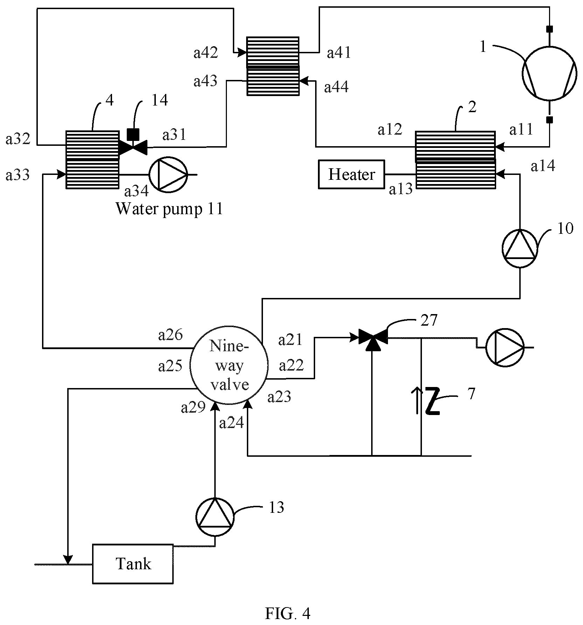

FIG. 4 is a diagram of a structure of a thermal management system in another integration mode according to Embodiment 1 of this application;

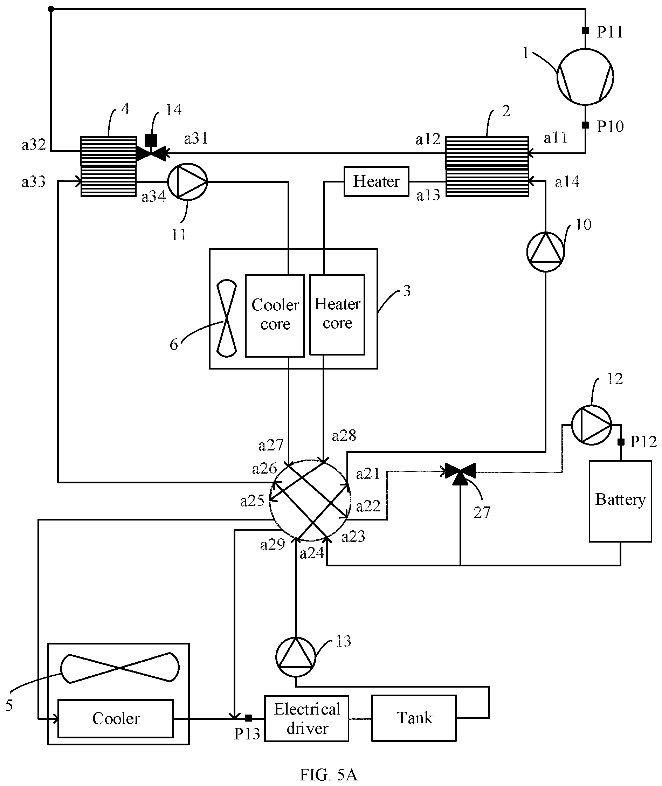

FIG. 5A is a diagram of a structure of a thermal management system in a mode of cooling both a passenger cabin and a battery according to Embodiment 1 of this application;

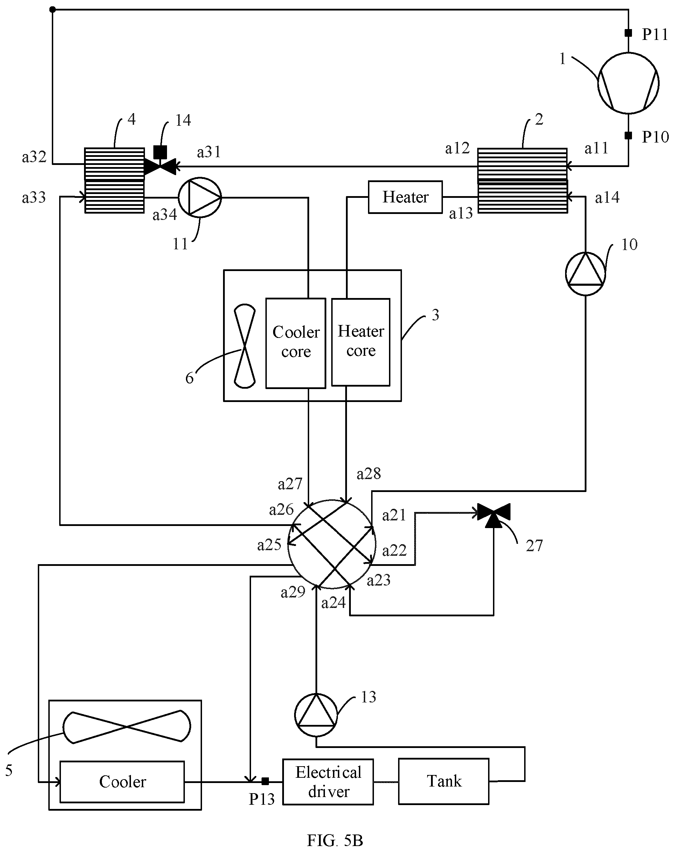

FIG. 5B is a diagram of a structure of a thermal management system in a mode of cooling only a passenger cabin according to Embodiment 1 of this application;

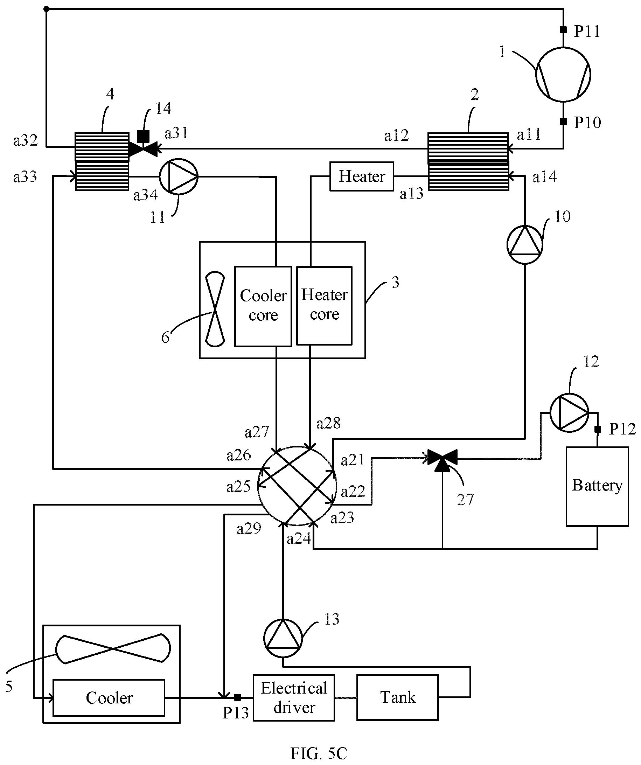

FIG. 5C is a diagram of a structure of a thermal management system in a mode of cooling only a battery according to Embodiment 1 of this application;

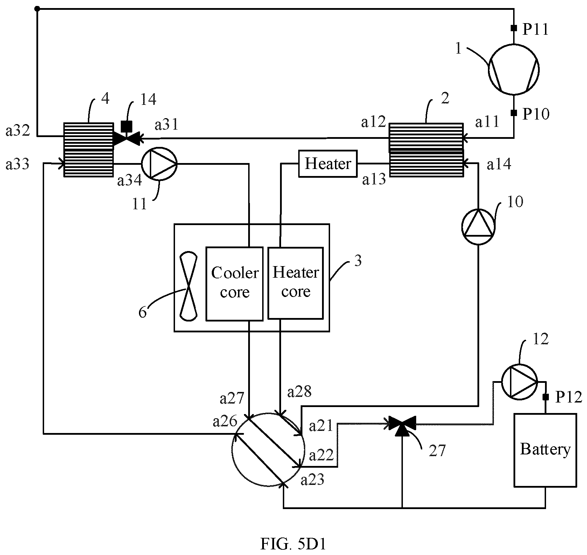

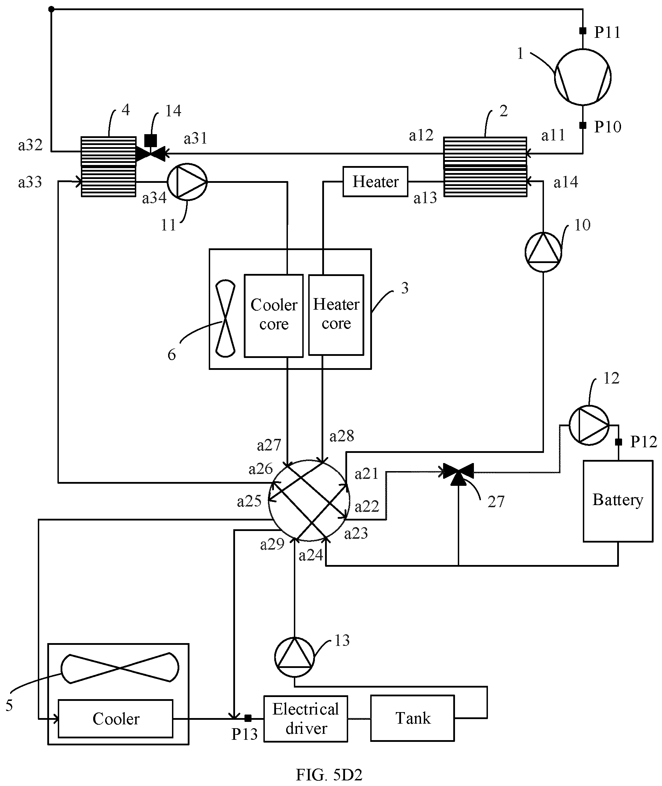

FIG. 5D1 is a diagram of a structure of a thermal management system in a mode of cooling a battery but heating a passenger cabin according to Embodiment 1 of this application;
FIG. 5D2 is a diagram of a structure of a thermal management system in a mode of cooling a battery but heating a passenger cabin according to Embodiment 1 of this application;

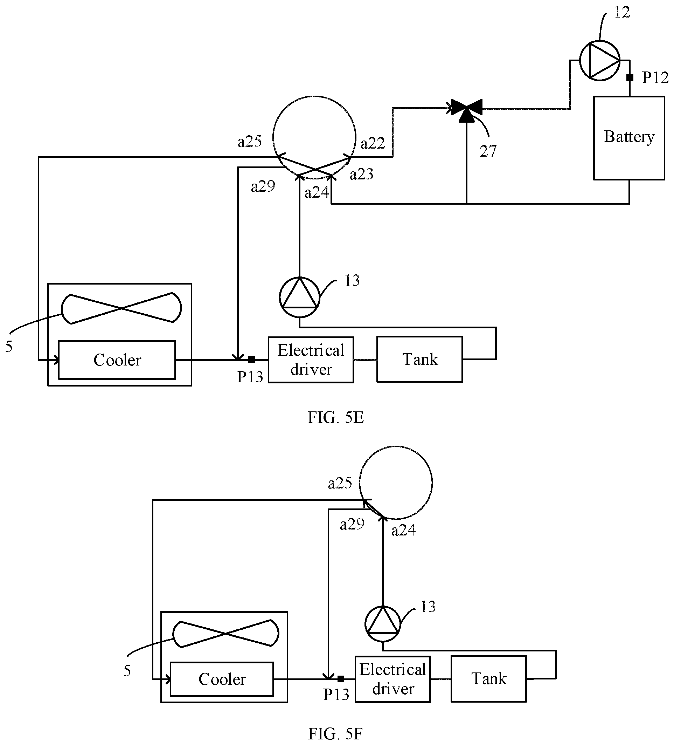

FIG. 5E is a diagram of a structure of a thermal management system in a mode of naturally cooling a battery according to Embodiment 1 of this application;
FIG. 5F is a diagram of a structure of a thermal management system in a mode of naturally cooling a battery according to Embodiment 1 of this application;

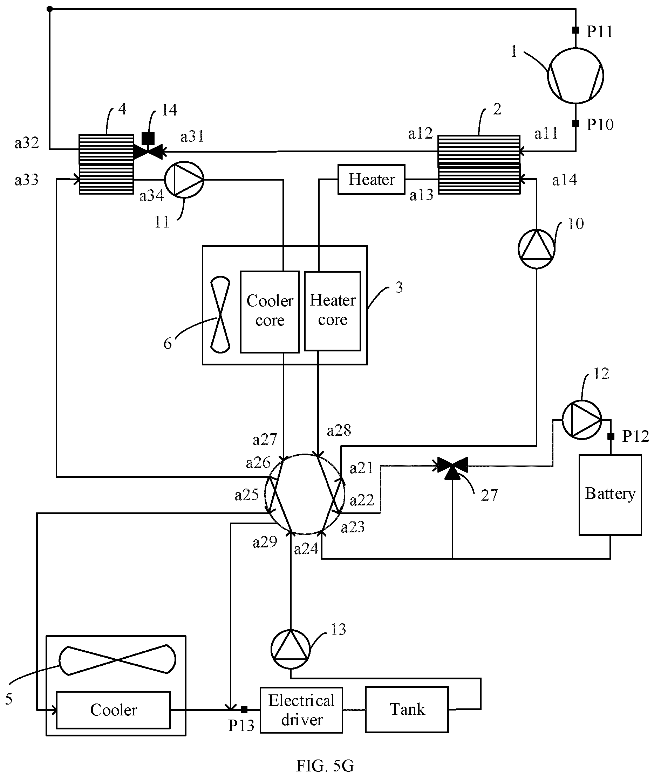

FIG. 5G is a diagram of a structure of a thermal management system in a mode of heating both a passenger cabin and a battery according to Embodiment 1 of this application;

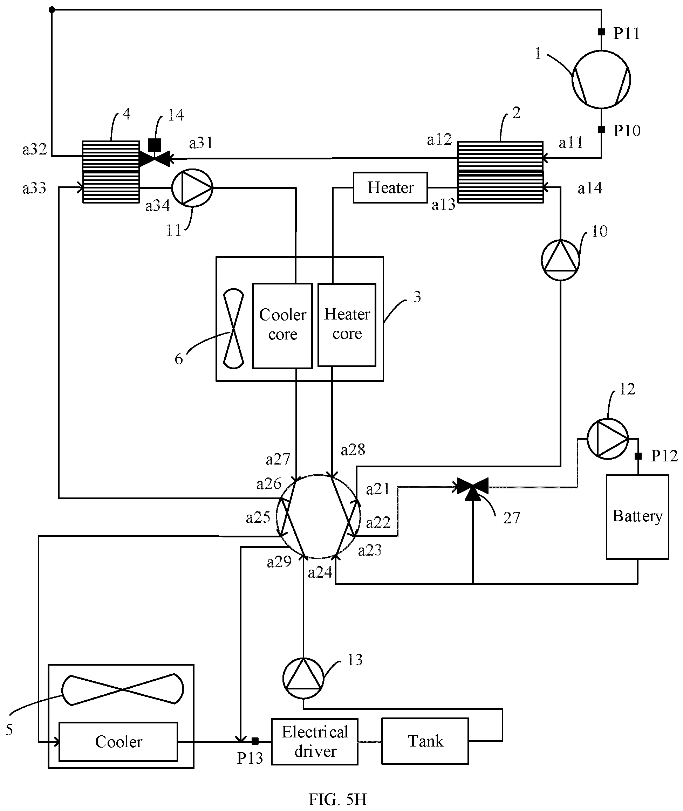

FIG. 5H is a diagram of a structure of a thermal management system in a mode of heating a battery and dehumidifying a passenger cabin according to Embodiment 1 of this application;

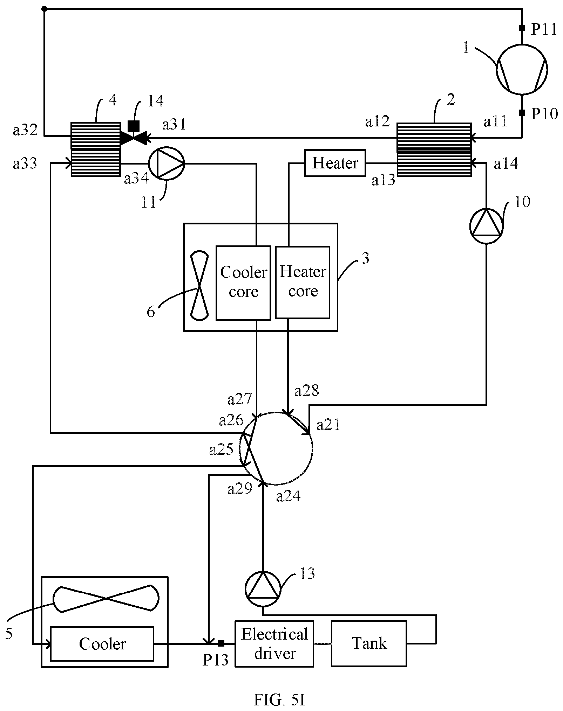

FIG. 5I is a diagram of a structure of a thermal management system in a mode of heating only a passenger cabin according to Embodiment 1 of this application;

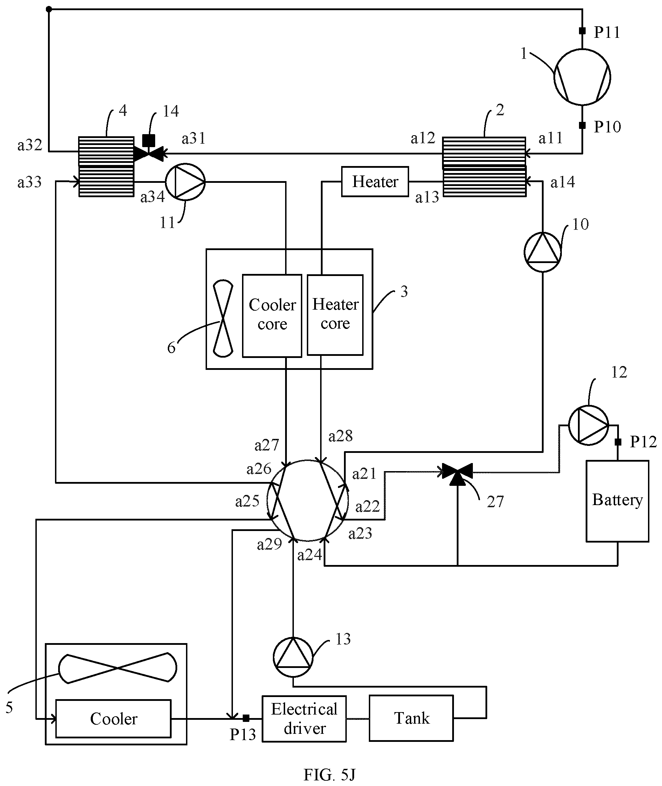

FIG. 5J is a diagram of a structure of a thermal management system in a mode of heating only a battery according to Embodiment 1 of this application;

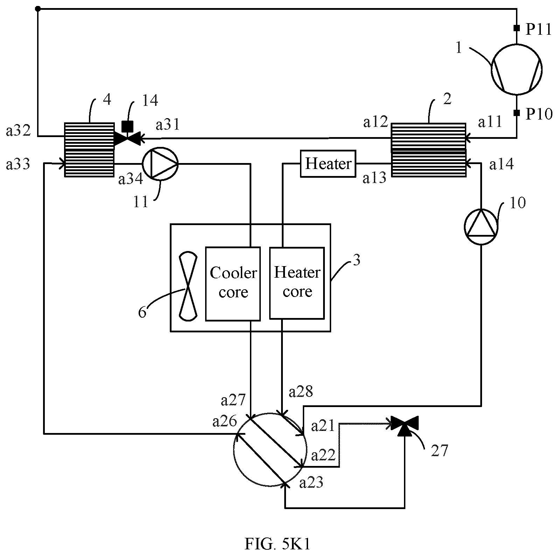

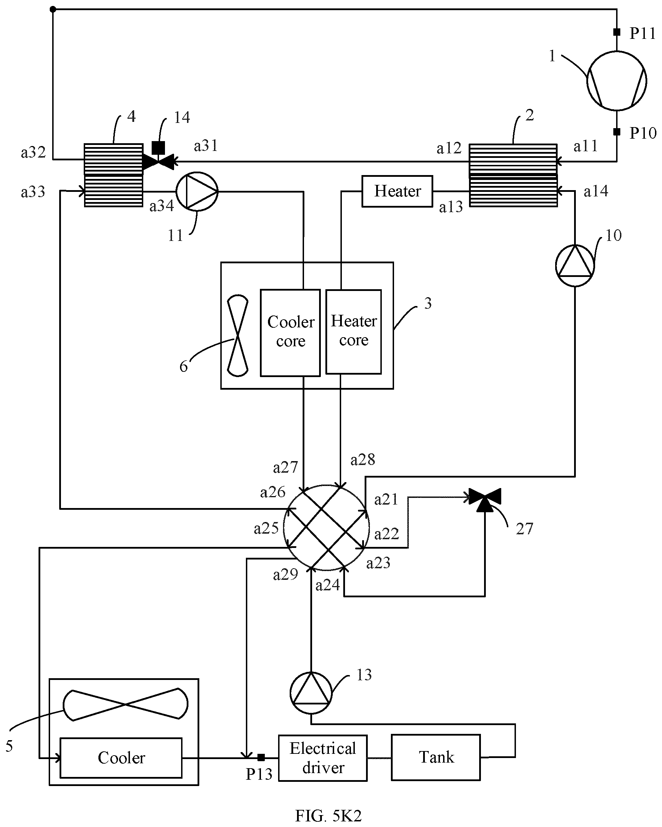

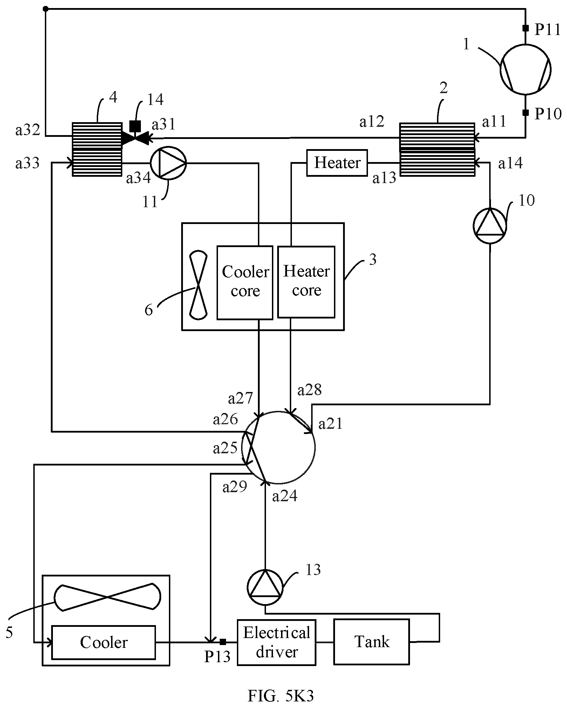

FIG. 5K1 is a diagram of a structure of a thermal management system in a mode of dehumidifying an entire vehicle according to Embodiment 1 of this application;
FIG. 5K2 is a diagram of a structure of a thermal management system in a mode of dehumidifying an entire vehicle according to Embodiment 1 of this application;
FIG. 5K3 is a diagram of a structure of a thermal management system in a mode of dehumidifying an entire vehicle according to Embodiment 1 of this application;

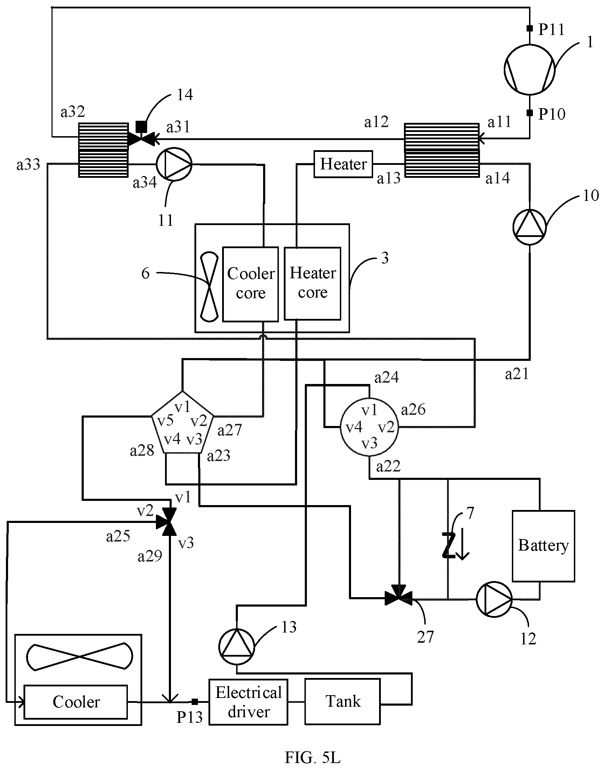

FIG. 5L is a diagram of a structure of a valve body assembly including a three-way valve, a four-way valve, and a five-way valve in a thermal management system according to Embodiment 1 of this application;

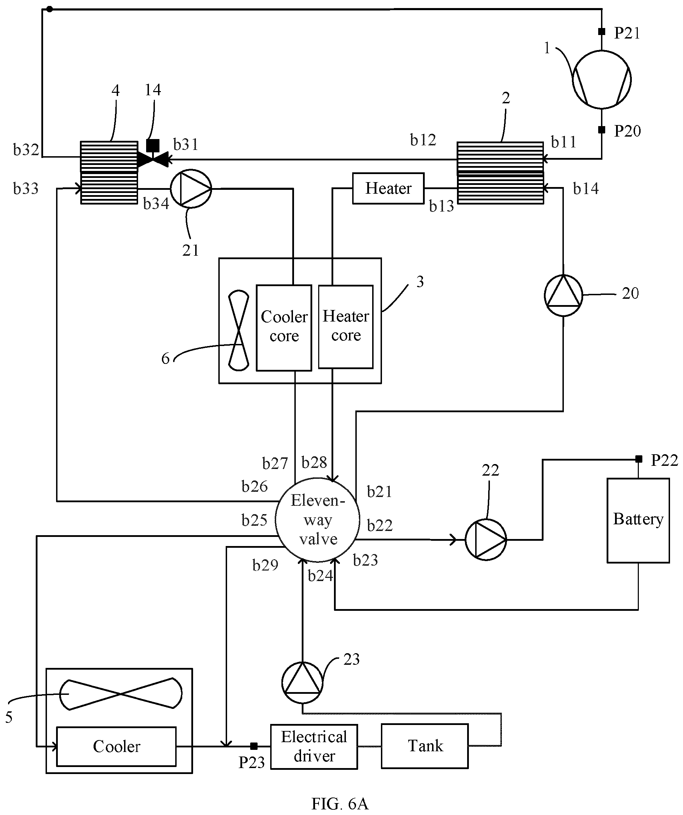

FIG. 6A is a diagram of a structure of an example of a thermal management system according to Embodiment 2 of this application;

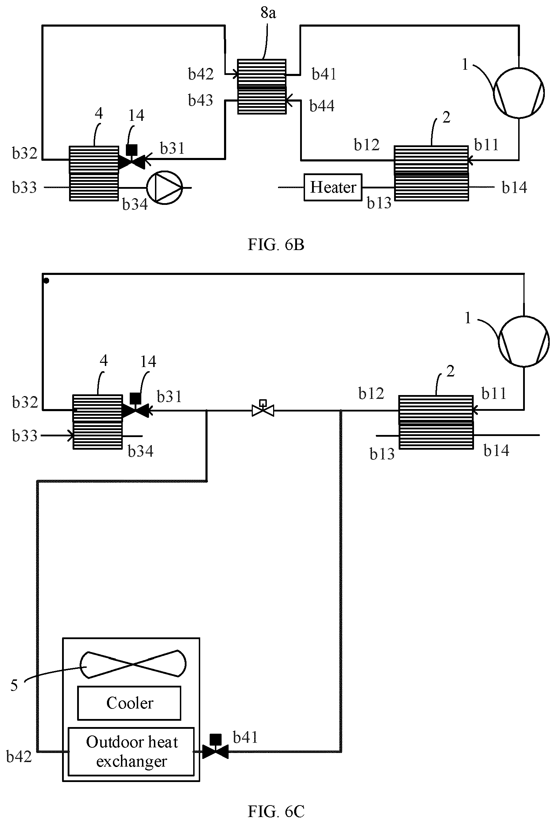

FIG. 6B is a diagram of a structure of an example when a heat-recovery liquid collector is used according to Embodiment 2 of this application;
FIG. 6C is a diagram of a structure of an example when an outdoor heat exchanger is used according to Embodiment 2 of this application;

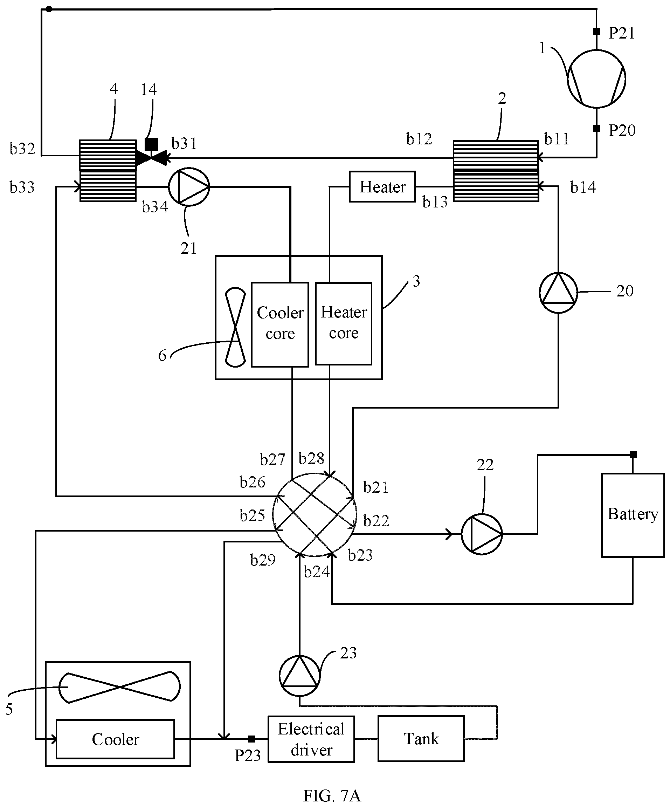

FIG. 7A is a diagram of a structure of a thermal management system in a mode of cooling both a passenger cabin and a battery according to Embodiment 2 of this application;

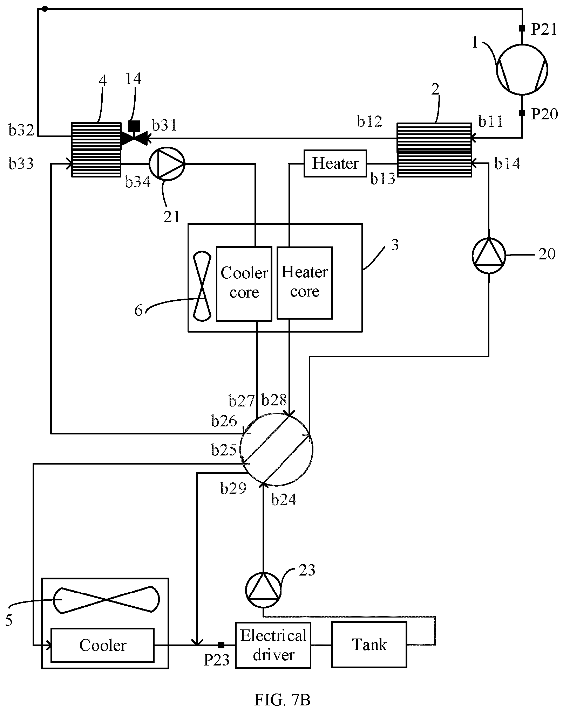

FIG. 7B is a diagram of a structure of a thermal management system in a mode of cooling only a passenger cabin according to Embodiment 2 of this application;

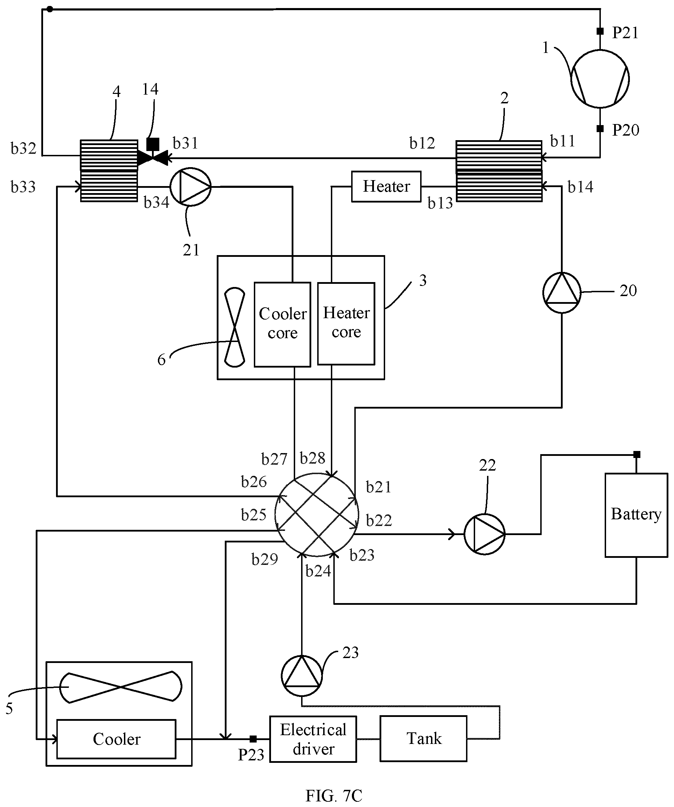

FIG. 7C is a diagram of a structure of a thermal management system in a mode of cooling only a battery according to Embodiment 2 of this application;

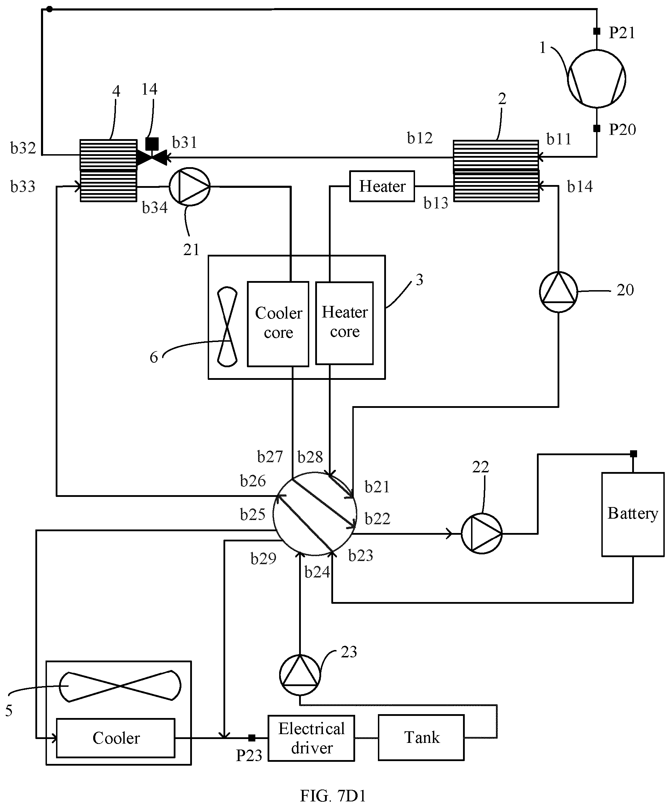

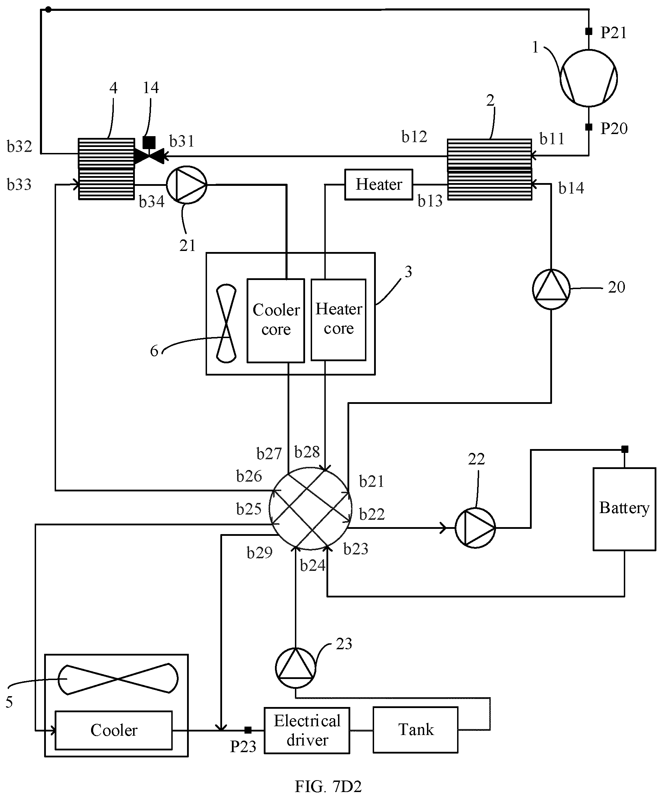

FIG. 7D1 and FIG. 7D2 are diagrams of a structure of a thermal management system in a mode of cooling a battery but heating a passenger cabin according to Embodiment 2 of this application;

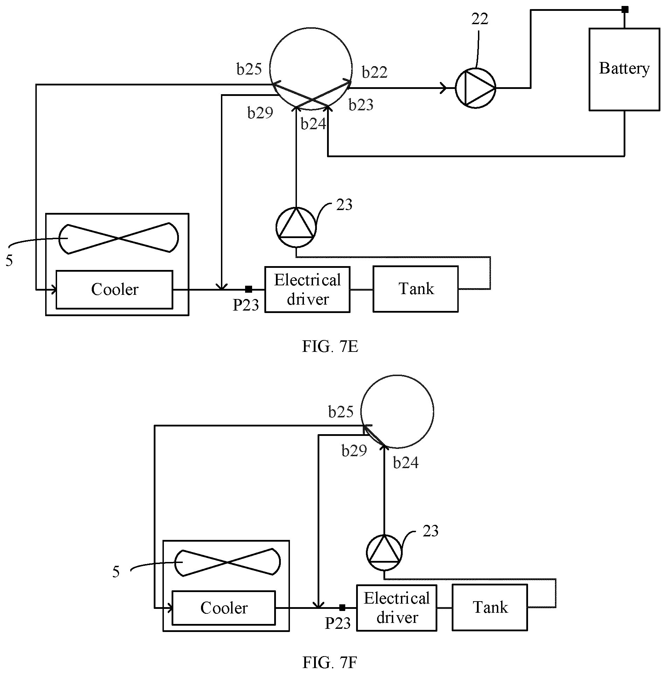

FIG. 7E is a diagram of a structure of a thermal management system in a mode of naturally cooling a battery according to Embodiment 2 of this application;
FIG. 7F is a diagram of a structure of a thermal management system in a mode of naturally cooling an electrical driver according to Embodiment 2 of this application;

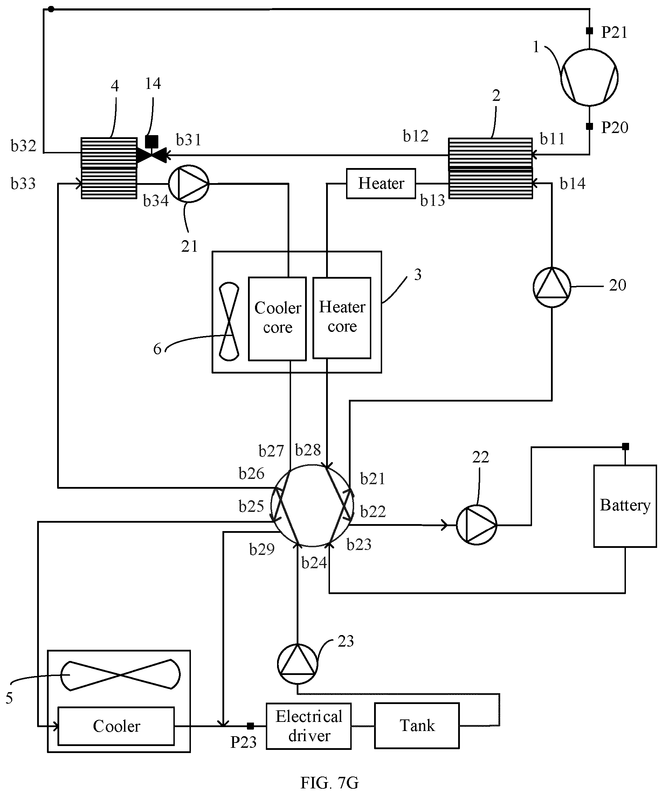

FIG. 7G is a diagram of a structure of a thermal management system in a mode of heating both a passenger cabin and a battery according to Embodiment 2 of this application;

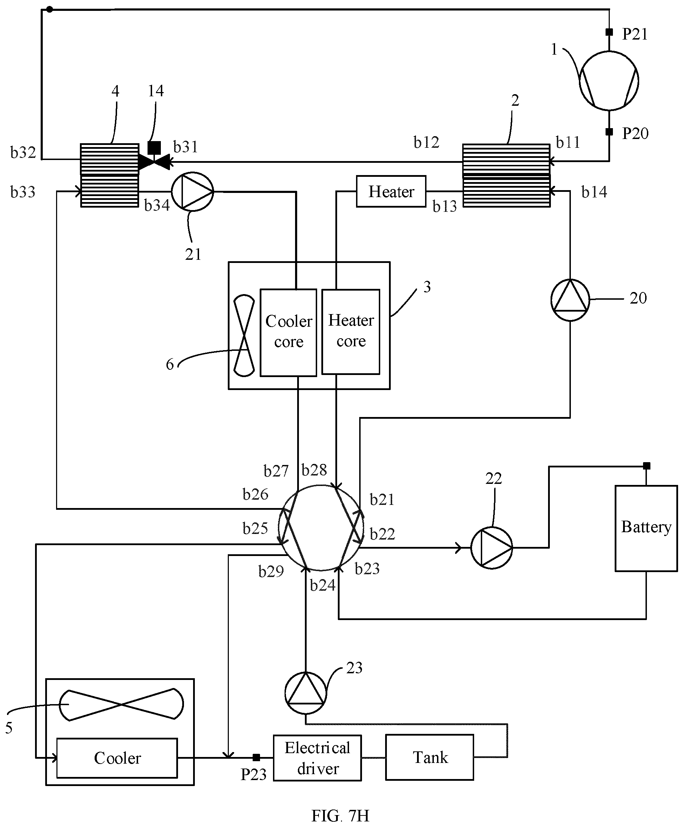

FIG. 7H is a diagram of a structure of a thermal management system in a mode of heating a battery and dehumidifying a passenger cabin according to Embodiment 2 of this application;

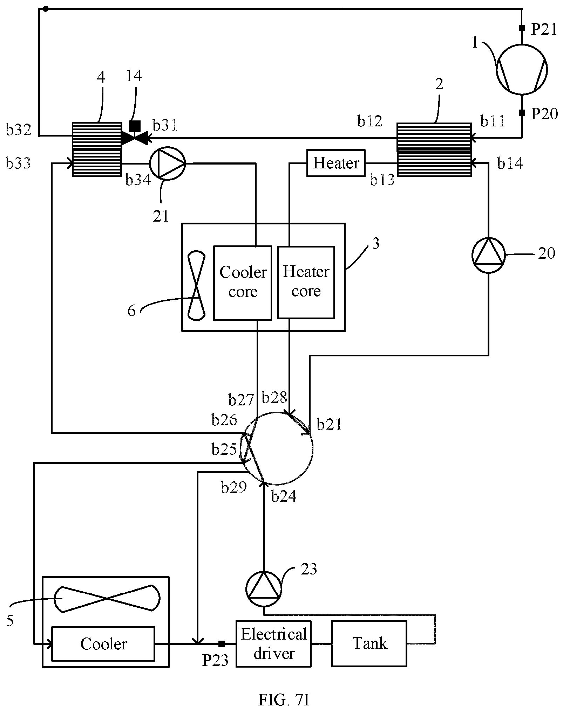

FIG. 7I is a diagram of a structure of a thermal management system in a mode of heating only a passenger cabin according to Embodiment 2 of this application;

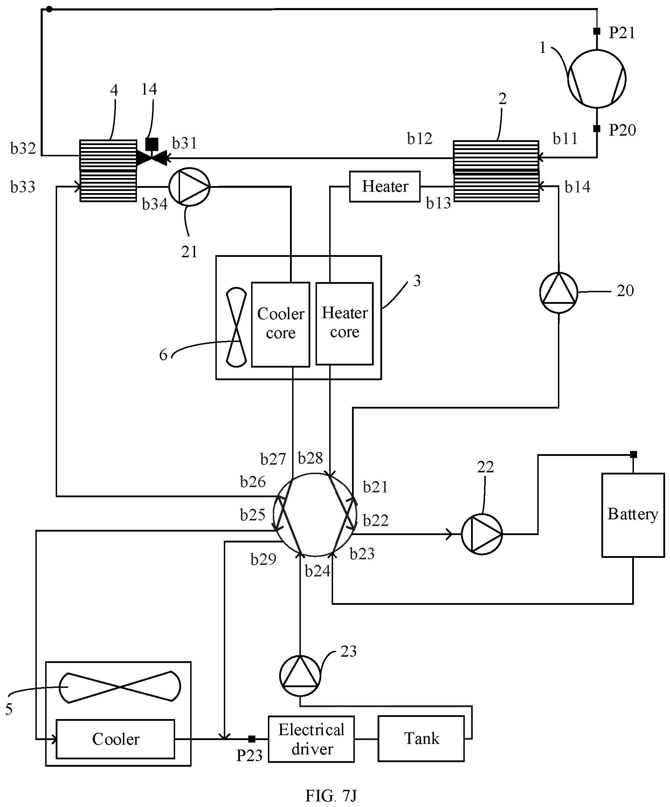

FIG. 7J is a diagram of a structure of a thermal management system in a mode of heating only a battery according to Embodiment 2 of this application;

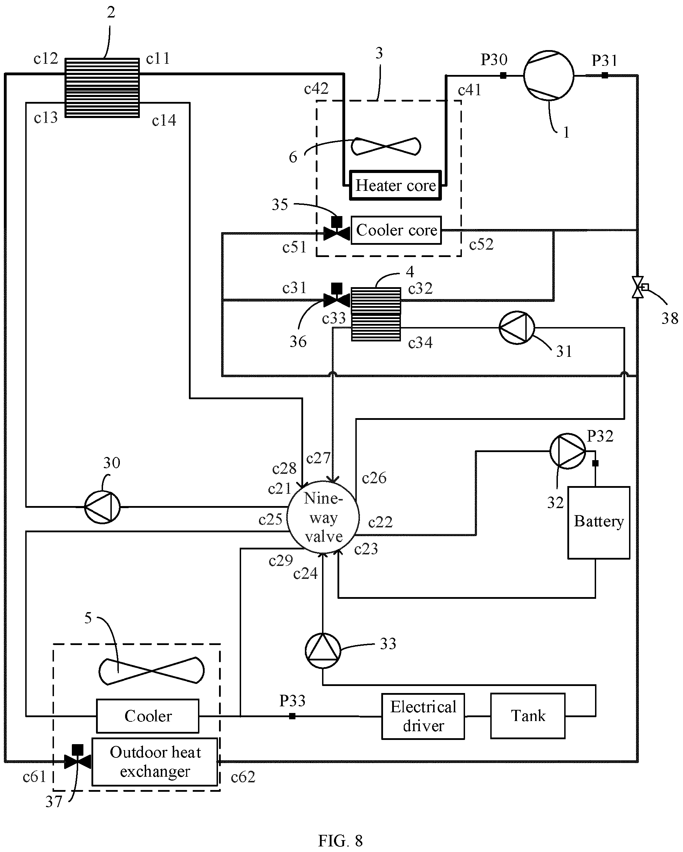

FIG. 8 is a diagram of a structure of an example of a thermal management system according to Embodiment 3 of this application;

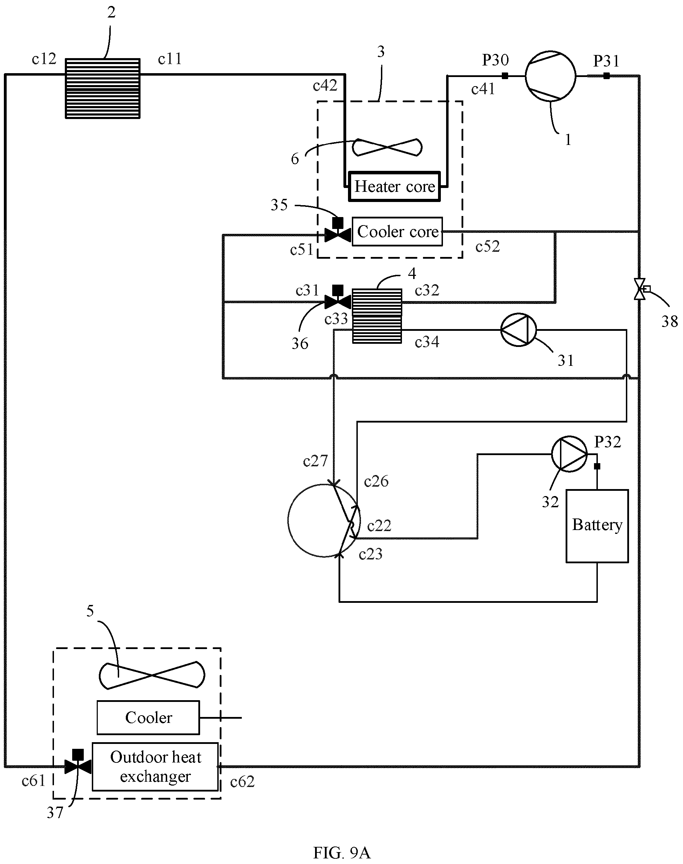

FIG. 9A is a diagram of a structure of a thermal management system in a mode of cooling both a passenger cabin and a battery according to Embodiment 3 of this application;

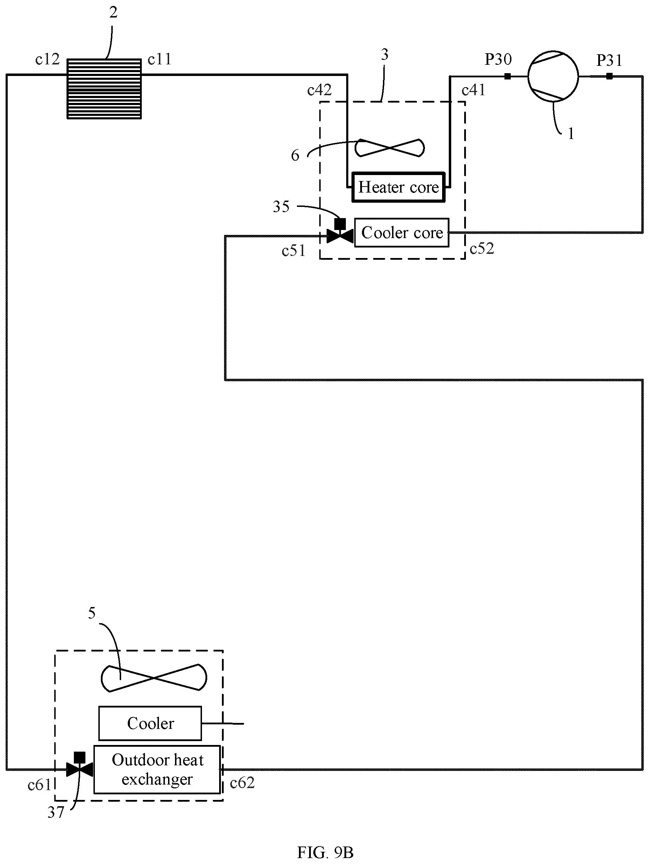

FIG. 9B is a diagram of a structure of a thermal management system in a mode of cooling only a passenger cabin according to Embodiment 3 of this application;

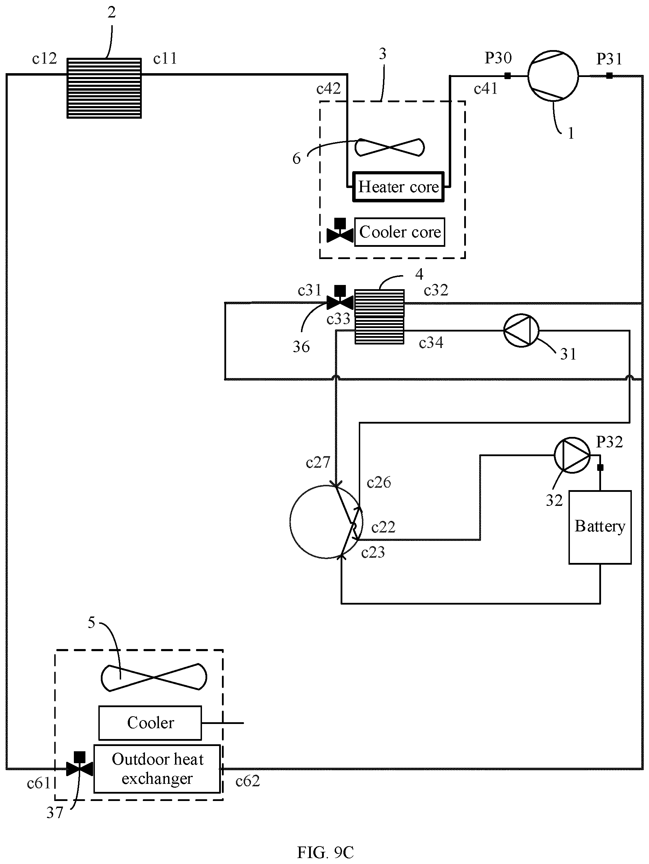

FIG. 9C is a diagram of a structure of a thermal management system in a mode of cooling only a battery according to Embodiment 3 of this application;

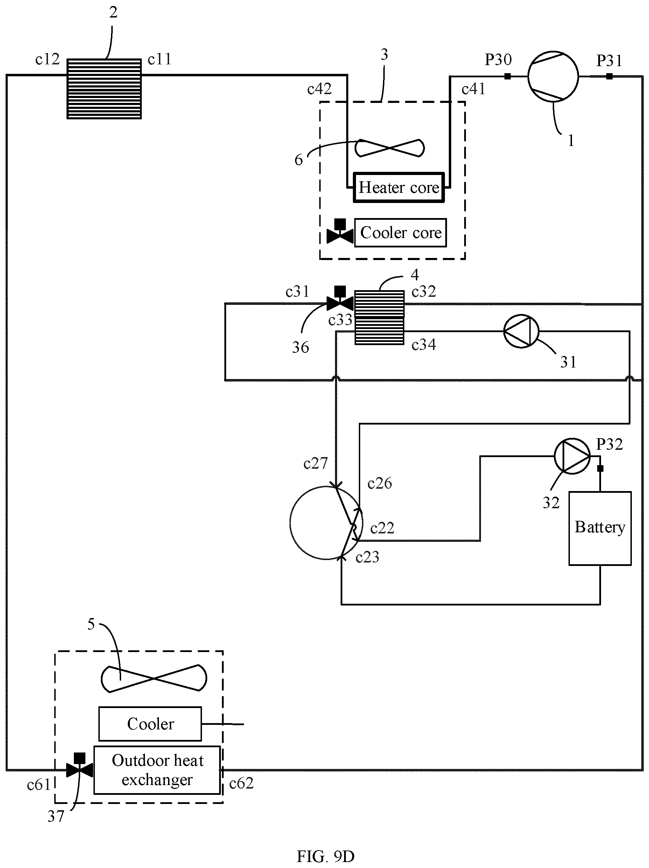

FIG. 9D is a diagram of a structure of a thermal management system in a mode of cooling a battery but heating a passenger cabin according to Embodiment 3 of this application;

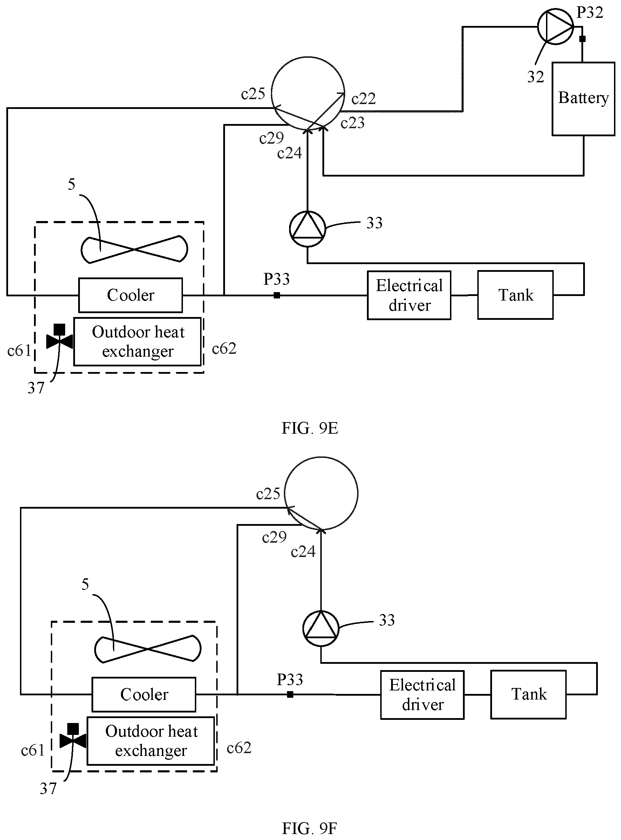

FIG. 9E is a diagram of a structure of a thermal management system in a mode of naturally cooling a battery according to Embodiment 3 of this application;
FIG. 9F is a diagram of a structure of a thermal management system in a mode of naturally cooling an electrical driver according to Embodiment 3 of this application;

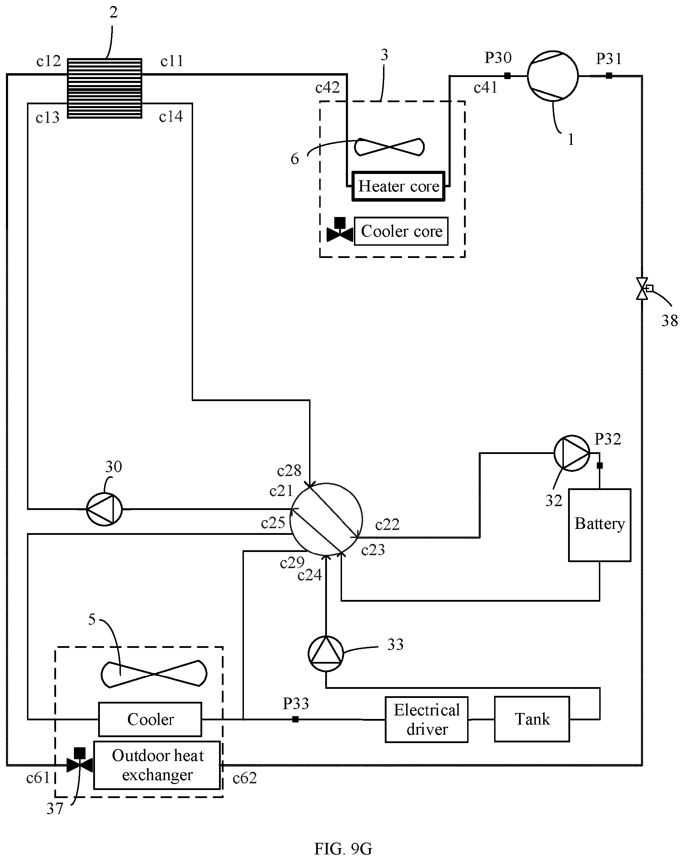

FIG. 9G is a diagram of a structure of a thermal management system in a mode of heating both a passenger cabin and a battery according to Embodiment 3 of this application;

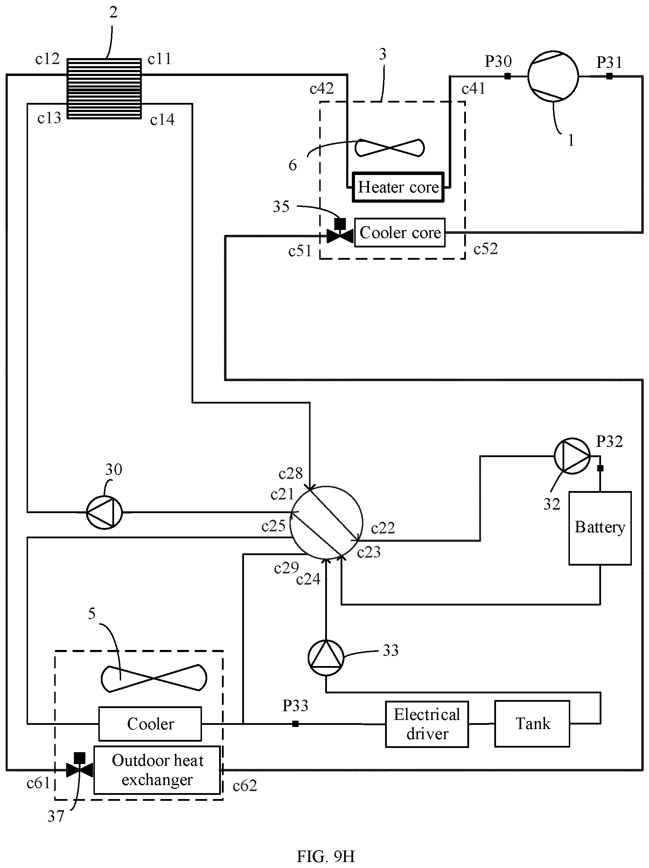

FIG. 9H is a diagram of a structure of a thermal management system in a mode of heating a battery and dehumidifying a passenger cabin according to Embodiment 3 of this application;

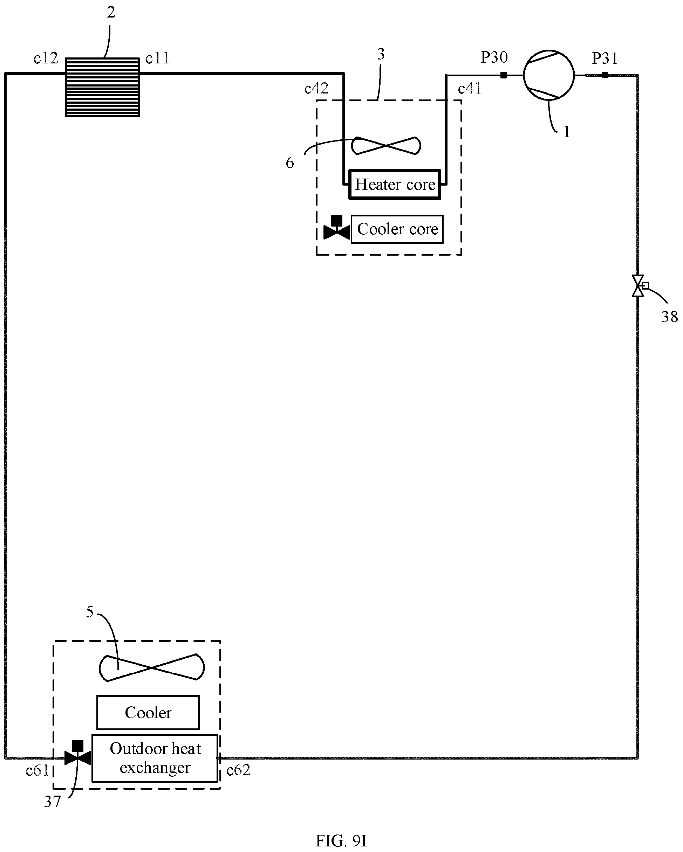

FIG. 9I is a diagram of a structure of a thermal management system in a mode of heating only a passenger cabin according to Embodiment 3 of this application; and

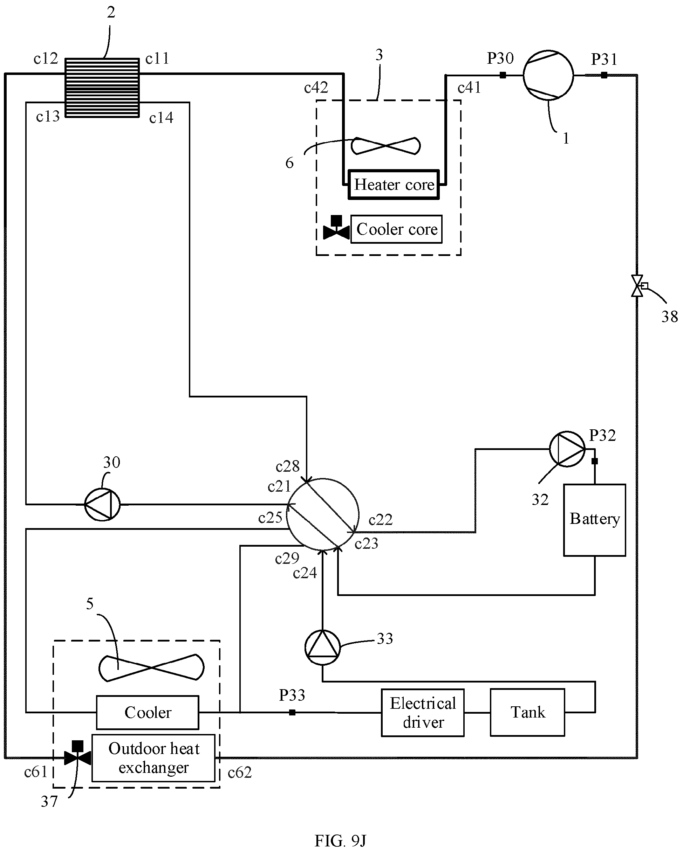

FIG. 9J is a diagram of a structure of a thermal management system in a mode of heating only a battery according to Embodiment 3 of this application.

### DESCRIPTION OF EMBODIMENTS

To make the objectives, technical solutions, and advantages of this application clearer, the following further describes this application in detail with reference to the accompanying drawings.

A thermal management system in this application is applicable to an electric vehicle. The electric vehicle is a transport means driven by using an electrical driver. The electrical driver may include, for example, a power distribution unit (power distribution unit, PDU), a microcontroller unit (microcontroller unit, MCU), a mapped diagnostic context (Mapped Diagnostic Context, MDC), a motor, and the like. Components of a thermal management system used in an existing electric vehicle are dispersed, resulting in long pipeline routes. Consequently, when liquid circulates in the pipelines, a severe pressure loss is caused, and cooling effect or heating effect of a loop is affected. In addition, in the existing thermal management system, components in each loop need to be separately controlled, resulting in poor coordination between the loops.

Terms used in the following embodiments are merely intended to describe specific embodiments, but are not intended to limit this application. The terms "one", "a", "the", "the foregoing", "this", and "the one" of singular forms used in this specification and the appended claims of this application are also intended to include forms such as "one or more", unless otherwise specified in the context clearly.

Reference to "an embodiment", "some embodiments", or the like described in this specification indicates that one or more embodiments of this application include a specific feature, structure, or characteristic described with reference to the embodiments. Therefore, statements such as "in an embodiment", "in some embodiments", "in some other embodiments", and "in other embodiments" that appear at different places in this specification do not necessarily refer to a same embodiment. Instead, the statements mean "one or more but not all of embodiments", unless otherwise specifically emphasized in another manner. The terms "include", "comprise", "have", and variants thereof all mean "include but are not limited to", unless otherwise specifically emphasized in another manner.

FIG. 01 is a diagram of a structure of a thermal management system according to an embodiment of this application. As shown in FIG. 01, the thermal management system includes a first loop a, a second loop b, and a valve body assembly. A cooler core in an air conditioner box assembly 3 and a first heat exchange pipe are disposed on the first loop a. A first water pump 11 is further disposed on the first loop a, the cooler core is configured to get a coolant output from an outlet a34 of the first heat exchange pipe, a first port of the first loop a is connected to a first end a26 of the valve body assembly, and a second port of the first loop a is connected to a second end a27 of the valve body assembly. A battery, a second water pump 12, a first valve body, and a second valve body are disposed on the second loop b. A first port of the second loop b is connected to a third end a23 of the valve body assembly, a second port of the second loop b is connected to a fourth end a22 of the valve body assembly, and the first valve body is configured to: enable a coolant passing through the third end a23 or the fourth end a22 of the valve body assembly to flow into the battery through the second water pump 12, and flow back to the fourth end a22 or the third end a23 of the valve body assembly. Alternatively, the first valve body is configured to enable a coolant to flow back from the third end a23 or the fourth end a22 of the valve body assembly to the fourth end a22 or the third end a23 of the valve body assembly through the first valve body, and the second valve body is configured to enable a coolant in the battery to flow back from a second end of the battery to a first end of the battery through the second valve body.

In the thermal management system, the air conditioner box assembly 3 is generally disposed in a passenger cabin of a vehicle. When the passenger cabin is cooled, the first end a26 of the valve body assembly needs to be connected to the third end a23 of the valve body assembly, and the second end a27 of the valve body assembly needs to be connected to the fourth end a22 of the valve body assembly, so that a coolant in the first loop a can circulate to continuously provide a cooling capacity for the cooler core. In this case, the passenger cabin is in a refrigeration state. Specifically, the coolant may be driven by the first water pump 11 to directly flow back to the third end a23 of the valve body assembly after passing through the cooler core, the second end a27 of the valve body assembly, the fourth end a22 of the valve body assembly, and the first valve body, and flow back to the first heat exchange pipe after passing through the third end a23 of the valve body assembly and the first end a26 of the valve body assembly. After the first heat exchange pipe performs heat exchange with the outside, the coolant is driven by the first water pump 11 to provide a cooling capacity for the cooler core. In this process, the coolant in the battery may be driven by the second valve body and the second water pump 12 to internally circulate. In this way, a battery temperature is equalized and cooling of the passenger cabin is not affected. In addition, when driven by the first water pump 11 to pass through the cooler core, the second end a27 of the valve body assembly, the fourth end a22 of the valve body assembly, and the first valve body, the coolant may alternatively enter the battery to flow back to the third end a23 of the valve body assembly and flow back to the first heat exchange pipe after passing through the first end a26 of the valve body assembly. After the first heat exchange pipe performs heat exchange with the outside, the coolant is driven by the first water pump 11 to provide a cooling capacity for the cooler core. In this process, the coolant passing through the first heat exchange pipe may cool both the cooler core and the battery.

In the foregoing implementation, under the effect of the valve body assembly, the first valve body, and the second valve body, the coolant in the first loop may provide a cooling capacity for only the cooler core and provide a cooling capacity for both the cooler core and the battery. When the cooling capacity is provided for only the cooler core, the battery can further equalize a temperature under the effect of the second valve body and the second water pump. In this way, collaboration efficiency of each loop in the thermal management system is improved.

It should be noted that the first valve body and the second valve body may be specifically in a plurality of forms. For example, the first valve body may be a first three-way valve, and the second valve body may be a first one-way valve. Still refer to FIG. 01. A first end of the first three-way valve 27 may be connected to the fourth end a22 of the valve body assembly, and a second end of the first three-way valve 27 is connected to the first end of the battery. The second water pump may be disposed on a pipeline between the second end of the first three-way valve 27 and the first end of the battery. A third end of the first three-way valve 27 is connected to a pipeline between the second end of the battery and the third end a23 of the valve body assembly. An inlet of the first one-way valve 7 is connected to a pipeline between the third end of the first three-way valve 27 and the second end of the battery, and an outlet of the first one-way valve 7 is connected to a pipeline between the second end of the first three-way valve 27 and the first end of the battery. When the cooling capacity is provided for only the cooler core, the first end a26 of the valve body assembly is connected to the third end a23 of the valve body assembly, and the second end a27 of the valve body assembly is connected to the fourth end a22 of the valve body assembly. In this case, the first end and the third end of the first three-way valve 27 may be controlled to be open, and the second end of the first three-way valve 27 is in a closed state, so that the coolant may directly flow back to the third end a23 of the valve body assembly through the cooler core, the second end a27 of the valve body assembly, the fourth end a22 of the valve body assembly, and the first three-way valve 27, and flow back to the first heat exchange pipe through the third end a23 of the valve body assembly and the first end a26 of the valve body assembly. In this process, the first one-way valve 7 may be in an open state, and the coolant in the battery may be driven by the second water pump to flow back to the first end of the battery through the second end of the battery, the inlet of the first one-way valve 7, the outlet of the first one-way valve 7, and the second water pump, to complete temperature equalization of the battery. When the cooling capacity is provided for both the cooler core and the battery, the first end a26 of the valve body assembly is connected to the third end a23 of the valve body assembly, and the second end a27 of the valve body assembly is connected to the fourth end a23 of the valve body assembly. In this case, the first end and the second end of the first three-way valve 27 may be controlled to be open, the third end of the first three-way valve 27 is in a closed state, and the first one-way valve 7 is also in a closed state, so that the coolant may flow to the battery through the cooler core, the second end a27 of the valve body assembly, the fourth end a22 of the valve body assembly, and the first end and the second end of the first three-way valve 27. The coolant passes through the battery to flow back to the third end a23 of the valve body assembly, and flows back to the first heat exchange pipe through the third end a23 of the valve body assembly and the first end a26 of the valve body assembly.

In addition, when the first valve body is a first three-way valve, the second valve body may be a second three-way valve. Specifically, refer to FIG. 02. A first end of the first three-way valve 27 is connected to a pipeline between the fourth end a22 of the valve body assembly and the battery. A second end of the first three-way valve 27 is connected to the second end of the battery. A third end of the first three-way valve 27 is connected to the third end a23 of the valve body assembly. A first end of the second three-way valve 28 is connected to a fourth end a22 of the valve body assembly. A second end of the second three-way valve 28 is connected to the first end of the battery. The second water pump 12 is disposed on a pipeline between the second end of the second three-way valve 28 and the first end of the battery. A third end of the second three-way valve 28 and the second end of the battery are connected to a pipeline between the second end of the first three-way valve 27 and the second end of the battery. When the cooling capacity is provided for only the cooler core, the first end a26 of the valve body assembly is connected to the third end a23 of the valve body assembly, and the second end a27 of the valve body assembly is connected to the fourth end a22 of the valve body assembly. In this case, the first end of the first three-way valve 27 and the third end of the first three-way valve may be controlled to be open, and the second end of the first three-way valve 27 is in a closed state, so that the coolant may directly flow back to the third end a23 of the valve body assembly through the cooler core, the second end a27 of the valve body assembly, the fourth end a22 of the valve body assembly, and the first three-way valve 27, and flow back to the first heat exchange pipe through the third end a23 of the valve body assembly and the first end a26 of the valve body assembly. In this process, each end of the second three-way valve 28 may be in a closed state, or the second end of the second three-way valve 28 and the third end of the second three-way valve are in a closed state, and the first end of the second three-way valve is in a closed state, so that the coolant at the battery may be driven by the second water pump 12 to flow back to the first end of the battery through the second end of the battery, the second end of the second three-way valve 28, the third end of the second three-way valve 28, and the second water pump 12, to complete temperature equalization of the battery. When the cooling capacity is provided for both the cooler core and the battery, the first end a26 of the valve body assembly is connected to the third end of the valve body assembly, and the second end a27 of the valve body assembly is connected to the fourth end a22 of the valve body assembly. In this case, the second end and the third end of the first three-way valve 27 may be controlled to be open, the second end of the first three-way valve 27 is in a closed state, the first end of the second three-way valve 28 and the second end of the second three-way valve 28 are controlled to be in a closed state, and the third end of the second three-way valve 28 is in a closed state, so that the coolant may flow back to the third end a23 of the valve body assembly through the cooler core, the second end a27 of the valve body assembly, the fourth end a22 of the valve body assembly, the first end of the second three-way valve 28, the second end a27 of the second three-way valve, the battery, and the second end and the third end of the first three-way valve 27, and flow back to the first heat exchange pipe through the third end a23 of the valve body assembly and the first end a26 of the valve body assembly.

In the foregoing embodiment, the thermal management system may further include a third loop, a fourth loop, and a fifth loop, which are described in detail with reference to the following embodiments. In addition, in the following embodiments, an example in which the second valve body in the second loop is the first one-way valve is used for description.

### Embodiment 1

FIG. 1A is a diagram of a structure of an example of a thermal management system according to Embodiment 1 of this application. As shown in FIG. 1A, the thermal management system may include a valve body assembly, a compressor 1, a water-cooled condenser 2, an air conditioner box assembly 3, a water-cooled evaporator 4, a throttling apparatus, a battery, a cooler, an electrical driver, a first water pump 11, a second water pump 12, a third water pump 10, a fourth water pump 13, a first loop, a second loop, a third loop, a fourth loop, and a fifth loop. The water-cooled condenser 2 may include a third heat exchange pipe and a fourth heat exchange pipe. The water-cooled evaporator 4 may include a first heat exchange pipe and a second heat exchange pipe, and the air conditioner box assembly 3 may include a heater core and a cooler core. A first water pump 11, a first heat exchange pipe, and a cooler core are disposed on the first loop. A first port of the first loop is connected to a first end a26 of the valve body assembly, and a second port of the first loop is connected to a second end a27 of the valve body assembly. Specifically, an inlet a33 of the first heat exchange pipe is connected to a first end a26 of the valve body assembly, the first heat exchange pipe may perform heat exchange with the second heat exchange pipe, an outlet a34 of the first heat exchange pipe is connected to an inlet of the first water pump 11, an outlet of the first water pump 11 is connected to an inlet of the cooler core, and an outlet of the cooler core is connected to the second end a27 of the valve body assembly. A second water pump 12 is disposed on the second loop, and the second loop passes through the battery and can perform heat exchange with the battery. A first port of the second loop is connected to a third end a23 of the valve body assembly, and a second port of the second loop is connected to a fourth end a22 of the valve body assembly. A first three-way valve 27 and a first one-way valve 7 are further disposed on the second loop. The third heat exchange pipe, the throttling apparatus, the second heat exchange pipe, and the compressor 1 are disposed on the third loop. An inlet a11 of the third heat exchange pipe is connected to an outlet of the compressor 1, an outlet a12 of the third heat exchange pipe is connected to an inlet a31 of the second heat exchange pipe, and an outlet a32 of the second heat exchange pipe is connected to an inlet of the compressor 1. A heater core, a fourth heat exchange pipe, and a third water pump 10 are disposed on the fourth loop. A first port of the fourth loop is connected to a fifth end a21 of the valve body assembly, and a second port of the fourth loop is connected to a sixth end a28 of the valve body assembly. Specifically, an outlet a13 of the fourth heat exchange pipe is connected to an inlet of the heater core, an outlet of the heater core is connected to a sixth end a28 of the valve body assembly, an inlet of the third water pump 10 is connected to a fifth end a21 of the valve body assembly, and an outlet of the third water pump 10 is connected to an inlet a14 of the fourth heat exchange pipe. The cooler, the electrical driver, the tank, and the fourth water pump 13 are disposed on the fifth loop. A first port of the fifth loop is connected to a seventh end a25 of the valve body assembly, and a second port of the fifth loop is connected to an eighth end a24 of the valve body assembly. Specifically, an inlet of the cooler is connected to the seventh end a25 of the valve body assembly, and an outlet of the cooler is connected to an inlet of the electrical driver, an outlet of the electrical driver is connected to an inlet of the tank, an outlet of the tank is connected to an eighth end a24 of the valve body assembly, and a ninth end a29 of the valve body assembly is connected to a pipeline between the cooler and the electrical driver. In a specific implementation process, different ports in the valve body assembly may be controlled to be connected to each other, to achieve different objectives. In addition, when the heater core is cooled, the first three-way valve 27 and the first one-way valve 7 are controlled, so that the battery can be cooled or temperature-equalized. This improves collaboration efficiency of loops in the thermal management system.

It should be noted that, the tank is a container with an upper opening. An input end of the tank is located above the tank, and an output end of the tank is located below the tank. When a gas-liquid mixture enters the tank through the input end of the tank, a liquid in the gas-liquid mixture flows to a lower end of the tank due to action of gravity and flows out from the output end of the tank, while gas in the gas-liquid mixture is left in the tank. Therefore, the tank is actually equivalent to a component for purifying the liquid (so that the liquid is not mixed with gas). In this case, the tank is disposed in the fifth loop, so that the coolant liquid in the fifth loop can be purified. When the coolant liquid is purer, temperature adjustment effect of the coolant loop is better.

In addition, a connection relationship between components in FIG. 1A is merely an example for description. Positions of components located on a same loop may also be exchanged, but are not limited to the connection relationship shown in FIG. 1A. For example, in FIG. 1A, the third water pump 10 may alternatively be disposed between the fourth heat exchange pipe and the heater core, and the fourth water pump 13 may alternatively be disposed between the tank and the electrical driver. Such position exchange has no essential impact on implementation of the solution. The following describes a specific implementation process of the solution by using the thermal management system shown in FIG. 1A.

In this embodiment of this application, the cooler is disposed in a front-end cooling module. A first fan 5 is also disposed in the front-end cooling module, and the first fan 5 may implement heat exchange between an ambient temperature and the cooler by using ambient air. Therefore, the heat exchange for the cooler may specifically include heating or cooling. For example, because a temperature of a coolant in winter is lower than an ambient temperature, the front-end cooling module may heat the coolant based on the ambient temperature. Because a temperature of the coolant in summer is higher than an ambient temperature, the front-end cooling module may cool the coolant based on the ambient temperature. For ease of understanding, the following describes only cooling of the front-end cooling module as an example. It should be noted that this does not mean that the front-end cooling module cannot perform heating. In this embodiment of this application, the air conditioner box assembly 3 includes a cooler core and a heater core. The air conditioner box assembly 3 is generally disposed in a passenger cabin of a vehicle. A second fan 6 may be further disposed in the air conditioner box assembly 3. The second fan 6 may directly blow ambient air (without cooling or heating) to the passenger cabin. Alternatively, an air environment may be cooled by using the cooler core before the ambient air is blown out, or air may be heated by using the heater core before the ambient air is blown out.

In an optional implementation, still refer to FIG. 1A. The thermal management system may further include a heater. An input end of the heater is connected to the outlet a13 of the fourth heat exchange pipe, an output end of the heater is connected to the inlet of the heater core, and the heater is configured to heat a coolant flowing through the heater. When the passenger cabin needs to be heated, if a temperature of warm air blown out of the heater core to the passenger cabin does not reach a temperature set by a user, the coolant output from the fourth heat exchange pipe may be further heated by using the heater. In this way, the coolant flowing to the heater core has a higher temperature, to increase the temperature of the warm air blowing out to the passenger cabin and improve heating effect of the passenger cabin. If the temperature of the warm air blown out of the heater core to the passenger cabin is appropriate, the heater may be turned off.

In an optional implementation, still refer to FIG. 1A. The thermal management system may further include a throttling apparatus, and the throttling apparatus may include a first throttle valve 14, and the first throttle valve 14 may be disposed on the third loop. Specifically, an inlet of the first throttle valve 14 is connected to the outlet a12 of the third heat exchange pipe, and an outlet of the first throttle valve 14 is connected to the inlet a31 of the second heat exchange pipe. The first throttle valve 14 is configured to: implement pressure reduction and expansion on gas before evaporation and heat absorption, and control a flow rate of a circulating refrigerant. When the first throttle valve 14 is completely closed, the refrigerant is not circulated in the first throttle valve 14. In this case, a refrigerant loop is cut off, and heating or cooling cannot be performed on the third loop by using a steam compression cycle.

In an optional implementation, as shown in FIG. 1B1, the thermal management system may further include a heat-recovery liquid collector 8a. A fifth heat exchange pipe and a sixth heat exchange pipe are disposed in the heat-recovery liquid collector 8a. An inlet a44 of the fifth heat exchange pipe is connected to the outlet a12 of the third heat exchange pipe, and an outlet a43 of the fifth heat exchange pipe is connected to the inlet a31 of the second heat exchange pipe. An inlet a42 of the sixth heat exchange pipe is connected to the outlet a32 of the second heat exchange pipe, and an outlet a41 of the sixth heat exchange pipe is connected to an input end of the compressor. The heat-recovery liquid collector may further reduce a temperature of a refrigerant at the outlet of the condenser, reduce dryness of the refrigerant after throttling, and improve a cooling capability of the evaporator.

In the foregoing embodiment, refer to FIG. 1B2. The heat-recovery liquid collector 8a may include a regenerator 80 and a first gas-liquid separator 81. The regenerator 80 includes the fifth heat exchange pipe and the sixth heat exchange pipe. An inlet of the first gas-liquid separator 81 is connected to an outlet a41 of the sixth heat exchange pipe, and an outlet of the first gas-liquid separator 81 is connected to the inlet of the compressor 1.

Refer to FIG. 1B3. The heat-recovery liquid collector 8a includes a regenerator 8 and a liquid storage tank 82. The regenerator 82 includes the fifth heat exchange pipe and the sixth heat exchange pipe. An inlet a44 of the fifth heat exchange pipe is connected to an outlet of the liquid storage tank 82, and an inlet of the liquid storage tank 82 is connected to the outlet a12 of the third heat exchange pipe.

As shown in FIG. 1B4, the thermal management system further includes a second gas-liquid separator 8b. An input end of the second gas-liquid separator 8b is connected to the outlet a32 of the third heat exchange pipe, and an output end of the second gas-liquid separator 8b is connected to an input end of the compressor 1. The second gas-liquid separator 8b in this implementation can not only implement a function of storing a liquid, but also leave a liquid in the gas-liquid mixture, and only let gas flow into the compressor 1, thereby ensuring an overheating degree requirement at the inlet of the compressor 1 and improving compression efficiency.

In an optional implementation, as shown in FIG. 1B5, the throttling apparatus of the thermal management system may include an ejector 8c and a third gas-liquid separator 8d. An injection end of the ejector 8c is connected to the outlet a12 of the third heat exchange pipe, a drainage end of the ejector 8c is connected to the outlet a32 of the second heat exchange pipe, an output end of the ejector 8c is connected to the inlet of the third gas-liquid separator 8d, a gas-phase output end of the third gas-liquid separator 8d is connected to the inlet of the compressor 1, and a liquid-phase output end of the third gas-liquid separator 8d is connected to the inlet a31 of the second heat exchange pipe. In a running process of the third loop, a high-temperature and high-pressure coolant passes through the third heat exchange pipe for heat exchange to obtain a coolant, and the coolant enters an injector through the injection end of the ejector 8c. In this case, a gas refrigerant passing through the outlet a32 of the second heat exchange pipe is brought into the drainage end of the ejector 8c by a main injected flow with a lower pressure before the ejector. After being mixed in the ejector 8c, the coolant and the gas refrigerant that pass through the injection end and the drainage end are ejected out from the output end of the ejector 8c to enter the third gas-liquid separator 8d, so that a gas refrigerant and a liquid refrigerant are separated in the third gas-liquid separator 8d. The gas refrigerant enters the inlet of the compressor 1, and the liquid refrigerant enters the inlet a31 of the third heat exchange pipe of the water-cooled evaporator. Using the ejector 8c instead of the conventional electronic expansion valve can effectively recover energy lost during a throttling process, improve suction pressure, and improve system efficiency.

With reference to FIG. 1B5 and FIG. 1B6, the throttling apparatus may further include a first electronic expansion valve 9a. An inlet of the first electronic expansion valve 9a is connected to the gas-phase output end of the third gas-liquid separator 8d, and an outlet of the first electronic expansion valve 9a is connected to the inlet a31 of the second heat exchange pipe. The first electronic expansion valve 9a is additionally disposed on a path of the drainage end of the ejector 8c, to adjust a flow rate of the injected flow that enters the ejector 8c. In this way, a problem of an insufficient flow rate adjustment capability of the ejector 8c is compensated, and a state parameter of the thermal management system can be adjusted effectively.

With reference to FIG. 1B7 and FIG. 1B8, the throttling apparatus may further include a second electronic expansion valve 9b. When the second electronic expansion valve 9b is disposed, the first electronic expansion valve 9a may be disposed in FIG. 1B8, or the first electronic expansion valve 9a may not be disposed in FIG. 1B7. An inlet of the second electronic expansion valve 9b may be connected to the outlet a12 of the third heat exchange pipe, and an outlet of the second electronic expansion valve 9b is connected to the injection end of the ejector 8c. The second electronic expansion valve 9b may be disposed to adjust a flow rate of the injected flow that enters the ejector 8c. In this way, a problem of insufficient flow rate adjustment capability of the ejector 8c is compensated, and a state parameter of the thermal management system can be adjusted effectively.

Refer to FIG. 1B9. The throttling apparatus further includes a third electronic expansion valve 9c, a second valve A, a third valve B, a fourth valve C, and a fifth valve D. An inlet of the second valve A is connected to the outlet a12 of the third heat exchange pipe, an outlet of the second valve A is connected to the injection end of the ejector 8c, one end of the third valve B is connected to the outlet a32 of the second heat exchange pipe, the other end of the third valve B is connected to the drainage end of the ejector 8c, one end of the fourth valve C is connected to the outlet a32 of the second heat exchange pipe, the other end of the fourth valve C is connected to a pipeline between the output end of the ejector 8c and the inlet of the third gas-liquid separator 8b, one end of the fifth valve D is connected to the liquid-phase output end of the third gas-liquid separator 8d, the other end of the fifth valve D is connected to the inlet a31 of the second heat exchange pipe, one end of the third electronic expansion valve 9c is connected to a pipeline between the inlet of the second valve A and the outlet a12 of the third heat exchange pipe, and the other end of the third electronic expansion valve 9c is connected to a pipeline between an outlet of the fifth valve D and the inlet a31 of the second heat exchange pipe. In this implementation, the outlet a12 of the third heat exchange pipe is divided into two channels, and one channel is one channel using the ejector 8c. When the mode runs, the third electronic expansion valve 9c needs to be closed, the fourth valve C is closed, and the second valve A, the third valve B, and the fifth valve D are opened, so that the coolant passing through the outlet a12 of the third heat exchange pipe enters the ejector 8c from the injection end through the second valve A. The injected flow enters the drainage end of the ejector 8c through the third valve B, and the coolant at the drainage end and injection end enters the third gas-liquid separator 8d from the output end of the ejector 8c. The other channel is one channel using the third electronic expansion valve 9c. When the mode runs, the second valve A, the third valve B, and the fifth valve D are closed, the fourth valve C is opened, and the third electronic expansion valve 9c is opened and adjusted, so that the coolant flowing out of the outlet a12 of the third heat exchange pipe enters the second heat exchange pipe for evaporation after entering third electronic expansion valve 9c for throttling. The evaporated coolant enters the third gas-liquid separator 8d through the fourth valve C. In this mode, an efficient running condition of the ejector is considered. When a system state is not suitable for running the ejector, a normal working mode of the electronic expansion valve can be switched to.

In an optional implementation, as shown in FIG. 1C, the refrigerant loop of the thermal management system may include an outdoor heat exchanger. The outdoor heat exchanger includes a seventh heat exchange pipe. An input end a41 of the seventh heat exchange pipe is connected to the outlet a12 of the third heat exchange pipe, and an output end a42 of the seventh heat exchange pipe is connected to the inlet a31 of the second heat exchange pipe. The outdoor heat exchanger allows the refrigerant to directly exchange heat with the external environment. In extreme high and low temperature conditions, the outdoor heat exchanger can compensate the problem of insufficient secondary heat exchange efficiency on a water side and improve a system capability.

In an optional implementation, as shown in FIG. 1D, the thermal management system further includes a thirteenth valve body 16 and a fourteenth valve body 15. A first end of the thirteenth valve body 16 is connected to the outlet a13 of the fourth heat exchange pipe, a second end of the thirteenth valve body 16 is connected to the outlet a34 of the first heat exchange pipe, a third end of the thirteenth valve body 16 is connected to an inlet of the heater core, an outlet of the fourteenth valve body 15 is connected to a pipeline between the heater core and the valve body assembly, and an inlet of the fourteenth valve body 15 is connected to a pipeline between the cooler core and the valve body assembly. That is, the outlet a13 of the fourth heat exchange pipe may be connected to the outlet a34 of the first heat exchange pipe by using the thirteenth valve body 16 to control a part of hot and cold water in the fourth heat exchange pipe and the first heat exchange pipe to be directly in contact with each other, so that an overall temperature of the coolant is increased, and finally the mixed coolant returns from the fourteenth valve body 15 to the fourth loop in which the fourth heat exchange pipe is located. In this mode, power generated by the compressor may be used to generate heat, and a temperature of the fourth loop is increased at an extremely low temperature to meet a requirement for starting a heat pump.

The thirteenth valve body is a three-way valve, and the fourteenth valve body is a one-way valve.

In an optional implementation, as shown in FIG. 1E, the thermal management system further includes a third valve body 17, a fourth valve body 18, and a fifth valve body 19. A first end of the third valve body 17 is connected to the outlet a34 of the first heat exchange pipe, a second end of the third valve body 17 is connected to an inlet of the cooler core, and a third end of the third valve body 17 is connected to the second end a27 of the valve body assembly. A first end of the fourth valve body 18 is connected to an outlet of the heater core, a second end of the fourth valve body 18 is connected to the inlet of the cooler core, and a third end of the fourth valve body 18 is connected to the sixth end a28 of the valve body assembly. A first end of the fifth valve body 19 is connected to an outlet of the cooler core, a second end of the fifth valve body 19 is connected to the second end a27 of the valve body assembly, and a third end of the fifth valve body 19 is connected to the sixth end a28 of the valve body assembly. When the fifth end a21 of the valve body assembly is connected to the sixth end a28 of the valve body assembly, the air conditioner box assembly is in a heating state. To implement series heat exchange between the cooler core and the heater core, increase a heat exchange area on a passenger cabin side, and improve heat exchange efficiency, the second end of the third valve body 17 is controlled to be in a closed state, the first end and the second end of the fourth valve body 18 are controlled to be in an open state, the third end of the fourth valve body 18 is in a closed state, the first end and the third end of the fifth valve body 19 are controlled to be in an open state, and the second end of the fifth valve body 19 is in a closed state, so that a hot coolant in the second heat exchange pipe first heats air that enters the passenger cabin by using the heater core, then enters the cooler core through the first end and the second end of the fourth valve body 18 to continue heating gas in the passenger cabin, and returns to the fourth loop through the first end and the third end of the fifth valve body 19. At the same time, a low-temperature coolant in the first heat exchange pipe directly enters the second end a27 of the valve body assembly through the first end and the third end of the third valve body 17, and then absorbs heat in another loop. In this arrangement manner, heat exchange areas of the heater core and the cooler core in the air conditioner box assembly can be maximized, to improve heat exchange effect.

In an optional implementation, as shown in FIG. 1F, the thermal management system further includes a sixth valve body 20, a seventh valve body 21, and an eighth valve body 22. A first end of the sixth valve body 20 is connected to the outlet a34 of the first heat exchange pipe, a second end of the sixth valve body 20 is connected to an inlet of the cooler core, and a third end of the sixth valve body 20 is connected to the second end a27 of the valve body assembly. A first end of the seventh valve body 21 is connected to the outlet a13 of the fourth heat exchange pipe, a second end of the seventh valve body 21 is connected to an inlet of the heater core, and a third end of the seventh valve body 21 is connected to a pipeline between an inlet of the cooler core and the second end of the sixth valve body 20. A first end of the eighth valve body 22 is connected to an outlet of the cooler core, a second end of the eighth valve body 22 is connected to the second end a27 of the valve body assembly, and a third end of the eighth valve body 22 is connected to the sixth end a28 of the valve body assembly. When the fifth end a21 of the valve body assembly is connected to the sixth end a28 of the valve body assembly, the air conditioner box assembly is in a heating state. To implement parallel heat exchange between the cooler core and the heater core, increase a heat exchange area on a passenger cabin side, and improve heat exchange efficiency, the second end of the sixth valve body 20 is controlled to be in a closed state, the three ends of the seventh valve body 21 are controlled to be in an open state, the first end and the third end of the eighth valve body 22 are controlled to be in an open state, and the second end of the eighth valve body 22 is controlled to be in a closed state, so that a hot coolant output from the fourth heat exchange pipe is distributed by using the seventh valve body 21. One part of the coolant heats air that enters the passenger cabin by using the heater core, and the other part of the hot coolant enters the cooler core through the seventh valve body 21 to continue heating gas in the passenger cabin, and then returns to the fourth loop through the first end and the third end of the eighth valve body 22. At the same time, a low-temperature coolant in the first heat exchange pipe directly enters the second end a27 of the valve body assembly through the first end and the third end of the sixth valve body 20, and then absorbs heat in another loop. In this arrangement manner, heat exchange areas of the heater core and the cooler core in the air conditioner box assembly can be maximized, to improve heat exchange effect.

In an optional implementation, as shown in FIG. 1G, the thermal management system further includes a ninth valve body 23, and an inlet air heat exchanger is additionally disposed at an air inlet outside an air conditioner box. An inlet of the inlet air heat exchanger is connected to a first end of the ninth three-way valve 23, an outlet of the inlet air heat exchanger is connected to the sixth end a28 of the valve body assembly, a second end of the ninth valve body 23 is connected to an outlet of the heater core, and a third end of the ninth three-way valve 23 is connected to the sixth end a28 of the valve body assembly. When the fifth end a21 of the valve body assembly is connected to the sixth end a28 of the valve body assembly, and the air conditioner box assembly is in a heating state, a hot coolant in the fourth heat exchange pipe first heats air that enters the passenger cabin by using the heater core, then enters the inlet air heat exchanger through the second end and the first end of the ninth valve body 23 for preheating low-temperature air of external-circulation inlet air, and then returns to the fourth loop. In this arrangement manner, a temperature of outlet air of the passenger cabin can be ensured, and utilization of a hot coolant that is heated by using the heater core and that has a higher temperature can be maximized, thereby improving heat exchange effect.

In an optional implementation, as shown in FIG. 1H, the thermal management system further includes a tenth valve body 24, an eleventh valve body 25, and a twelfth valve body 26. A first end of the tenth valve body 24 is connected to the outlet a34 of the first heat exchange pipe, a second end of the tenth valve body 24 is connected to an inlet of the cooler core, and a third end of the tenth valve body 24 is connected to the second end a27 of the valve body assembly. A first end of the eleventh valve body 25 is connected to the outlet a13 of the fourth heat exchange pipe, a second end of the eleventh valve body 25 is connected to an inlet of the heater core, and a third end of the eleventh valve body 25 is connected to the inlet of the cooler core. A first end of the twelfth valve body 26 is connected to an outlet of the cooler core, a second end of the twelfth valve body 26 is connected to the second end a27 of the valve body assembly, and a third end of the twelfth valve body 26 is connected to the sixth end a28 of the valve body assembly. A middle inlet a15 is further provided on the fourth heat exchange pipe, and the middle inlet a15 is connected to an outlet of the heater core. When the fifth end a21 of the valve body assembly is connected to the sixth end a28 of the valve body assembly, the air conditioner box assembly is in a heating state. In this case, the hot coolant output from the fourth heat exchange pipe separately enters the heater core and the cooler core through the eleventh valve body 25. The hot coolant that enters the heater core may heat air that enters the passenger cabin, and the coolant in the heater core may directly enter the fourth heat exchange pipe through the middle inlet a15 of the fourth heat exchange pipe. The hot coolant that enters the cooler core may heat gas of inlet air, enters the sixth end a28 of the valve body assembly through the twelfth valve body 26, and enters the inlet a14 of the fourth heat exchange pipe through the fifth end a21 of the valve body assembly. In this arrangement manner, a ladder distribution of the coolant flowing back into the fourth heat exchange pipe may be implemented. A low-temperature coolant that is cooled after being preheated starts from the inlet a14 of the fourth heat exchange pipe, is mixed with a medium-temperature coolant that enters the heater core after reaching the middle inlet a15 of the fourth heat exchange pipe, and finally is heated to a high-temperature coolant. In this way, a heating process of a coolant in the fourth heat exchange pipe is completed. In addition, the low-temperature coolant in the first heat exchange pipe directly enters the second end a27 of the valve body assembly through the first end and the third end of the tenth valve body 24, and then absorbs heat in another loop. Such a structure can ensure that a temperature change curve of a coolant matches a temperature change curve of a refrigerant by adjusting a flow rate of the eleventh valve body 25, thereby reducing an energy loss of the system and improving efficiency.

As shown in FIG. 1I, the air conditioner box assembly further includes an additional core, and the thermal management system further includes a fifteenth valve body 28a, a sixteenth valve body 28b, and a seventeenth valve body 28c. A first end of the fifteenth valve body 28a is connected to the outlet a34 of the first heat exchange pipe, a second end of the fifteenth valve body 28a is connected to an inlet of the cooler core, a third end of the fifteenth valve body 28a is connected to a first end of the sixteenth valve body 28b, a second end of the sixteenth valve body 28b is connected to the outlet a13 of the fourth heat exchange pipe, a third end of the sixteenth valve body 28b is connected to an inlet of the heater core, an inlet of the additional core is connected to a pipeline between the third end of the fifteenth valve body 28a and the first end of the sixteenth end, an outlet of the additional core is connected to a first end of the seventeenth valve body 28c, a second end of the seventeenth valve body 28c is connected to a pipeline between the second end of the fifteenth valve body 28a and the inlet of the cooler core, and a third end of the seventeenth valve body 28c is connected to a pipeline between the third end of the sixteenth valve body 28b and the inlet of the heater core. In this arrangement manner, the heater core and the cooler core may further separately perform cooling or heating on the passenger cabin, and the additional core may be used as an additional cooler core or heater core to participate in cooling or heating based on different cold and hot loads.

Specifically, when the passenger cabin is cooled, the additional core may be used as a cooler core, and the high temperature coolant at the outlet a13 of the fourth heat exchange pipe flows to the inlet of the heater core through the second end of the sixteenth valve body 28b and the third end of the sixteenth valve body 28b. In this case, the first end of the seventeenth valve body 28c is closed, and the high-temperature coolant can enter only the heater core. In addition, the coolant passing through the heater core enters the valve body assembly to dissipate heat to the outside, and then returns to the inlet a14 of the fourth heat exchange pipe.

After entering the additional heater core through the first end of the fifteenth valve body 28a and the third end of the fifteenth valve body 28a for heat exchange, the coolant at the outlet a34 of the first heat exchange pipe flows into the cooler core through the first end of the seventeenth valve body 28c and the second end of the seventeenth valve body 28c, and finally enters the valve body assembly through the outlet of the cooler core. After the cycle is completed, the coolant flows back to the inlet a33 of the first heat exchange pipe.

When the passenger cabin is heated, the additional core is used as a heater core. The coolant at the outlet a34 of the first heat exchange pipe enters the fifteenth valve body 28a through the first end of the fifteenth valve body 28a. The second end of the seventieth valve body 28c is closed, so that the coolant enters the cooler core through the second end of the fifteenth valve body 28a, then enters another coolant loop through the valve body assembly to absorb heat, and flows back to the inlet a33 of the first heat exchange pipe. The high-temperature coolant at the outlet a13 of the fourth heat exchange pipe enters the additional core for heat exchange through the second end of the sixteenth valve body 28b and the first end of the sixteenth valve body 28b, then enters the heater core for heat exchange through the third end of the seventeenth valve body 28c, and finally enters the valve body assembly from the outlet of the heater core and flows back to a14 of the fourth heat exchange pipe.

It should be noted that, in a heating and dehumidification working condition, both the cooler core and the heater core are in a working state, and the additional core is flexibly used as the cooler core or the heater core based on a cold and hot load.

In an optional implementation, still refer to FIG. 1A. To learn an actual temperature and actual pressure at each key position in the thermal management system, and determine whether temperature control effect needs to be adjusted in a next step, a temperature-pressure sensor like a temperature-pressure sensor P10, a temperature-pressure sensor P11, a temperature-pressure sensor P12, or a temperature-pressure sensor P13 may be further disposed at each key position in the thermal management system. The temperature-pressure sensor P10 is disposed on an outlet of the compressor, and is configured to detect a temperature and a pressure of a refrigerant output from the compressor. The temperature-pressure sensor P11 is disposed on an outlet of the second heat exchange pipe, and is configured to detect a temperature and a pressure that are output from the second heat exchange pipe. The temperature-pressure sensor P12 is disposed at a water inlet of the battery, and is configured to detect a temperature and pressure of the battery. The temperature-pressure sensor P13 is disposed at a water inlet of the electrical driver, and is configured to detect a temperature and pressure of the electrical driver. It should be understood that the foregoing illustrated key positions are merely examples for description and that this application is not limited to these key positions.

In this embodiment of this application, a modular design may be further implemented for the components of the thermal management system in an integration mode. The modular design means that components with similar functions or structures (or randomly selected components) are integrated into one module. This not only helps reduce the occupied space, but also can freely combine the modules, and improve design flexibility. The modular design may be implemented in a plurality of solutions. Examples of the solutions are as follows:

In an optional implementation, various valve components in the thermal management system may be integrated into a first integrated unit (referred to as a valve assembly). A valve component is a component capable of controlling flowing of liquid. The valves may include several of the twelfth valve body, the nine-way valve, the first water pump 11, the second water pump 12, the third water pump 10, the fourth water pump 13, and the tank. The following describes several possible integration modes of a valve assembly by using examples.

FIG. 2A is a diagram of a structure of an example of an integration mode according to Embodiment 1 of this application. As shown in FIG. 2A, in this integration mode, the nine-way valve, the first water pump 11, the third water pump 10, and the fourth water pump 13 are integrated into a first integrated unit.

FIG. 2B is a diagram of a structure of another integration mode according to Embodiment 1 of this application. As shown in FIG. 2B, in this integration mode, the first valve body, the nine-way valve, the first water pump 11, the third water pump 10, the second water pump 12, and the fourth water pump 13 are integrated into a valve assembly. The valve assembly in this mode integrates more components than that in the mode in FIG. 2A, and therefore has a lighter structure.

FIG. 3A is a diagram of a structure of another integration mode according to Embodiment 1 of this application. As shown in FIG. 3A, in this integration mode, the water-cooled condenser 2, the water-cooled evaporator 3, and the heater are integrated into a refrigerant component assembly, and the first throttle valve 14 disposed on a side port of a battery cooler may also be integrated into the refrigerant component assembly.

FIG. 3B is a diagram of a structure of another integration mode according to Embodiment 1 of this application. As shown in FIG. 3B, in this integration mode, the water-cooled condenser 2, the water-cooled evaporator 3, the heater, the compressor 1, and the heat-recovery liquid collector 8a are integrated into a refrigerant component assembly, and the first throttle valve 14 disposed on a side port of a battery cooler may also be integrated into the refrigerant component assembly.

FIG. 4 is a diagram of a structure of another integration mode according to Embodiment 1 of this application. As shown in FIG. 4, in this integration mode, all plate heat exchanger components and valves in the thermal management system are integrated into a same element assembly. The plate heat exchanger components may include one or more of the water-cooled condenser 2, the water-cooled evaporator 4, the heater, the compressor 1, and the heat-recovery liquid collector. Each valve component may include one or more of the nine-way valve, the first water pump 11, the third water pump 10, the second water pump 12, the tank, and the first valve body 27. In this mode, more components are integrated, and therefore the structure is lighter.

In the foregoing several implementations, integrating various components (excluding the front-end cooling module) in the passenger cabin of the electric vehicle not only helps reduce structural complexity of the thermal management system and the occupied space, but also can shorten routes between the components by using the compact structure arrangement, and help resolve a problem that components of a thermal management system are dispersed in an electric vehicle and that a pipeline is excessively long in a current phase. When a coolant or refrigerant circulates in such a short circulation link, a pressure loss of the coolant or refrigerant in a circulation process is reduced, and efficiency of the refrigerant loop is improved. In addition, in this integration mode, modular components that are easy to maintain and carry can be made.

It should be noted that in Embodiment 1 of this application, another component may be further integrated, and integration may be performed based on the valve body assembly or another component. Details are not described herein.

The following first describes several loops that can be formed based on the thermal management system shown in FIG. 1A as examples. In the following several loops, the first valve body 27 is a first three-way valve, and the second valve body is a first one-way valve.

Refrigerant loop: The loop includes a third loop, and a refrigerant such as Freon is preconfigured in the loop. Refrigerant gas in the loop is compressed by the compressor into high-temperature and high-pressure refrigerant gas, and then returns to the compressor through the third heat exchange pipe and the second heat exchange pipe in sequence. After the high-temperature and high-pressure refrigerant gas output from the compressor undergoes heat exchange processing between the third heat exchange pipe and the fourth heat exchange pipe, a low-temperature refrigerant liquid is obtained (correspondingly, a high-temperature coolant is obtained through heat exchange by using the fourth heat exchange pipe). The low-temperature refrigerant liquid flows into the second heat exchange pipe, and after heat exchange processing is performed between the second heat exchange pipe and the first heat exchange pipe, high-temperature refrigerant gas is obtained (correspondingly, a low-temperature coolant is obtained through heat exchange by using the first heat exchange pipe).

First coolant loop: The loop includes the fourth loop, and a coolant, for example, a liquid mixture of water and ethanol, is preconfigured in the loop. The coolant in the loop is driven by the third water pump 10 to return to the first water pump 10 after passing through the inlet a14 of the fourth heat exchange pipe, the outlet a13 of the fourth heat exchange pipe, the heater core, the sixth end a28 of the valve body assembly, and the fifth end a21 of the valve body assembly in sequence. When the refrigerant loop is connected, the fourth heat exchange pipe can exchange heat to obtain a high-temperature coolant, and the high-temperature coolant circulates in the first coolant loop, thereby heating the heater core. When the refrigerant loop is closed, the fourth heat exchange pipe cannot perform a heat exchange operation, and therefore a normal-temperature coolant circulates in the first coolant loop.

Second coolant loop: The loop includes the first loop and the second loop, and a coolant is preconfigured in the loop. The coolant in the loop is driven by the first water pump 11 to flow through the outlet a34 of the first heat exchange pipe, the third water pump 11, the cooler core, the second end a27 of the valve body assembly, the fourth end a22 of the valve body assembly, the first valve body 27, the third end a23 of the valve body assembly, the first end a26 of the valve body assembly, and the inlet a33 of the first heat exchange pipe in sequence, to form a loop. When the refrigerant loop is connected, the first heat exchange pipe can exchange heat to obtain a low-temperature coolant, and the low-temperature coolant circulates in the second coolant loop, to cool the cooler core or enter the valve body assembly to cool the battery. When the refrigerant loop is closed, the first heat exchange pipe cannot perform a heat exchange operation, and therefore a normal-temperature coolant circulates in the second coolant loop.

Third coolant loop: The loop includes the first loop and the second loop, and a coolant is preconfigured in the loop. The coolant in the loop is driven by the first water pump 11 and the second water pump 12 to flow from the second water pump 12 and return to the second water pump 12 after passing through the battery, the third end a23 of the valve body assembly, the first end a26 of the valve body assembly, the first heat exchange pipe, the first water pump 11, the cooler core, the second end a27 of the valve body assembly, the fourth end a22 of the valve body assembly, and the first valve body 27 in sequence. The third coolant loop is an active cooling loop of the battery. The low-temperature coolant is partially distributed while flowing through the first valve body 27, so that a water path of a battery module reaches an expected cooling temperature. From another perspective, the first heat exchange pipe may alternatively absorb heat from the battery by using the third coolant loop, to implement a function of recycling residual heat of the battery, and meet a heating requirement in winter. When the refrigerant loop is closed, the first heat exchange pipe cannot perform a heat exchange operation, and therefore a normal-temperature coolant circulates in the third coolant loop.

Fourth coolant loop: The loop includes the first loop, the second loop, and the fifth loop, and a coolant is preconfigured in the loop. The coolant in the loop is driven by the first water pump 11, the second water pump 12, and the fourth water pump 13 to flow from the second water pump 12 and return to the second water pump 12 after passing through the battery, the third end a23 of the valve body assembly, the seventh end a25 of the valve body assembly, the cooler, the electrical driver, the fourth water pump 13, the eighth end a24 of the valve body assembly, the first end a26 of the valve body assembly, the first heat exchange pipe, the first water pump 11, the cooler core, the second end a27 of the valve body assembly, the fourth end a22 of the valve body assembly, and the first valve body 27 in sequence. The third coolant loop is an active and passive cooling loop of the battery. The low-temperature coolant is partially distributed while flowing through the first valve body 27, so that a water path of a battery module reaches an expected cooling temperature. The fourth coolant loop is similar to the third coolant loop, except that the coolant in the third coolant loop flows through the valve body assembly and then directly flows to the first heat exchange pipe for cooling, but the coolant in the fourth coolant loop flows through the valve body assembly and then is cooled by the front-end cooling module. Therefore, the fourth coolant loop is capable of cooling both the battery and the electrical driver, regardless of whether the first refrigerant loop is connected. When the first refrigerant loop is connected, the coolant in the fourth coolant loop may be cooled through active heat exchange by using the first heat exchange pipe, and then cooled by using the front-end cooling module for a second time. Therefore, cooling effect is good. From another perspective, the first heat exchange pipe may alternatively absorb heat from the battery and the environment by using the fourth coolant loop, to implement a function of recycling residual heat of the battery, and meet a heating requirement in winter. However, when the first refrigerant loop is closed, the coolant in the fourth coolant loop is cooled only by the front-end cooling module. Therefore, the battery and the electrical driver are actually cooled based on a natural ambient temperature.

Fifth coolant loop: The loop includes the second loop and the fourth loop, and a coolant is preconfigured in the loop. The coolant in the loop is driven by the third water pump 10 and the second water pump 12 to flow from the second water pump 12 and return to the second water pump 12 after passing through the battery, the third end a23 of the valve body assembly, the fifth end a21 of the valve body assembly, the third water pump 10, the fourth heat exchange pipe, the heater core, the sixth end a28 of the valve body assembly, the fourth end a22 of the valve body assembly, and the first valve body 27 in sequence. The fifth coolant loop is an active heating loop of the battery. The high-temperature coolant is partially distributed when flowing through the first valve body 27, so that a water path of a battery module reaches an expected cooling temperature. When both the battery and the passenger cabin need to be heated, a second fan may first heat air by using the heater core and then blow the heated air into the passenger cabin. If not much heat is consumed in this process, the coolant with remaining heat may further flow to the battery through the third water pump 10 and the second water pump 12, to heat both the passenger cabin and the battery. When the refrigerant loop is closed, the fourth heat exchange pipe cannot perform a heat exchange operation, and therefore a normal-temperature coolant circulates in the fifth coolant loop.

Sixth coolant loop: The loop includes the fifth loop, and a coolant is preconfigured in the loop. The coolant in the loop is driven by the fourth water pump 13 to flow from the fourth water pump 13 and return to the fourth water pump 13 after passing through the eighth end a24 of the valve body assembly, the seventh end a25 of the valve body assembly, the cooler, and the electrical driver in sequence. The loop is an electrical driver cooling loop, and the coolant flows to the electrical driver after being cooled by using the front-end cooling module, thereby cooling the electrical driver naturally. If a temperature of the electrical driver is excessively low, one part of the coolant output from the fourth water pump 13 may be directly transmitted to the electrical driver through the ninth end a29 of the valve body assembly, and the other part is transmitted to the electrical driver through the seventh end a25 of the valve body assembly and the cooler. In this way, a temperature of the coolant obtained by combining the coolants in the two branches increases, to help alleviate cooling effect of the electrical driver.

Seventh coolant loop: The loop includes the first loop and the fifth loop, and a coolant is preconfigured in the loop. The coolant in the loop is driven by the first water pump 11 and the fourth water pump 13 to flow from the fourth water pump 13 and return to the fourth water pump 13 after passing through the eighth end a24 of the valve body assembly, the first end a26 of the valve body assembly, the first heat exchange pipe, the first water pump 11, the cooler core, the second end a27 of the valve body assembly, the seventh end a25 of the valve body assembly, the cooler, and the electrical driver in sequence. The loop is an electrical driver cooling loop, and the coolant flows to the electrical driver after passing through the first heat exchange pipe and a front-end cooler in sequence for cooling, so as to actively cool the electrical driver. From another perspective, the first heat exchange pipe may alternatively absorb heat from the electrical driver and the environment by using the seventh coolant loop, to implement a function of recycling residual heat of the electrical driver, and meet a heating requirement in winter. If a temperature of the seventh coolant loop is higher than the ambient temperature during heating, the coolant output from the fourth water pump 13 may be directly transmitted to the electrical driver through the ninth end a29 of the valve body assembly, to avoid a waste caused by heat dissipation into an external environment.

Eighth coolant loop: The loop includes the fourth loop and the fifth loop, and a coolant is preconfigured in the loop. The coolant in the loop is driven by the third water pump 10 and the fourth water pump 13 to flow from the third water pump 10 and return to the third water pump 10 after passing through the fourth heat exchange pipe, the heater core, the sixth end a28 of the valve body assembly, the seventh end a25 of the valve body assembly, the cooler, the electrical driver, the fourth water pump 13, the eighth end a24 of the valve body assembly, and the fifth end a21 of the valve body assembly in sequence. The coolant loop is an active heating loop of the electrical driver. From another perspective, the second heat exchange pipe may alternatively discharge heat from the electrical driver and the environment by using the eighth coolant loop, to meet a cooling requirement in summer.

Ninth coolant loop: The loop includes the second loop, and a coolant is preconfigured in the loop. The coolant in the loop is driven by the second water pump 12 to flow from the second water pump 12 and return to the second water pump 12 after passing through the battery and the second one-way valve 7 (the second valve body) in sequence. The coolant loop is a battery temperature-equalization loop. The separate temperature-equalization coolant loop implements a battery temperature equalization function without affecting the switching between other modes.

Tenth coolant loop: The loop includes the second loop and the fifth loop, and a coolant is preconfigured in the loop. The coolant in the loop is driven by the second water pump 12 and the fourth water pump 13 to flow from the fourth water pump 13 and return to the fourth water pump 13 after passing through the eighth end a24 of the valve body assembly, the fourth end a22 of the valve body assembly, the twelfth three-way valve 27, the second water pump 12, the battery, the third end a23 of the valve body assembly, the seventh end a25 of the valve body assembly, the cooler, and the electrical driver in sequence. The loop is an electrical driver and battery cooling loop, and the coolant flows to the electrical driver after being cooled by using the front-end cooling module, thereby cooling the electrical driver and the battery naturally. If a temperature of the electrical driver or the battery is excessively low, one part of the coolant output from the fourth water pump 13 may be directly transmitted to the electrical driver through the ninth end a29 of the valve body assembly, and the other part is transmitted to the electrical driver through the seventh end a25 of the valve body assembly and the cooler. In this way, a temperature of the coolant obtained by combining the coolants in the two branches increases, to help alleviate cooling effect of the electrical driver and the battery.

It should be understood that only several possible loops are described as examples. The thermal management system may further form more loops. Details are not described herein.

Based on the foregoing several loops, the following describes some modes that can be implemented by the thermal management system in Embodiment 1 of this application as examples. In this embodiment of this application, a controller may be further disposed in the electric vehicle. A control end of each valve component, a control end of each water pump, and an output end of each temperature-pressure sensor in the thermal management system may be further connected to the controller. The controller can not only implement different temperature modes by controlling each valve component and each water pump, but also obtain a temperature and pressure at each key position from the output end of each temperature-pressure sensor in a control process, and determine, based on the temperature and pressure at each key position, whether the current temperature and pressure meet requirements of a current temperature mode. If the current temperature and pressure do not meet the requirements, the controller may perform a real-time adjustment, to adjust the temperature and pressure based on the current temperature mode.

M10: Mode of cooling both the passenger cabin and the battery

FIG. 5A is a diagram of a structure of the thermal management system in a mode of cooling both the passenger cabin and the battery according to Embodiment 1 of this application. As shown in FIG. 5A, in an M10 mode, a controller may connect the second end a27 of the valve body assembly to the fourth end a22 of the valve body assembly, connect the third end a23 of the valve body assembly to the first end a26 of the valve body assembly, open the first throttle valve 14, and start the first water pump 11 and the second water pump 12. In this case, the refrigerant loop and the third coolant loop are connected. High-temperature and high-pressure refrigerant gas output from the compressor passes through the third heat exchange pipe for heat exchange and is throttled by using the first throttle valve 14 to obtain a low-temperature and low-pressure refrigerant liquid. The low-temperature and low-pressure refrigerant liquid is transmitted to the second heat exchange pipe to evaporate and absorb heat. The second heat exchange pipe performs heat exchange with the first heat exchange pipe, so that the coolant in the first heat exchange pipe is cooled to obtain a low-temperature coolant. The low-temperature coolant returns to the first heat exchange pipe after passing through the cooler core, the second end a27 of the valve body assembly, the fourth end a22 of the valve body assembly, the first three-way valve (the first valve body) 27, the second water pump 12, the battery, the third end a23 of the valve body assembly, and the first end a26 of the valve body assembly in sequence, to cool the passenger cabin and battery in sequence. The air conditioner box assembly 3 may open an opening corresponding to the cooler core, so that an air conditioner in the passenger cabin is set to a full cooling mode, and the heater is not started. Therefore, the coolant flowing through the heater core flows through the air conditioner box assembly only as a bypass, and does not greatly affect a temperature of a cab.

In an optional implementation, the controller may further obtain, in real time or periodically, a temperature of an air outlet of the air conditioner box assembly in the passenger cabin and data that is of a water inlet of the battery and that is collected by a temperature-pressure sensor P 12, to determine a temperature of the passenger cabin and a temperature of the battery. When the temperature of the passenger cabin or the temperature of the battery does not meet a requirement of the M10 mode, the controller may adjust an opening degree of the first throttle valve 14 to change an amount of a refrigerant in the refrigerant loop, so as to adjust the temperature of the passenger cabin and the temperature of the battery. For example, it is assumed that it is specified that the temperature of the passenger cabin does not exceed 28 degrees and that the temperature of the battery does not exceed 30 degrees in the M10 mode, when a detected temperature of the passenger cabin exceeds 28 degrees, the controller may increase the opening degree of the first throttle valve 14 to enable more refrigerant liquid to flow through the cooler core (which is implemented by automatically changing the amount of stored refrigerant liquid by the liquid storage tank or the gas-liquid separation apparatus), to improve cooling effect of the cooler core and improve cooling effect of the passenger cabin. In addition, to prevent the battery from being directly impacted by a cold coolant, the first three-way valve 27 is used to distribute a part of the coolant and battery loop mixed flow, so as to meet a battery cooling requirement.

In this embodiment of this application, a scenario to which the M10 mode is applicable is, for example, that the user drives the electric vehicle in summer. In this scenario, the temperatures of both the passenger cabin and the battery may be high. Battery overheating may cause an accident like a battery explosion, affecting physical and psychological safety of the user. However, overheating of the passenger cabin may reduce user experience. For example, if the user is in an overheating environment for a long time, the user may have a heat stroke. Therefore, if the foregoing manner is used to adjust the thermal management system to satisfy the connection relationship required in the M10 mode, both the passenger cabin and the battery can be cooled. This improves user experience while ensuring safety.

M11: Mode of cooling only the passenger cabin

FIG. 5B is a diagram of an example of a connection relationship of the thermal management system in a mode of cooling only the passenger cabin. As shown in FIG. 5B, in an M11 mode, the second end a27 of the valve body assembly is connected to the fourth end a22 of the valve body assembly, the third end a23 of the valve body assembly is connected to the first end a26 of the valve body assembly, the first throttle valve 14 is opened, and the first water pump 11 is started. When the first three-way valve 27 enables only ports of the third end a23 and the fourth end a22 of the valve body assembly to be connected, no low-temperature coolant flows through the battery. Therefore, the battery is not cooled. In this case, the refrigerant loop is connected, and the second coolant loop is connected. High-temperature and high-pressure refrigerant gas output from the compressor passes through the first heat exchange pipe for heat exchange and is throttled by using the first throttle valve 14 to obtain a low-temperature and low-pressure refrigerant liquid. The low-temperature and low-pressure refrigerant liquid is transmitted to the second heat exchange pipe to evaporate and absorb heat. The second heat exchange pipe performs heat exchange with the first heat exchange pipe, so that the coolant in the first heat exchange pipe is cooled to obtain a low-temperature coolant. The low-temperature coolant returns to the first heat exchange pipe after passing through the cooler core, the second end a27 of the valve body assembly, the fourth end a22 of the valve body assembly, the first three-way valve 27, the third end a23 of the valve body assembly, and the first end a26 of the valve body assembly in sequence, to cool the passenger cabin. An air conditioner in the passenger cabin may be set to a full cooling mode, and the heater is not started. Therefore, the coolant flowing through the heater core flows through the air conditioner box assembly only as a bypass, and does not greatly affect a temperature of a cab.

In an optional implementation, the controller may further obtain a temperature of an air outlet of the air conditioner box in the passenger cabin in real time or periodically, to determine a temperature of the passenger cabin. When the temperature of the passenger cabin is higher than a temperature specified in the M11 mode, the controller may increase an opening degree of the first throttle valve and increase a rotational speed of the compressor. In this way, the compressor may obtain refrigerant gas with a higher pressure and a higher temperature through compression. When the refrigerant gas passes through the water-cooled condenser, more refrigerant liquids are obtained. Further, after the refrigerant liquid passes through the first throttle valve with the increased opening degree, more refrigerant liquids enter the second heat exchange pipe. This helps reduce a coolant temperature of the first heat exchange pipe, and improve cooling effect of the passenger cabin. When the temperature of the passenger cabin is lower than the temperature specified in the M11 mode, the controller may decrease the opening degree of the first throttle valve 14 and decrease the rotational speed of the compressor to reduce the cooling effect of the passenger cabin and avoid discomfort to a user.

In this embodiment of this application, a scenario to which the M11 mode is applicable is, for example, that the user often needs to first lower a temperature of the passenger cabin before entering the passenger cabin to drive the electric vehicle in summer. In this scenario, the temperature of the passenger cabin is quite high, but a temperature of the battery is not high because the electric vehicle is not started. Therefore, if the foregoing manner is used to adjust the thermal management system to satisfy the connection relationship required in the M11 mode, only the passenger cabin can be cooled. In addition, this manner further helps save power and improve endurance of the electric vehicle while meeting a user requirement.

M12: Mode of cooling only the battery

FIG. 5C may be also a diagram of an example of a connection relationship of the thermal management system in a mode of cooling only the battery. As shown in FIG. 5C, in an M12 mode, a controller may connect the second end a27 of the valve body assembly to the fourth end a22 of the valve body assembly, connect the third end a23 of the valve body assembly to the first end a26 of the valve body assembly, open the first throttle valve 14, and start the first water pump 11 and the second water pump 12. In this case, the refrigerant loop and the third coolant loop are connected. High-temperature and high-pressure refrigerant gas output from the compressor passes through the third heat exchange pipe and the fourth heat exchange pipe for heat exchange, and is throttled by using the first throttle valve to obtain a low-temperature and low-pressure refrigerant liquid. The low-temperature and low-pressure refrigerant liquid is transmitted to the second heat exchange pipe to evaporate and absorb heat. The second heat exchange pipe performs heat exchange with the first heat exchange pipe, so that the coolant in the first heat exchange pipe is cooled to obtain a low-temperature coolant. The low-temperature coolant returns to the first heat exchange pipe after passing through the cooler core, the second end a27 of the valve body assembly, the fourth end a22 of the valve body assembly, the first three-way valve 27, the second water pump 12, the battery, the third end a23 of the valve body assembly, and the first end a26 of the valve body assembly in sequence, to cool the battery. The air conditioner box assembly 3 may close the cooler core and an opening corresponding to the cooler core, so that an air conditioner in the passenger cabin is set to a full cooling mode. In this case, the coolant flowing through the cooler core flows through the air conditioner box, and does not greatly affect a temperature of a cab.

In an optional implementation, the controller may further obtain a temperature of a water inlet of the battery in real time or periodically, to determine a temperature of the battery. When the temperature of the battery is higher than a temperature specified in the M12 mode, the controller may increase an opening degree of the first throttle valve and increase a rotational speed of the compressor. In this way, the compressor may obtain refrigerant gas with a higher pressure and a higher temperature through compression. When the refrigerant gas passes through the water-cooled condenser, more refrigerant liquids are obtained. Further, after the refrigerant liquid passes through the first throttle valve with the increased opening degree, more refrigerant liquids enter the second heat exchange pipe. This helps increase cooling effect of the second heat exchange pipe on cooling water in the first heat exchange pipe, and further increases cooling effect on the coolant, and improves cooling effect of the battery. When the temperature of the battery is lower than the temperature specified in the M12 mode, the controller may decrease the opening degree of the first throttle valve and decrease the rotational speed of the compressor, to reduce cooling effect on the battery.

In this embodiment of this application, a scenario to which the M12 mode is applicable is, for example, that the user drives the electric vehicle in spring and autumn. In this scenario, the temperature of the passenger cabin is appropriate, but the temperature of the battery may be high because the battery is always providing power. Therefore, if the foregoing manner is used to adjust the thermal management system to satisfy the connection relationship required in the M12 mode, only the battery can be cooled. This helps avoid overheating of the battery and ensure safety of the user.

M13: Mode of cooling the battery but heating the passenger cabin

FIG. 5D1 and FIG. 5D2 are diagrams of an example of a connection relationship of the thermal management system in a mode of cooling the battery but heating the passenger cabin. As shown in FIG. 5D1 and FIG. 5D2, in an M13 mode, a controller may connect the second end a27 of the valve body assembly to the fourth end a22 of the valve body assembly, connect the third end a23 of the valve body assembly to the first end a26 of the valve body assembly, connect the sixth end a28 of the valve body assembly to the fifth end a21 of the valve body assembly, open the first throttle valve 14, and start the first water pump 11, the third water pump 10, and the second water pump 12. Alternatively, the connector may connect the second end a27 of the valve body assembly in FIG. 5D2 to the fourth end a22 of the valve body assembly, connect the third end a23 of the valve body assembly to the first end a26 of the valve body assembly, connect the sixth end a28 of the valve body assembly to the seventh end a25 of the valve body assembly, connect the eighth end a24 of the valve body assembly to the sixth end a21 of the valve body assembly, open the first throttle valve 14, and start the first water pump 11, the third water pump 10, the second water pump 12, and the fourth water pump 13. In this case, the refrigerant loop, the first coolant loop, and the third coolant loop are connected, or the refrigerant loop, the first coolant loop, and the eighth coolant loop are connected. High-temperature and high-pressure refrigerant gas output from the compressor passes through the third heat exchange pipe for heat exchange and is throttled by using the first throttle valve to obtain a low-temperature and low-pressure refrigerant liquid. The low-temperature and low-pressure refrigerant liquid returns to the compressor after being evaporated in the second heat exchange pipe. A refrigerant liquid in a refrigerant loop passes through the third heat exchange pipe and the second heat exchange pipe to separately provide heat and a cooling capacity for the coolant in the fourth heat exchange pipe and the coolant in the first heat exchange pipe. In this case, a high-temperature coolant in the first coolant loop passes through the heater core from the fourth heat exchange pipe, and an air conditioner box in the passenger cabin starts a full heating mode. Therefore, an air conditioner first heats air by using the heater core, and then blows out warm air. A low-temperature coolant in the third coolant loop returns to the fourth heat exchange pipe after passing through the cooler core, the second end a27 of the valve body assembly, the fourth end a22 of the valve body assembly, the first three-way valve 27, the second water pump 12, the battery, the third end a23 of the valve body assembly, and the first end a26 of the valve body assembly, to cool the battery.

In an optional implementation, the controller may further obtain a temperature of an air outlet of the passenger cabin in real time or periodically, to determine a temperature of the passenger cabin. When the temperature of the passenger cabin is lower than a temperature specified in the M13 mode, the controller may increase a rotational speed of the compressor, and increase a temperature and a pressure of the refrigerant in the third heat exchange pipe, to improve heating effect of the coolant in the fourth heat exchange pipe, so as to heat the passenger cabin. When the temperature of the passenger cabin is higher than the temperature specified in the M13 mode, the controller controls the first coolant loop to switch to the eighth coolant loop for circulating the high-temperature coolant to the front-end cooler, to take away more heat. In addition, the controller may further adjust the opening degree of the first throttle valve 14 and the rotational speed of the compressor, so that a temperature of inlet water of the battery reaches an expectation. For a specific adjustment manner, refer to the foregoing content. Details are not described herein again.

In this embodiment of this application, a scenario to which the M13 mode is applicable is, for example, that the user drives the electric vehicle to move quickly in winter, or drives the electric vehicle uphill. In this scenario, the temperature of the passenger cabin is low due to impact of an external environment. However, because the quick movement or uphill movement consumes more power, the temperature of the battery is higher. Therefore, if the foregoing manner is used to adjust the thermal management system to satisfy the connection relationship required in the M13 mode, the battery can be cooled while the passenger cabin is heated. This not only helps improve comfort of the user, but also can avoid overheating of the battery and ensure safety of the user.

M14: Mode of naturally cooling the battery

FIG. 5E is a diagram of an example of a connection relationship of the thermal management system in a mode of naturally cooling the battery. As shown in FIG. 5E, in an M14 mode, a controller may connect the fourth end a22 of the valve body assembly to the eighth end a24 of the valve body assembly, connect the seventh end a25 of the valve body assembly to the third end a23 of the valve body assembly, close the first throttle valve, start the second water pump 12 and the fourth water pump 13. In this case, the tenth coolant loop is connected. A coolant in the tenth coolant loop first flows to the front-end cooling module and is cooled at a temperature in a natural environment, and then flows to the electrical driver and the battery in sequence to cool the electrical driver and the battery.

In this embodiment of this application, a scenario to which the M14 mode is applicable is, for example, that the electric vehicle is charged. In this scenario, the battery may be hot when being charged, but this heating is a safe phenomenon specified by factory settings. Therefore, if the foregoing manner is used to adjust the thermal management system to satisfy the connection relationship required in the M14 mode, only the front-end cooling module can be used to naturally cool the battery without starting the compressor to forcibly cool the battery. This saves more power.

M15: Mode of naturally cooling the motor

FIG. 5F is a diagram of an example of a connection relationship of the thermal management system in a mode of naturally cooling the motor. As shown in FIG. 5F, in an M15 mode, a controller may connect the eighth end a24 of the valve body assembly to the seventh end a25 of the valve body assembly, close first throttle valve, and start the fourth water pump 13. In this case, the sixth coolant loop is connected, a coolant in the sixth coolant loop first flows to the front-end cooling module and then is cooled at a temperature in a natural environment, and then flows to the electrical driver to cool the electrical driver.

In this embodiment of this application, a scenario to which the M15 mode is applicable is, for example, braking in a process of driving the electric vehicle. In this scenario, the braking may cause heating of the electrical driver, and the heating will end in a short time, without requiring forcible cooling. Therefore, if the foregoing manner is used to adjust the thermal management system to satisfy the connection relationship required in the M15 mode, only the front-end cooling module can be used to naturally cool the electrical driver without starting the compressor to forcibly cool the electrical driver. This saves more power.

M16: Mode of heating both the passenger cabin and the battery

FIG. 5G is a diagram of an example of a connection relationship of the thermal management system in a mode of heating both the passenger cabin and the battery. As shown in FIG. 5G, in an M16 mode, a controller may connect the fourth end a22 of the valve body assembly to the sixth end a28 of the valve body assembly, connect the third end a23 of the valve body assembly to the first five ends a21 of the valve body assembly, enable the first three-way valve 27 to point to the battery, that is, two ports through which the first three-way valve 27 is connected to the second water pump 12 and the third end a23 of the valve body assembly are connected, open the first throttle valve 14, and start the third water pump 10 and the second water pump 12. In this case, the refrigerant loop, the fifth coolant loop, and the seventh coolant loop are connected. High-temperature and high-pressure refrigerant gas output from the compressor passes through the third heat exchange pipe and the fourth heat exchange pipe for heat exchange and is throttled by using the first throttle valve to obtain a low-temperature and low-pressure refrigerant liquid. The low-temperature and low-pressure refrigerant liquid returns to the compressor after being evaporated in the second heat exchange pipe. A refrigerant liquid in a refrigerant loop passes through the third heat exchange pipe and the second heat exchange pipe to separately provide heat and a cooling capacity for the coolant in the fourth heat exchange pipe and the coolant in the first heat exchange pipe. In this case, a high-temperature coolant in the fifth coolant loop passes through the heater core from the fourth heat exchange pipe, and an air conditioner box in the passenger cabin starts a full heating mode. Therefore, an air conditioner first heats air by using the heater core, and then blows out warm air. Then, the high-temperature coolant in the fifth coolant loop flows to the battery after passing through the sixth end a28 of the valve body assembly, the fourth end a22 of the valve body assembly, the first three-way valve 27 and the second water pump 12, and returns to the fourth heat exchange pipe after passing through the third end a23 of the valve body assembly and the fifth end a21 of the valve body assembly, to heat the battery. If a heating capability of the coolant cannot meet a heating requirement of the battery, the controller increases the rotational speed of the compressor, to improve heat absorption of the coolant in the fourth heat exchange pipe. If the heating effect is excessive, the controller may further control the opening degree of the first three-way valve 27 that points to the battery, and mixing and heating of the coolant in the battery, to achieve a proper heating temperature. A low-temperature coolant in the seventh coolant loop flows from the fourth heat exchange pipe, and returns to the first heat exchange pipe after passing through the cooler core, the second end a27 of the valve body assembly, the seventh end a25 of the valve body assembly, the cooler, the electrical driver, the eighth end a24 of the valve body assembly, and the first end a26 of the valve body assembly. A cooling capacity required by the system is implemented by recycling heat from the environment and electrical driver through the seventh coolant loop.

In this mode, energy of the refrigerant in the refrigerant loop can heat air in the air conditioner box assembly, so that the passenger cabin is heated. The energy can also heat the battery, thereby improving collaboration efficiency of each loop in the thermal management system.

In this embodiment of this application, a scenario to which the M16 mode is applicable is, for example, that the user sits in the passenger cabin of the electric vehicle in winter, but does not drive the electric vehicle. In this scenario, temperatures of the passenger cabin and the battery are low due to impact of the external environment. The low temperatures not only cause poor user experience, but also may cause a large electric energy loss because the battery is in a low temperature state for a long time. Consequently, endurance of the electric vehicle is reduced. Therefore, if the foregoing manner is used to adjust the thermal management system to satisfy the connection relationship required in the M16 mode, the battery can be heated while the passenger cabin is heated. This helps protect battery power and improve user experience.

M17: Mode of heating the battery and dehumidifying the passenger cabin

FIG. 5H is a diagram of an example of a connection relationship of the thermal management system in a mode of heating the battery and dehumidifying the passenger cabin. As shown in FIG. 5H, in an M17 mode, a controller may connect the second end a27 of the valve body assembly to the seventh end a25 of the valve body assembly, connect the eighth end a24 of the valve body assembly to the first end a26 of the valve body assembly, connect the sixth end a28 of the valve body assembly to the fourth end a22 of the valve body assembly, connect the third end a23 of the valve body assembly to the fifth end a21 of the valve body assembly, open the first throttle valve 14, and start the first water pump 11, the third water pump 10, the fourth water pump 13, and the second water pump 12. In this case, the refrigerant loop, the fifth coolant loop, and the seventh coolant loop are connected. High-temperature and high-pressure refrigerant gas output from the compressor passes through the third heat exchange pipe and the fourth heat exchange pipe for heat exchange and is throttled by using the first throttle valve 14 to obtain a low-temperature and low-pressure refrigerant liquid. The low-temperature and low-pressure refrigerant liquid returns to the compressor after being evaporated in the second heat exchange pipe. A refrigerant liquid in a refrigerant loop passes through the third heat exchange pipe and the second heat exchange pipe to separately provide heat and a cooling capacity for the coolant in the fourth heat exchange pipe and the coolant in the first heat exchange pipe. In this case, a high-temperature coolant in the fifth coolant loop passes through the heater core from the fourth heat exchange pipe, and then the high-temperature coolant in the fifth coolant loop flows to the battery after passing through the sixth end a28 of the valve body assembly, the fourth end a22 of the valve body assembly, the first three-way valve 27 and the second water pump 12, and returns to the fourth heat exchange pipe after passing through the third end a23 of the valve body assembly and the fifth end a21 of the valve body assembly, to heat the battery. A low-temperature coolant in the seventh coolant loop enters the cooler core from an outlet of the first heat exchange pipe. An air conditioner in the passenger cabin starts a dehumidification mode. Inlet air of the passenger cabin is first cooled and dehumidified by using the cooler core and then is heated by using the heater core. Then, the coolant returns to the first heat exchange pipe after passing through the second end a27 of the valve body assembly, the seventh end a25 of the valve body assembly, the cooler, the electrical driver, the fourth water pump 13, the eighth end a24 of the valve body assembly, and the first end a26 of the valve body assembly. In this case, the electrical driver of the battery has a heating requirement, and the cooling capacity is excessive. Therefore, a specific cooling capacity is output to the outside through the cooler. If a heating capability of the coolant cannot meet the heating requirement of the battery, the controller increases the rotational speed of the compressor and increases heat absorption of the coolant in the fourth heat exchange pipe. In this case, the controller may further control the opening degree of the first three-way valve 27 that points to the battery, and water-mixing and heating of the coolant in the battery, to achieve a proper heating temperature.

In this embodiment of this application, a scenario to which the M17 mode is applicable is, for example, that the user sits in the passenger cabin of the electric vehicle in wet winter, but does not drive the electric vehicle. In this scenario, a temperature of the battery is low due to impact of the external environment, and humidity of the passenger cabin is high due to impact of the external environment. Therefore, if the foregoing manner is used to adjust the thermal management system to satisfy the connection relationship required in the M17 mode, the passenger cabin can be dehumidified while the battery is heated. This helps protect battery power and improve user experience.

M18: Mode of heating only the passenger cabin

FIG. 5I is a diagram of an example of a connection relationship of the thermal management system in a mode of heating only the passenger cabin. As shown in FIG. 5I, in an M18 mode, a controller may connect the fifth end a21 of the valve body assembly to the sixth end a28 of the valve body assembly, connect the second end a27 of the valve body assembly to the seventh end a25 of the valve body assembly, connect the eighth end a24 of the valve body assembly to the first end a26 of the valve body assembly, open the first throttle valve 14, and start the first water pump 11, the third water pump 10, and the fourth water pump 13. In this case, the refrigerant loop, the first coolant loop, and the seventh coolant loop are connected. High-temperature and high-pressure refrigerant gas output from the compressor passes through the third heat exchange pipe and the fourth heat exchange pipe for heat exchange and is throttled by using the first throttle valve 14 to obtain a low-temperature and low-pressure refrigerant liquid. The low-temperature and low-pressure refrigerant liquid returns to the compressor after being evaporated in the second heat exchange pipe. A refrigerant liquid in a refrigerant loop passes through the third heat exchange pipe and the second heat exchange pipe to separately provide heat and a cooling capacity for the coolant in the fourth heat exchange pipe and the coolant in the first heat exchange pipe. In this case, a high-temperature coolant in the fifth coolant loop passes through the heater core from the fourth heat exchange pipe, and an air conditioner box in the passenger cabin starts a full heating mode. Therefore, an air conditioner first heats air by using the heater core, and then blows out warm air. Then, the high-temperature coolant in the first coolant loop returns to the fourth heat exchange pipe after passing through the sixth end a28 of the valve body assembly and the fifth end a21 of the valve body assembly. A low-temperature coolant in the seventh coolant loop flows from the first heat exchange pipe, and returns to the fourth heat exchange pipe after passing through the cooler core, the second end a27 of the valve body assembly, the seventh end a25 of the valve body assembly, the cooler, the electrical driver, the eighth end a24 of the valve body assembly, and the first end a26 of the valve body assembly. A cooling capacity required by the system is implemented by recycling heat from the environment and electrical driver through the seventh coolant loop.

In this embodiment of this application, it may be understood that the valve body assembly is in a first working condition, and a scenario to which the M18 mode is applicable is, for example, that the user sits in the passenger cabin of the electric vehicle in winter, but an external ambient environment temperature is still within a range tolerable by the battery. Therefore, if the foregoing manner is used to adjust the thermal management system to satisfy the connection relationship required in the M18 mode, only the passenger cabin can be heated.

M19: Mode of heating only the battery

FIG. 5J is a diagram of an example of a connection relationship of the thermal management system in a mode of heating only the battery. As shown in FIG. 5J, in an M19 mode, a controller may connect the second end a27 of the valve body assembly to the seventh end a25 of the valve body assembly, connect the eighth end a24 of the valve body assembly to the first end a26 of the valve body assembly, connect the sixth end a28 of the valve body assembly to the fourth end a22 of the valve body assembly, connect the third end a23 of the valve body assembly to the fifth end a21 of the valve body assembly, open the first throttle valve 14, and start the first water pump 11, the second water pump 12, the third water pump 10, and the fourth water pump 13. In this case, the refrigerant loop, the fifth coolant loop, and the seventh coolant loop are connected. High-temperature and high-pressure refrigerant gas output from the compressor passes through the third heat exchange pipe and the fourth heat exchange pipe for heat exchange and is throttled by using the first throttle valve 14 to obtain a low-temperature and low-pressure refrigerant liquid. The low-temperature and low-pressure refrigerant liquid returns to the compressor after being evaporated in the second heat exchange pipe. A refrigerant liquid in a refrigerant loop passes through the third heat exchange pipe and the second heat exchange pipe to separately provide heat and a cooling capacity for the coolant in the fourth heat exchange pipe and the coolant in the first heat exchange pipe. In this case, a high-temperature coolant in the fifth coolant loop passes through the heater core from the fourth heat exchange pipe, an air conditioner in the passenger cabin is turned off, inlet air of the passenger cabin passes through the heater core and does not participate in heat exchange, then the high-temperature coolant in the fifth coolant loop flows to the battery after passing through the sixth end a28 of the valve body assembly, the fourth end a22 of the valve body assembly, the first three-way valve 27 and the second water pump 12, and returns to the fourth heat exchange pipe after passing through the third end a23 of the valve body assembly and the fifth end a21 of the valve body assembly, to heat the battery. A low-temperature coolant in the seventh coolant loop is output from the first heat exchange pipe and enters the cooler core, an air conditioner in the passenger cabin is turned off, inlet air of the passenger cabin passes through the cooler core and does not participate in heat exchange, then the coolant returns to the first heat exchange pipe after passing through the second end a27 of the valve body assembly, the seventh end a25 of the valve body assembly, the electrical driver, the fourth water pump 13, the eighth end a24 of the valve body assembly, and the first end a26 of the valve body assembly, to complete a process of absorbing heat from the electrical driver and the external environment. If a heating capability of the coolant cannot meet the heating requirement of the battery, the controller increases the rotational speed of the compressor 1 and increases heat absorption of the coolant in the fourth heat exchange pipe. In this case, the controller may further control the opening degree of the first three-way valve 27 that points to the battery, and water-mixing and heating of the coolant in the battery, to achieve a proper heating temperature.

In this embodiment of this application, a scenario to which the M19 mode is applicable is, for example, that a temperature of the battery is low due to impact of an external environment in winter, but the user is not cold or the user is not in the vehicle. To avoid a large electric energy loss and reduction of endurance of the electric vehicle because the battery is in a low-temperature state for a long time, the thermal management system may be adjusted in the foregoing manner to the connection relationship satisfied by the M19 mode, to implement a function of heating only the battery.

M20: Mode of dehumidifying the entire vehicle

FIG. 5K1 is a diagram of an example of a connection relationship of the thermal management system in a mode of dehumidifying the entire vehicle. As shown in FIG. 5K1, in an M20 mode, a controller may connect the second end a27 of the valve body assembly to the fourth end a22 of the valve body assembly, connect the third end a23 of the valve body assembly to the first end a26 of the valve body assembly, connect the sixth end a28 of the valve body assembly to the fifth end a21 of the valve body assembly, open the first throttle valve 14, and start the first water pump 11 and the third water pump 10. Alternatively, as shown in FIG. 5K2, the second end a27 of the valve body assembly may be connected to the fourth end a22 of the valve body assembly, the third end a23 of the valve body assembly may be connected to the first end a26 of the valve body assembly, the sixth end a28 of the valve body assembly may be connected to the seventh end a25 of the valve body assembly, the eighth end a24 of the valve body assembly may be connected to the fifth end a21 of the valve body assembly, the first throttle valve 14 is opened, and the first water pump 11, the third water pump 10, and the fourth water pump 13 are started. Alternatively, as shown in FIG. 5K3, the second end a27 of the valve body assembly may be connected to the seventh end a25 of the valve body assembly, the eighth end a24 of the valve body assembly may be connected to the first end a26 of the valve body assembly, the sixth end a28 of the valve body assembly may be connected to the fifth end a21 of the valve body assembly, the first throttle valve 14 is opened, and the first water pump 11, the third water pump 10, and the fourth water pump 13 are started. In this case, the refrigerant loop, the first coolant loop, and the second coolant loop are connected, or the refrigerant loop, the first coolant loop, and the eighth coolant loop are connected, or the refrigerant loop, the second coolant loop, and the seventh coolant loop are connected. High-temperature and high-pressure refrigerant gas output from the compressor passes through the third heat exchange pipe and the fourth heat exchange pipe for heat exchange and is throttled by using the first throttle valve to obtain a low-temperature and low-pressure refrigerant liquid. The low-temperature and low-pressure refrigerant liquid returns to the compressor after being evaporated in the second heat exchange pipe. A refrigerant liquid in a refrigerant loop passes through the third heat exchange pipe and the second heat exchange pipe to separately provide heat and a cooling capacity for the coolant in the fourth heat exchange pipe and the coolant in the first heat exchange pipe. In this case, a high-temperature coolant in the first coolant loop passes through the heater core from the fourth heat exchange pipe, and then returns to the second heat exchange pipe after passing through the sixth end a28 of the valve body assembly, the fifth end a21 of the valve body assembly, and the third water pump 10. A low-temperature coolant in the second coolant loop returns to the first heat exchange pipe after passing through the cooler core, the second end a27 of the valve body assembly, the fourth end a22 of the valve body assembly, the first three-way valve 27, the third end a23 of the valve body assembly, and the first end a26 of the valve body assembly. The air conditioner box in the passenger cabin starts a heating and dehumidification mode, and therefore, the air conditioner first cools and dehumidifies by using the cooler core, and then heats the air by using the heater core and blows out warm air. When a cooling capacity or heat of the system is excessive, the heat may alternatively be transferred to the environment through the seventh coolant loop and the eighth coolant loop respectively. For example, the M20 mode may be periodically executed based on a preset period, to maintain a dry environment in the entire electric vehicle, and improve user experience.

It should be understood that the foregoing describes only several modes that can be implemented by the thermal management system as examples. In this embodiment of this application, the thermal management system may further implement another mode in addition to the foregoing several modes. A same mode may be actually further implemented by using various different loops, and the mode is not limited to those described above. Details are not described in this application.

However, the thermal management system in Embodiment 1 can implement free switching between various cooling modes and various heating modes, including but not limited to M10 to M20. In this way, a plurality of different modes can be implemented by using fewer components. This can not only meet different user requirements, but also improve flexibility of mode switching and expand an application scope of the thermal management system.

It should be noted that, in the foregoing embodiment, different ports of the valve body assembly are controlled to be connected, so that the valve body assembly may be in different working conditions, or the thermal management system may be in a different working mode. When the first end of the valve body assembly is connected to the third end of the valve body assembly, the second end of the valve body assembly is connected to the fourth end of the valve body assembly, so that the coolant in the first loop may circulate to continuously provide a cooling capacity for the cooler core. In this case, the passenger cabin is in a cooling state. Specifically, the coolant may be driven by the first water pump to directly flow back to the third end of the valve body assembly after passing through the cooler core, the second end of the valve body assembly, the fourth end of the valve body assembly, and the first valve body, and flow back to the first heat exchange pipe after passing through the third end of the valve body assembly and the first end of the valve body assembly. After the first heat exchange pipe performs heat exchange with the outside, the coolant is driven by the first water pump to provide a cooling capacity for the cooler core. In this process, the coolant in the battery may be driven by the second valve body and the second water pump to internally circulate. In this way, a battery temperature is equalized and cooling of the passenger cabin is not affected. In addition, when driven by the first water pump to pass through the cooler core, the second end of the valve body assembly, the fourth end of the valve body assembly, and the first valve body, the coolant may alternatively enter the battery to flow back to the third end of the valve body assembly and flow back to the first heat exchange pipe after passing through the third end of the valve body assembly. After the first heat exchange pipe performs heat exchange with the outside, the coolant is driven by the first water pump to provide a cooling capacity for the cooler core. Energy for cooling the passenger cabin may further heat the battery, or the battery in the second loop may further equalize a temperature while cooling the passenger cabin, or the coolant in the battery in the second loop does not flow. In this way, collaboration efficiency of each loop in the thermal management system is improved.

In the foregoing embodiment, the valve body assembly may be a nine-way valve. On the first loop, a first end a26 of the nine-way valve is connected to the inlet a33 of the first heat exchange pipe, an outlet a34 of the first heat exchange pipe is connected to an inlet of the first water pump 11, an outlet of the first water pump 11 is connected to the cooler core, and an outlet of the cooler core is connected to a second end a27 of the nine-way valve. On the second loop, a fourth end a22 of the nine-way valve is configured to be connected to the second end of the battery, and the first end of the battery is configured to be connected to a third end a23 of the nine-way valve. On the fourth loop, a fifth end a21 of the nine-way valve is connected to an inlet of the third water pump 10, an outlet of the third water pump 10 is connected to the inlet a14 of the fourth heat exchange pipe, the outlet a13 of the fourth heat exchange pipe is connected to an inlet of the heater core, and an outlet of the heater core is connected to a sixth end a28 of the nine-way valve. On the fifth loop, a seventh end a25 of the nine-way valve is connected to an inlet of the cooler, an outlet of the cooler is connected to an inlet of the electrical driver, an outlet of the electrical driver is connected to an inlet of the tank, an outlet of the tank is connected to an inlet of the fourth water pump, and an outlet of the fourth water pump is connected to an eighth end a24 of the nine-way valve. A ninth end a29 of the nine-way valve is connected to a pipeline between the cooler and the electrical driver. Using the nine-way valve can simplify a structure of the thermal management system, improve convenience of controlling the valve body assembly, and help reduce space occupied by the thermal management system.

It can be learned from the foregoing content that, in Embodiment 1 of this application, components of the thermal management system are disposed in a same area as many as possible, so that various components are installed more compactly, and pipeline routes between the components may be short because of use of the nine-way valve. This not only helps reduce space occupied by the thermal management system, but also can reduce a pressure loss of a liquid when the liquid circulates along a pipeline, and improve cooling efficiency or heating efficiency of the thermal management system.

In the foregoing embodiment, the nine-way valve may specifically include a three-way valve, a four-way valve, and a five-way valve. Specifically, refer to FIG. 5L. A first port V1 of the three-way valve is connected to a fifth port V5 of the five-way valve, and a second port V2 of the three-way valve is connected to an inlet of the cooler, that is, the second port V2 of the three-way valve is equivalent to the seventh end a25 of the nine-way valve. A third end V3 of the three-way valve is connected to a pipeline between the cooler and the electrical driver, that is, the third port of the three-way valve is equivalent to the ninth end a29 of the nine-way valve. A first port V1 of the four-way valve is connected to the outlet of the fourth water pump 13, that is, the first port of the four-way valve is equivalent to the eighth end a24 of the nine-way valve. A second port V2 of the four-way valve is connected to the inlet a33 of the first heat exchange pipe, that is, the second port V2 of the four-way valve is equivalent to the first end a26 of the nine-way valve. A third end V3 of the four-way valve is configured to provide a cooling capacity or heat for the battery, that is, the third end V3 of the four-way valve is equivalent to the fourth end a22 of the nine-way valve. A fourth end V4 of the four-way valve is connected to a first port V1 of the five-way valve, and the connected fourth end V4 of the four-way valve and the connected first port V1 of the five-way valve are connected to the inlet of the third water pump 10, and are equivalent to the fifth end a21 of the nine-way valve. A second port V2 of the five-way valve is connected to the outlet of the cooler core, that is, the second port V2 of the five-way valve is equivalent to the second end a27 of the nine-way valve. A third port V3 of the five-way valve is connected to a pipeline on which the battery is located, that is, the third port V3 of the five-way valve is equivalent to the third end a23 of the nine-way valve. A fourth port V4 of the five-way valve is connected to the outlet of the heater core, that is, the fourth port V4 of the five-way valve is equivalent to the sixth end a28 of the nine-way valve. In this manner, the three-way valve, the four-way valve, and the five-way valve may implement a function of the nine-way valve in the foregoing embodiment.

### Embodiment 2

FIG. 6A is a diagram of a structure of an example of a thermal management system according to Embodiment 1 of this application. As shown in FIG. 6A, the thermal management system may include a compressor 1, a water-cooled condenser 2, a water-cooled evaporator 4, a first water pump 20, a second water pump 22, a third water pump 21, a fourth water pump 23, an eleven-way valve (the eleven-way valve may be an integration of the nine-way valve and the twelfth three-way valve in Embodiment 1), a battery, a cooler, and an electrical driver. The water-cooled condenser 2 may include a first heat exchange pipe and a second heat exchange pipe, the water-cooled evaporator 4 may include a third heat exchange pipe and a fourth heat exchange pipe, and the air conditioner box assembly 3 includes a heater core and a cooler core. An inlet b11 of the first heat exchange pipe is connected to an output end of the compressor, an outlet b12 of the first heat exchange pipe is connected to an inlet b31 of the third heat exchange pipe, an inlet b14 of the second heat exchange pipe is connected to an outlet of the first water pump 20, an inlet of the first water pump 20 is connected to a first end b21 of the eleven-way valve, an outlet b13 of the second heat exchange pipe is connected to an inlet of the heater core, an outlet of the heater core is connected to an eighth end b28 of the eleven-way valve, the inlet b31 of the third heat exchange pipe is connected to an output end b12 of the first heat exchange pipe, and an outlet b32 of the third heat exchange pipe is connected to an input end of the compressor. An inlet b33 of the fourth heat exchange pipe is connected to a sixth end b26 of the eleven-way valve, an outlet b34 of the fourth heat exchange pipe is connected to an inlet of the third water pump 21, an outlet of the third water pump 21 is connected to an inlet of the cooler core, and an outlet of the cooler core is connected to a seventh end b27 of the eleven-way valve. A second end b22 of the eleven-way valve is connected to an inlet of the second water pump 22, an outlet of the second water pump 22 is connected to an inlet of the battery, and an outlet of the battery is connected to a third end b23 of the eleven-way valve. A fifth end b25 of the eleven-way valve is connected to an inlet of the cooler, an outlet of the cooler is connected to an inlet of the electrical driver, an outlet of the electrical driver is connected to an inlet of a tank, an outlet of the tank is connected to a fourth end b24 of the eleven-way valve, and a ninth end b29 of the eleven-way valve is connected to a pipeline between the cooler and the electrical driver.

It should be noted that a connection relationship between components in FIG. 6A is merely an example for description. Positions of components located on a same loop may also be exchanged, but are not limited to the connection relationship shown in FIG. 6A. For example, the fourth water pump 23 in FIG. 6A may alternatively be disposed between the tank and the electrical driver, and this position interchange has no substantial impact on implementation of the solution. The following describes a specific implementation process of the solution by using the thermal management system shown in FIG. 6A.

In this embodiment of this application, the cooler is disposed in a front-end cooling module. A first fan is also disposed in the front-end cooling module, and the fan may implement heat exchange between an ambient temperature and the cooler by using ambient air. Therefore, the heat exchange for the cooler may specifically include heating or cooling. For example, because a temperature of a coolant in winter is lower than an ambient temperature, the front-end cooling module may heat the coolant based on the ambient temperature. Because a temperature of the coolant in summer is higher than an ambient temperature, the front-end cooling module may cool the coolant based on the ambient temperature. For ease of understanding, the following describes only cooling of the front-end cooling module as an example. It should be noted that this does not mean that the front-end cooling module cannot perform heating. In this embodiment of this application, the air conditioner box assembly includes the cooler core and the heater core. The air conditioner box assembly is generally disposed in a passenger cabin of a vehicle. A second fan may be further disposed in the air conditioner box assembly, and the fan may directly blow ambient air (without cooling or heating) to the passenger cabin. Alternatively, an air environment may be cooled by using the cooler core before the ambient air is blown out, or air may be heated by using the heater core before the ambient air is blown out.

In an optional implementation, still refer to FIG. 6A. The thermal management system may further include a heater. An input end of the heater is connected to the outlet b13 of the first heat exchange pipe, and an output end of the heater is connected to the inlet of the heater core. The water heater is configured to heat a coolant flowing through the water heater. When the passenger cabin needs to be heated, if a temperature of warm air blown out of the heater core to the passenger cabin does not reach a temperature set by a user, the coolant output from the first heat exchange pipe may be further heated by using the heater. In this way, the coolant flowing to the heater core has a higher temperature, to increase the temperature of the warm air blowing out to the passenger cabin and improve heating effect of the passenger cabin. If the temperature of the warm air blown out of the heater core to the passenger cabin is appropriate, the heater may be directly turned off.

In an optional implementation, still refer to FIG. 6A. The thermal management system may further include a throttling apparatus, and the throttling apparatus may include a first throttle valve. Specifically, an inlet of the first throttle valve is connected to the outlet b12 of the first heat exchange pipe, and an outlet of the first throttle valve is connected to the inlet b31 of the third heat exchange pipe. The first throttle valve 14 is configured to: implement pressure reduction and expansion on gas before evaporation and heat absorption, and control a flow rate of a circulating refrigerant. When the first throttle valve 14 is completely closed, the refrigerant is not circulated in the first throttle valve 14. In this case, a refrigerant loop is cut off, and heating or cooling cannot be performed on the first loop by using a steam compression cycle.

In an optional implementation, as shown in FIG. 6B, the thermal management system may further include a heat-recovery liquid collector 8a. The heat-recovery liquid collector 8a includes a fifth heat exchange pipe and a sixth heat exchange pipe. An inlet b44 of the fifth heat exchange pipe is connected to the outlet b12 of the first heat exchange pipe, and an outlet b43 of the fifth heat exchange pipe is connected to the inlet b31 of the third heat exchange pipe. An inlet b42 of the sixth heat exchange pipe is connected to the outlet b32 of the third heat exchange pipe, and an outlet b41 of the sixth heat exchange pipe is connected to the input end of the compressor. The heat-recovery liquid collector 8a may further reduce a temperature of a refrigerant at the outlet of the condenser, reduce dryness of the refrigerant after throttling, and improve a cooling capability of the evaporator.

In an optional implementation, as shown in FIG. 6C, the refrigerant loop of the thermal management system may include an outdoor heat exchanger. An input end b41 of the outdoor heat exchanger is connected to the output end b12 of the first heat exchange pipe, and the output end b42 is connected to an input end b31 of the third heat exchange pipe. The outdoor heat exchanger allows the refrigerant to directly exchange heat with the external environment. In extreme high and low temperature conditions, the outdoor heat exchanger can compensate the problem of insufficient secondary heat exchange efficiency on a water side and improve a system capability.

In an optional implementation, still refer to FIG. 6A. To learn an actual temperature and actual pressure at each key position in the thermal management system, and determine whether temperature control effect needs to be adjusted in a next step, a temperature-pressure sensor like a temperature-pressure sensor P20, a temperature-pressure sensor P21, a temperature-pressure sensor P22, or a temperature-pressure sensor P23 may be further disposed at each key position in the thermal management system. The temperature-pressure sensor P20 is disposed at an air outlet of the compressor, and is configured to detect a temperature and a pressure of a refrigerant output from the compressor. The temperature-pressure sensor P21 is disposed at an air outlet of the third heat exchange pipe, and is configured to detect a temperature and a pressure of a battery cooler. The temperature-pressure sensor P22 is disposed at a water inlet of the electrical driver, and is configured to detect a temperature and a pressure of the electrical driver. The temperature-pressure sensor P23 is disposed at a water inlet of the battery, and is configured to detect a temperature and a pressure of the battery. It should be understood that the foregoing illustrated key positions are merely examples for description and that this application is not limited to these key positions.

It can be learned from the foregoing content that, in Embodiment 1 of this application, components of the thermal management system are disposed in a same area as many as possible, so that various components are installed more compactly, and pipeline routes between the components may be short. This not only helps reduce space occupied by the thermal management system, but also can reduce a pressure loss of a liquid when the liquid circulates along a pipeline, and improve cooling efficiency or heating efficiency of the thermal management system.

In this embodiment of this application, a modular design may be further implemented for the components of the thermal management system in an integration mode. The modular design means that components with similar functions or structures (or randomly selected components) are integrated into one module. This not only helps reduce the occupied space, but also can freely combine the modules, and improve design flexibility. The modular design may be implemented in a plurality of solutions, and the integration mode may be performed based on Embodiment 1.

In the foregoing several implementations, integrating various components (excluding the front-end cooling module) in the passenger cabin of the electric vehicle not only helps reduce structural complexity of the thermal management system and the occupied space, but also can shorten routes between the components by using the compact structure arrangement, and help resolve a problem that components of a thermal management system are dispersed in an electric vehicle and that a pipeline is excessively long in a current phase. When a coolant or refrigerant circulates in such a short circulation link, a pressure loss of the coolant or refrigerant in a circulation process is reduced, and efficiency of the refrigerant loop is improved. In addition, in this integration mode, modular components that are easy to maintain and carry can be made.

The following first describes several loops that can be formed based on the thermal management system shown in FIG. 6A as examples.

Refrigerant loop: A refrigerant such as freon is preconfigured in the loop. Refrigerant gas in the loop is compressed by the compressor 1 into high-temperature and high-pressure refrigerant gas, and then returns to the compressor through the first heat exchange pipe and the third heat exchange pipe in sequence. After the high-temperature and high-pressure refrigerant gas output from the compressor undergoes heat exchange processing between the first heat exchange pipe and the second heat exchange pipe, a low-temperature refrigerant liquid is obtained (correspondingly, a high-temperature coolant is obtained through heat exchange by using the first heat exchange pipe). The low-temperature refrigerant liquid flows into the third heat exchange pipe, and after heat exchange processing is performed between the third heat exchange pipe and the fourth heat exchange pipe, high-temperature refrigerant gas is obtained (correspondingly, a low-temperature coolant is obtained through heat exchange by using the fourth heat exchange pipe).

First coolant loop: A coolant, for example, a liquid mixture of water and ethanol is preconfigured in the loop. The coolant in the loop is driven by the first water pump 20 to return to the first water pump 20 after passing through the inlet b14 of the second heat exchange pipe, the outlet b13 of the second heat exchange pipe, the heater core, the eighth end b28 of the eleven-way valve, and the first end b21 of the eleven-way valve in sequence. When the refrigerant loop is connected, the second heat exchange pipe can exchange heat to obtain a high-temperature coolant, and the high-temperature coolant circulates in the first coolant loop, thereby heating the heater core or entering the eleven-way valve to heat another coolant loop. When the refrigerant loop is closed, the second heat exchange pipe cannot perform a heat exchange operation, and therefore a normal-temperature coolant circulates in the first coolant loop.

Second coolant loop: A coolant is preconfigured in the loop. The coolant in the loop is driven by the third water pump 21 to pass through the outlet b34 of the fourth heat exchange pipe, the third water pump 21, the cooler core, the seventh end b27 of the eleven-way valve, the sixth end b26 of the eleven-way valve, and the inlet b33 of the fourth heat exchange pipe in sequence, to form a loop. When the refrigerant loop is connected, the fourth heat exchange pipe can exchange heat to obtain a low-temperature coolant, and the low-temperature coolant circulates in the second coolant loop, thereby cooling the cooler core or entering the eleven-way valve to cool another coolant loop. When the first refrigerant loop is closed, the fourth heat exchange pipe cannot perform a heat exchange operation, and therefore a normal-temperature coolant circulates in the second coolant loop.

Third coolant loop: A coolant is preconfigured in the loop. The coolant in the loop is driven by the third water pump 21 and the second water pump 22 to flow from the second water pump 22 and return to the second water pump 22 after passing through the battery, the third end b23 of the eleven-way valve, the sixth end b26 of the eleven-way valve, the fourth heat exchange pipe, the third water pump 21, the cooler core, the seventh end b27 of the eleven-way valve, and the second end b22 of the eleven-way valve in sequence. The third coolant loop is an active cooling loop of the battery. The low-temperature coolant may be partially distributed while flowing through the eleven-way valve, so that a water path of a battery module reaches an expected cooling temperature. From another perspective, the fourth heat exchange pipe may alternatively absorb heat from the battery by using the fourth coolant loop, to implement a function of recycling residual heat of the battery, and meet a heating requirement in winter. When the refrigerant loop is closed, the fourth heat exchange pipe cannot perform a heat exchange operation, and therefore a normal-temperature coolant circulates in the third coolant loop.

Fourth coolant loop: A coolant is preconfigured in the loop. The coolant in the loop is driven by the third water pump 21, the second water pump 22, and the fourth water pump 23 to flow from the second water pump 22 and return to the second water pump 22 after passing through the battery, the third end b23 of the eleven-way valve, the fifth end b25 of the eleven-way valve, the cooler, the electrical driver, the fourth water pump 23, the fourth end b24 of the eleven-way valve, the sixth end b26 of the eleven-way valve, the fourth heat exchange pipe, the third water pump 21, the cooler core, the seventh end b27 of the eleven-way valve, and the second end b22 of the eleven-way valve in sequence. The third coolant loop is an active and passive cooling loop of the battery. The low-temperature coolant is partially distributed while flowing through the eleven-way valve, so that a water path of a battery module reaches an expected cooling temperature. The fourth coolant loop is similar to the third coolant loop, except that the coolant in the second coolant loop flows through the eleven-way valve and then directly flows to the fourth heat exchange pipe for cooling, but the coolant in the third coolant loop flows through the eleven-way valve and then is cooled by the front-end cooling module. Therefore, the third coolant loop is capable of cooling both the battery and the electrical driver, regardless of whether the first refrigerant loop is connected. When the first refrigerant loop is connected, the coolant in the third coolant loop may be cooled through active heat exchange by using the fourth heat exchange pipe, and then cooled by using the front-end cooling module for a second time. Therefore, cooling effect is good. From another perspective, the fourth heat exchange pipe may alternatively absorb heat from the battery and the environment by using the fourth coolant loop, to implement a function of recycling residual heat of the battery, and meet a heating requirement in winter. However, when the first refrigerant loop is closed, the coolant in the fourth coolant loop is cooled only by the front-end cooling module. Therefore, the battery and the electrical driver are actually cooled based on a natural ambient temperature.

Fifth coolant loop: A coolant is preconfigured in the loop. The coolant in the loop is driven by the first water pump 20 and the second water pump 22 to flow from the second water pump 22 and return to the second water pump 22 after passing through the battery, the third end b23 of the eleven-way valve, the first end b28 of the eleven-way valve, the first water pump 20, the second heat exchange pipe, the heater core, the eighth end b28 of the eleven-way valve, and the second end b22 of the eleven-way valve in sequence. The third coolant loop is an active heating loop of the battery. The high-temperature coolant is partially distributed while flowing through the eleven-way valve, so that a water path of a battery module reaches an expected cooling temperature. When both the battery and the passenger cabin need to be heated, a second fan may first heat air by using the heater core and then blow the heated air into the passenger cabin. If no much heat is consumed in this process, the coolant with remaining heat may further flow to the battery through the first water pump 20 and the second water pump 22, to heat both the passenger cabin and the battery. When the refrigerant loop is closed, the second heat exchange pipe cannot perform a heat exchange operation, and therefore a normal-temperature coolant circulates in the fifth coolant loop.

Sixth coolant loop: A coolant is preconfigured in the loop. The coolant in the loop is driven by the fourth water pump 23 to flow from the fourth water pump 23 and return to the fourth water pump 23 after passing through the fourth end b24 of the eleven-way valve, the fifth end b25 of the eleven-way valve, the cooler, and the electrical driver in sequence. The loop is an electrical driver cooling loop, and the coolant flows to the electrical driver after being cooled by using the front-end cooling module, thereby cooling the electrical driver naturally. If a temperature of the electrical driver is excessively low, one part of the coolant output from the fourth water pump 23 may be directly transmitted to the electrical driver through the ninth end b29 of the eleven-way valve, and the other part is transmitted to the electrical driver through the fifth end b25 of the eleven-way valve and the cooler. In this way, a temperature of the coolant obtained by combining the coolants in the two branches increases, to help alleviate cooling effect of the electrical driver.

Seventh coolant loop: A coolant is preconfigured in the loop. The coolant in the loop is driven by the third water pump 21 and the fourth water pump 23 to flow from the fourth water pump 23 and return to the fourth water pump 23 after passing through the fourth end b24 of the eleven-way valve, the sixth end b26 of the eleven-way valve, the fourth heat exchange pipe, the third water pump 21, the cooler core, the seventh end b27 of the eleven-way valve, the fifth end b25 of the eleven-way valve, the cooler, and the electrical driver in sequence. The loop is an electrical driver cooling loop, and the coolant flows to the electrical driver after passing through the fourth heat exchange pipe and a front-end cooler in sequence for cooling, so as to actively cool the electrical driver. From another perspective, the fourth heat exchange pipe may alternatively absorb heat from the electrical driver and the environment by using the seventh coolant loop, to implement a function of recycling residual heat of the electrical driver, and meet a heating requirement in winter. If a temperature of the seventh coolant loop is higher than the ambient temperature during heating, the coolant output from the fourth water pump 23 may be directly transmitted to the electrical driver through the ninth end b29 of the eleven-way valve, to avoid a waste caused by heat dissipation into an external environment.

Eighth coolant loop: A coolant is preconfigured in the loop. The coolant in the loop is driven by the first water pump 20 and the fourth water pump 23 to flow from the first water pump 20 and return to the first water pump 20 after passing through the second heat exchange pipe, the heater core, the eighth end b28 of the eleven-way valve, the fifth end b25 of the eleven-way valve, the cooler, the electrical driver, the fourth water pump 23, the fourth end b24 of the eleven-way valve, and the first end b21 of the eleven-way valve in sequence. The coolant loop is an active heating loop of the electrical driver. From another perspective, the fourth heat exchange pipe may alternatively discharge heat from the electrical driver and the environment by using the eighth coolant loop, to meet a cooling requirement in summer.

Ninth coolant loop: A coolant is preconfigured in the loop. The coolant in the loop is driven by the second water pump 22 and the fourth water pump 23 to flow from the fourth water pump 23 and return to the fourth water pump 23 after passing through the fourth end b24 of the eleven-way valve, the second end b22 of the eleven-way valve, the second water pump 22, the battery, the third end b23 of the eleven-way valve, the fifth end b25 of the eleven-way valve, the cooler, and the electrical driver in sequence. The loop is an electrical driver and battery cooling loop, and the coolant flows to the electrical driver after being cooled by using the front-end cooling module, thereby cooling the electrical driver and the battery naturally. If a temperature of the electrical driver or the battery is excessively low, one part of the coolant output from the fourth water pump 23 may be directly transmitted to the electrical driver through the ninth end b29 of the eleven-way valve, and the other part is transmitted to the electrical driver through the fifth end b25 of the eleven-way valve and the cooler. In this way, a temperature of the coolant obtained by combining the coolants in the two branches increases, to help alleviate cooling effect of the electrical driver and the battery.

It should be understood that only several possible loops are described as examples. The thermal management system may further form more loops. Details are not described herein.

Based on the foregoing several loops, the following describe some modes that can be implemented by the thermal management system in Embodiment 1 of this application as examples. In this embodiment of this application, a controller may be further disposed in the electric vehicle. A control end of each valve component, a control end of each water pump, and an output end of each temperature-pressure sensor in the thermal management system may be further connected to the controller. The controller can not only implement different temperature modes by controlling each valve component and each water pump, but also obtain a temperature and pressure at each key position from the output end of each temperature-pressure sensor in a control process, and determine, based on the temperature and pressure at each key position, whether the current temperature and pressure meet requirements of a current temperature mode. If the current temperature and pressure do not meet the requirements, the controller may perform a real-time adjustment, to adjust the temperature and pressure based on the current temperature mode.

M10: Mode of cooling both the passenger cabin and the battery

FIG. 7A is a diagram of an example of a connection relationship of the thermal management system in a mode of cooling both the passenger cabin and the battery. As shown in FIG. 7A, in an M10 mode, a controller may connect the seventh end b27 of the eleven-way valve to the second end b22 of the eleven-way valve, connect the third end b23 of the eleven-way valve to the sixth end b26 of the eleven-way valve, connect the eighth end b28 of the eleven-way valve to the fifth end b25 of the eleven-way valve, connect the fourth end b24 of the eleven-way valve to the first end b21 of the eleven-way valve, open the first throttle valve, and start the third water pump 21 and the second water pump 22. In this case, the refrigerant loop, the third coolant loop, and the eighth coolant loop are connected. High-temperature and high-pressure refrigerant gas output from the compressor passes through the second heat exchange pipe for heat exchange and is throttled by using the first throttle valve 14 to obtain a low-temperature and low-pressure refrigerant liquid. The low-temperature and low-pressure refrigerant liquid is transmitted to the third heat exchange pipe to evaporate and absorb heat. The third heat exchange pipe performs heat exchange with the fourth heat exchange pipe, so that the coolant in the fourth heat exchange pipe is cooled to obtain a low-temperature coolant. The low-temperature coolant returns to the fourth heat exchange pipe after passing through the cooler core, the seventh end b27 of the eleven-way valve, the second end b22 of the eleven-way valve, the second water pump 22, the battery, the third end b23 of the eleven-way valve, and the sixth end b26 of the eleven-way valve in sequence, to cool the passenger cabin and the battery in sequence. Heat in the system is brought to the environment through the eighth coolant loop. An air conditioner in the passenger cabin may be set to a full cooling mode, and therefore, the coolant flowing through the heater core flows through an air conditioner box only as a bypass, and does not greatly affect a temperature of a cab.

In an optional implementation, the controller may further obtain, in real time or periodically, a temperature of an air outlet of the air conditioner box in the passenger cabin and data that is of a water inlet of the battery and that is collected by a temperature-pressure sensor P22, to determine a temperature of a passenger cabin and a temperature of the battery. When the temperature of the passenger cabin or the temperature of the battery does not meet a requirement of the M10 mode, the controller may adjust an opening degree of the first throttle valve 14 to change an amount of a refrigerant in the refrigerant loop, so as to adjust the temperature of the passenger cabin and the temperature of the battery. For example, it is assumed that, it is specified that the temperature of the passenger cabin does not exceed 28 degrees and that the temperature of the battery does not exceed 30 degrees in the M10 mode, when a detected temperature of the passenger cabin exceeds 28 degrees, the controller may increase the opening degree of the first throttle valve 14 to enable more refrigerant liquid to flow through the evaporator, to improve cooling effect of the evaporator and improve cooling effect of the passenger cabin. In addition, to prevent the battery from being directly impacted by a cold coolant, the first eleven-way valve is used to distribute a part of the coolant and battery loop mixed flow, so as to meet a battery cooling requirement.

In this embodiment of this application, a scenario to which the M10 mode is applicable is, for example, that the user drives the electric vehicle in summer. In this scenario, the temperatures of both the passenger cabin and the battery may be high. Battery overheating may cause an accident like a battery explosion, affecting physical and psychological safety of the user. However, overheating of the passenger cabin may reduce user experience. For example, if the user is in an overheating environment for a long time, the user may have a heat stroke. Therefore, if the foregoing manner is used to adjust the thermal management system to satisfy the connection relationship required in the M10 mode, both the passenger cabin and the battery can be cooled. This improves user experience while ensuring safety.

M11: Mode of cooling only the passenger cabin

FIG. 7B is a diagram of an example of a connection relationship of the thermal management system in a mode of cooling only the passenger cabin. As shown in FIG. 7B, in an M11 mode, the seventh end b27 of the eleven-way valve is connected to the sixth end b26 of the eleven-way valve, the eighth end b28 of the eleven-way valve is connected to the fifth end b25 of the eleven-way valve, the fourth end b24 of the eleven-way valve is connected to the first end b21 of the eleven-way valve, the first throttle valve 14 is opened, and the third water pump 21 and the fourth water pump 23 are started. In this case, the refrigerant loop, the second coolant loop, and the eighth coolant loop are connected. High-temperature and high-pressure refrigerant gas output from the compressor passes through the first heat exchange pipe for heat exchange and is throttled by using the first throttle valve 14 to obtain a low-temperature and low-pressure refrigerant liquid. The low-temperature and low-pressure refrigerant liquid is transmitted to the third heat exchange pipe to evaporate and absorb heat. The third heat exchange pipe performs heat exchange with the fourth heat exchange pipe, so that the coolant in the fourth heat exchange pipe is cooled to obtain a low-temperature coolant. The low-temperature coolant returns to the fourth heat exchange pipe after passing through the cooler core, the seventh end b27 of the eleven-way valve, and the sixth end b26 of the eleven-way valve in sequence, to cool the passenger cabin. Heat in the system is brought to the environment through the eighth coolant loop. An air conditioner in the passenger cabin may be set to a full cooling mode, and therefore, the coolant flowing through the heater core flows through an air conditioner box only as a bypass, and does not greatly affect a temperature of a cab.

In an optional implementation, the controller may further obtain a temperature of an air outlet of the air conditioner box in the passenger cabin in real time or periodically, to determine a temperature of the passenger cabin. When the temperature of the passenger cabin is higher than a temperature specified in the M11 mode, the controller may increase an opening degree of the first throttle valve 14 and increase a rotational speed of the compressor. In this way, the compressor may obtain refrigerant gas with a higher pressure and a higher temperature through compression. When the refrigerant gas passes through the water-cooled condenser, more refrigerant liquids are obtained. Further, after the refrigerant liquid passes through the first throttle valve 14 with the increased opening degree, more refrigerant liquids enter the third heat exchange pipe. This helps reduce a coolant temperature of the fourth heat exchange pipe, and improve cooling effect of the passenger cabin. When the temperature of the passenger cabin is lower than the temperature specified in the M11 mode, the controller may decrease the opening degree of the first throttle valve 14 and decrease the rotational speed of the compressor to reduce the cooling effect of the passenger cabin and avoid discomfort to a user.

In this embodiment of this application, a scenario to which the M11 mode is applicable is, for example, that the user often needs to first lower a temperature of the passenger cabin before entering the passenger cabin to drive the electric vehicle in summer. In this scenario, the temperature of the passenger cabin is quite high, but a temperature of the battery is not high because the electric vehicle is not started. Therefore, if the foregoing manner is used to adjust the thermal management system to satisfy the connection relationship required in the M11 mode, only the passenger cabin can be cooled. In addition, this manner further helps save power and improve endurance of the electric vehicle while meeting a user requirement.

M12: Mode of cooling only the battery

FIG. 7C is a diagram of an example of a connection relationship of the thermal management system in a mode of cooling only the battery. As shown in FIG. 7C, in an M12 mode, a controller may connect the seventh end b27 of the eleven-way valve to the second end b22 of the eleven-way valve, connect the third end b23 of the eleven-way valve to the sixth end b26 of the eleven-way valve, connect the eighth end b28 of the eleven-way valve to the fifth end b25 of the eleven-way valve, connect the fourth end b24 of the eleven-way valve to the first end b21 of the eleven-way valve, open the first throttle valve 14, and start the second water pump 22, the third water pump 21, and the fourth water pump 23. In this case, the refrigerant loop, the third coolant loop, and the seventh coolant loop are connected. High-temperature and high-pressure refrigerant gas output from the compressor passes through the first heat exchange pipe for heat exchange and is throttled by using the first throttle valve 14 to obtain a low-temperature and low-pressure refrigerant liquid. The low-temperature and low-pressure refrigerant liquid is transmitted to the third heat exchange pipe to evaporate and absorb heat. The third heat exchange pipe performs heat exchange with the fourth heat exchange pipe, so that the coolant in the fourth heat exchange pipe is cooled to obtain a low-temperature coolant. The low-temperature coolant returns to the fourth heat exchange pipe after passing through the cooler core, the seventh end b27 of the eleven-way valve, the second end b22 of the eleven-way valve, the second water pump 22, the battery, the third end b23 of the eleven-way valve, and the sixth end b26 of the eleven-way valve in sequence, to cool the battery. Heat in the system is brought to the environment through the seventh coolant loop. An air conditioner in the passenger cabin may be set to an off mode, and therefore, the coolant flowing through the cooler core and the heater core flows through the air conditioner box assembly 3 only as a bypass, and does not greatly affect a temperature of a cab.

In an optional implementation, the controller may further obtain a temperature of a water inlet of the battery in real time or periodically, to determine a temperature of the battery. When the temperature of the battery is higher than a temperature specified in the M12 mode, the controller may increase an opening degree of the first throttle valve 14 and increase a rotational speed of the compressor 1. In this way, the compressor 1 may obtain refrigerant gas with a higher pressure and a higher temperature through compression. When the refrigerant gas passes through the water-cooled condenser, more refrigerant liquids are obtained. Further, after the refrigerant liquid passes through the first throttle valve 14 with the increased opening degree, more refrigerant liquids enter the third heat exchange pipe. This helps increase cooling effect of the third heat exchange pipe on cooling water in the fourth heat exchange pipe, and further increases cooling effect on the coolant, and improves cooling effect of the battery. When the temperature of the battery is lower than the temperature specified in the M12 mode, the controller may decrease the opening degree of the first throttle valve 14 and decrease the rotational speed of the compressor 1, to reduce cooling effect on the battery.

In this embodiment of this application, a scenario to which the M12 mode is applicable is, for example, that the user drives the electric vehicle in spring and autumn. In this scenario, the temperature of the passenger cabin is appropriate, but the temperature of the battery may be high because the battery is always providing power. Therefore, if the foregoing manner is used to adjust the thermal management system to satisfy the connection relationship required in the M12 mode, only the battery can be cooled. This helps avoid overheating of the battery and ensure safety of the user.

M13: Mode of cooling the battery but heating the passenger cabin

FIG. 7D1 is a diagram of an example of a connection relationship of the thermal management system in a mode of cooling the battery but heating the passenger cabin. As shown in FIG. 7D1, in an M13 mode, a controller may connect the seventh end b27 of the eleven-way valve to the second end b22 of the eleven-way valve, connect the third end b23 of the eleven-way valve to the sixth end b26 of the eleven-way valve, and connect the eighth end b28 of the eleven-way valve to the first end b21 of the eleven-way valve, open the first throttle valve 14, and start the first water pump 20, the second water pump 22, and the third water pump 21. Alternatively, as shown in FIG. 7D2, the seventh end b27 of the eleven-way valve is connected to the second end b22 of the eleven-way valve, the third end b23 of the eleven-way valve is connected to the sixth end b26 of the eleven-way valve, the eighth end b28 of the eleven-way valve is connected to the fifth end b25 of the eleven-way valve, the fourth end b24 of the eleven-way valve is connected to the first end b21 of the eleven-way valve, the first throttle valve 14 is opened, and the first water pump 20, the second water pump 22, and the third water pump 21 are started. In this case, the refrigerant loop, the first coolant loop, and the third coolant loop are connected, or the refrigerant loop, the first coolant loop, and the eighth coolant loop are connected. High-temperature and high-pressure refrigerant gas output from the compressor 1 passes through the first heat exchange pipe for heat exchange and is throttled by using the first throttle valve 14 to obtain a low-temperature and low-pressure refrigerant liquid. The low-temperature and low-pressure refrigerant liquid returns to the compressor 1 after being evaporated in the third heat exchange pipe. A refrigerant liquid in a refrigerant loop passes through the first heat exchange pipe and the third heat exchange pipe to separately provide heat and a cooling capacity for the coolant in the second heat exchange pipe and the coolant in the fourth heat exchange pipe. In this case, a high-temperature coolant in the first coolant loop passes through the heater core from the second heat exchange pipe, and an air conditioner box in the passenger cabin starts a full heating mode. Therefore, an air conditioner first heats air by using the heater core, and then blows out warm air. A low-temperature coolant in the third coolant loop returns to the fourth heat exchange pipe after passing through the cooler core, the seventh end b27 of the eleven-way valve, the second end b22 of the eleven-way valve, the second water pump 22, the battery, the third end b23 of the eleven-way valve, and the sixth end b26 of the eleven-way valve, to cool the battery.

In an optional implementation, the controller may further obtain a temperature of an air outlet of the passenger cabin in real time or periodically, to determine a temperature of the passenger cabin. When the temperature of the passenger cabin is lower than a temperature specified in the M13 mode, the controller may increase a rotational speed of the compressor 1, and increase a temperature and a pressure of the refrigerant in the first heat exchange pipe, to improve heating effect of the coolant in the second heat exchange pipe, so as to heat the passenger cabin. When the temperature of the passenger cabin is higher than the temperature specified in the M13 mode, the controller controls the first coolant loop to switch to the eighth coolant loop for circulating the high-temperature coolant to the front-end cooler, to take away more heat. In addition, the controller may further adjust the opening degree of the first throttle valve 14 and the rotational speed of the compressor 1, so that a temperature of inlet water of the battery reaches an expectation. For a specific adjustment manner, refer to the foregoing content. Details are not described herein again.

In this embodiment of this application, a scenario to which the M13 mode is applicable is, for example, that the user drives the electric vehicle to move quickly in winter, or drives the electric vehicle uphill. In this scenario, the temperature of the passenger cabin is low due to impact of an external environment. However, because the quick movement or uphill movement consumes more power, the temperature of the battery is higher. Therefore, if the foregoing manner is used to adjust the thermal management system to satisfy the connection relationship required in the M13 mode, the battery can be cooled while the passenger cabin is heated. This not only helps improve comfort of the user, but also can avoid overheating of the battery and ensure safety of the user.

M14: Mode of naturally cooling the battery

FIG. 7E is a diagram of an example of a connection relationship of the thermal management system in a mode of naturally cooling the battery. As shown in FIG. 7E, in an M14 mode, a controller may connect the second end b22 of the eleven-way valve to the fourth end b24 of the eleven-way valve, connect the fifth end b25 of the eleven-way valve to the third end b23 of the eleven-way valve, close the first throttle valve 14, and start the second water pump 22 and the fourth water pump 23. In this case, the ninth coolant loop is connected. A coolant in the ninth coolant loop first flows to the front-end cooling module and is cooled at a temperature in a natural environment, and then flows to the electrical driver and the battery in sequence to cool the electrical driver and the battery.

In this embodiment of this application, a scenario to which the M14 mode is applicable is, for example, that the electric vehicle is slowly charged. In this scenario, the battery may be hot when being charged, but this heating is a safe phenomenon specified by factory settings. Therefore, if the foregoing manner is used to adjust the thermal management system to satisfy the connection relationship required in the M14 mode, only the front-end cooling module can be used to naturally cool the battery without starting the compressor 1 to forcibly cool the battery. This saves more power.

M15: Mode of naturally cooling the motor

FIG. 7F is a diagram of an example of a connection relationship of the thermal management system in a mode of naturally cooling the electrical driver. As shown in FIG. 7F, in an M15 mode, a controller may connect the fourth end b24 of the eleven-way valve to the fifth end b25 of the eleven-way valve, close the first throttle valve, and start the fourth water pump 23. In this case, the sixth coolant loop is connected. A coolant in the sixth coolant loop first flows to the front-end cooling module and is cooled at a temperature in a natural environment, and then flows to the electrical driver to cool the electrical driver.

In this embodiment of this application, a scenario to which the M15 mode is applicable is, for example, braking in a process of driving the electric vehicle. In this scenario, the braking may cause heating of the electrical driver, and the heating will end in a short time, without requiring forcible cooling. Therefore, if the foregoing manner is used to adjust the thermal management system to satisfy the connection relationship required in the M15 mode, only the front-end cooling module can be used to naturally cool the electrical driver without starting the compressor 1 to forcibly cool the electrical driver. This saves more power.

M16: Mode of heating both the passenger cabin and the battery

FIG. 7G is a diagram of an example of a connection relationship of the thermal management system in a mode of heating both the passenger cabin and the battery. As shown in FIG. 7G, in an M16 mode, a controller may connect the third end b23 of the eleven-way valve to the first end b21 of the eleven-way valve, connect the eighth end b28 of the eleven-way valve to the second end b22 of the eleven-way valve, connect the seventh end b27 of the eleven-way valve to the fifth end b25 of the eleven-way valve, connect the fourth end b24 of the eleven-way valve to the sixth end b26 of the eleven-way valve, open the first throttle valve 14, and start the first water pump 20 and the second water pump 22. In this case, the refrigerant loop, the fifth coolant loop, and the seventh coolant loop are connected. High-temperature and high-pressure refrigerant gas output from the compressor 1 passes through the first heat exchange pipe and the second heat exchange pipe for heat exchange and is throttled by using the first throttle valve 14 to obtain a low-temperature and low-pressure refrigerant liquid. The low-temperature and low-pressure refrigerant liquid returns to the compressor 1 after being evaporated in the third heat exchange pipe. A refrigerant liquid in a refrigerant loop passes through the first heat exchange pipe and the third heat exchange pipe to separately provide heat and a cooling capacity for the coolant in the second heat exchange pipe and the coolant in the fourth heat exchange pipe. In this case, a high-temperature coolant in the fifth coolant loop passes through the heater core from the second heat exchange pipe, and an air conditioner box in the passenger cabin starts a full heating mode. Therefore, an air conditioner first heats air by using the heater core, and then blows out warm air. Then, the high-temperature coolant in the fifth coolant loop flows to the battery through the eighth end b28 of the eleven-way valve, the second end b22 of the eleven-way valve, and the second water pump 22, and returns to the first heat exchange pipe after passing through the third end b23 of the eleven-way valve, and the first end b21 of the eleven-way valve, to heat the battery. In this case, energy of the refrigerant in the refrigerant loop can heat air in the air conditioner box assembly, so that the passenger cabin is heated. The energy can also heat the battery, thereby improving collaboration efficiency of each loop in the thermal management system. If a heating capability of the coolant cannot meet a heating requirement of the battery, the controller increases the rotational speed of the compressor 1, to improve heat absorption of the coolant in the second heat exchange pipe. If the heating effect is excessive, the controller may further control the opening degree of the first eleven-way valve that points to the battery, and mixing and heating of the coolant in the battery, to achieve a proper heating temperature. A low-temperature coolant in the seventh coolant loop flows from the fourth heat exchange pipe and returns to the fourth heat exchange pipe after passing through the cooler core, the seventh end b27 of the eleven-way valve, the fifth end b25 of the eleven-way valve, the cooler, the electrical driver, the fourth end b24 of the eleven-way valve, and the sixth end b26 of the eleven-way valve. A cooling capacity required by the system is implemented by recycling heat from the environment and electrical driver through the seventh coolant loop.

In this embodiment of this application, a scenario to which the M16 mode is applicable is, for example, that the user sits in the passenger cabin of the electric vehicle in winter, but does not drive the electric vehicle. In this scenario, temperatures of the passenger cabin and the battery are low due to impact of the external environment. The low temperatures not only cause poor user experience, but also may cause a large electric energy loss because the battery is in a low temperature state for a long time. Consequently, endurance of the electric vehicle is reduced. Therefore, if the foregoing manner is used to adjust the thermal management system to satisfy the connection relationship required in the M16 mode, the battery can be heated while the passenger cabin is heated. This helps protect battery power and improve user experience.

M17: Mode of heating the battery and dehumidifying the passenger cabin

FIG. 7H is a diagram of an example of a connection relationship of the thermal management system in a mode of heating the battery and dehumidifying the passenger cabin. As shown in FIG. 7H, in an M17 mode, a controller may connect the seventh end b27 of the eleven-way valve to the fifth end b25 of the eleven-way valve, connect the fourth end b24 of the eleven-way valve to the sixth end b26 of the eleven-way valve, connect the eighth end b28 of the eleven-way valve to the second end b22 of the eleven-way valve, connect the third end b23 of the eleven-way valve to the first end b21 of the eleven-way valve, open the first throttle valve 14, and start the first water pump, the second water pump, the third water pump, and the fourth water pump. In this case, the refrigerant loop, the fifth coolant loop, and the seventh coolant loop are connected. High-temperature and high-pressure refrigerant gas output from the compressor 1 passes through the first heat exchange pipe and the second heat exchange pipe for heat exchange and is throttled by using the first throttle valve 14 to obtain a low-temperature and low-pressure refrigerant liquid. The low-temperature and low-pressure refrigerant liquid returns to the compressor 1 after being evaporated in the third heat exchange pipe. A refrigerant liquid in a refrigerant loop passes through the first heat exchange pipe and the third heat exchange pipe to separately provide heat and a cooling capacity for the coolant in the second heat exchange pipe and the coolant in the fourth heat exchange pipe. In this case, a high-temperature coolant in the fifth coolant loop passes through the heater core from the second heat exchange pipe. Then, the high-temperature coolant in the fifth coolant loop flows to the battery after passing through the eighth end b28 of the eleven-way valve, the second end b22 of the eleven-way valve, and the second water pump 22, and returns to the second heat exchange pipe after passing through the third end b23 of the eleven-way valve and the first end b21 of the eleven-way valve, to heat the battery. A low-temperature coolant in the seventh coolant loop enters the cooler core from an outlet of the fourth heat exchange pipe. An air conditioner in the passenger cabin starts a dehumidification mode. Inlet air of the passenger cabin is first cooled and dehumidified by using the cooler core and then is heated by using the heater core. Then, the coolant returns to the fourth heat exchange pipe after passing through the seventh end b27 of the eleven-way valve, the fifth end b25 of the eleven-way valve, the cooler, the electrical driver, the fourth water pump 23, the fourth end b24 of the eleven-way valve, and the sixth end b26 of the eleven-way valve. In this case, the electrical driver of the battery has a heating requirement, and the cooling capacity is excessive. Therefore, a specific cooling capacity is output to the outside through the cooler. If a heating capability of the coolant cannot meet the heating requirement of the battery, the controller increases the rotational speed of the compressor 1 and increases heat absorption of the coolant in the second heat exchange pipe. In this case, the controller may further control the opening degree of the eleven-way valve that points to the battery, and water-mixing and heating of the coolant in the battery, to achieve a proper heating temperature.

In this embodiment of this application, a scenario to which the M17 mode is applicable is, for example, that the user sits in the passenger cabin of the electric vehicle in wet winter, but does not drive the electric vehicle. In this scenario, a temperature of the battery is low due to impact of the external environment, and humidity of the passenger cabin is high due to impact of the external environment. Therefore, if the foregoing manner is used to adjust the thermal management system to satisfy the connection relationship required in the M17 mode, the passenger cabin can be dehumidified while the battery is heated. This helps protect battery power and improve user experience.

M18: Mode of heating only the passenger cabin

FIG. 7I is a diagram of an example of a connection relationship of the thermal management system in a mode of heating only the passenger cabin. As shown in FIG. 7I, in an M18 mode, a controller may connect the first end b21 of the eleven-way valve to the eighth end b28 of the eleven-way valve, connect the seventh end b27 of the eleven-way valve to the fifth end b25 of the eleven-way valve, and connect the fourth end b24 of the eleven-way valve to the sixth end b26 of the eleven-way valve, open the first throttle valve 14, and start the first water pump 20, the third water pump 21, and the fourth water pump 23. In this case, the refrigerant loop, the first coolant loop, and the seventh coolant loop are connected. High-temperature and high-pressure refrigerant gas output from the compressor 1 passes through the first heat exchange pipe and the second heat exchange pipe for heat exchange and is throttled by using the first throttle valve 14 to obtain a low-temperature and low-pressure refrigerant liquid. The low-temperature and low-pressure refrigerant liquid returns to the compressor 1 after being evaporated in the third heat exchange pipe. A refrigerant liquid in a refrigerant loop passes through the first heat exchange pipe and the third heat exchange pipe to separately provide heat and a cooling capacity for the coolant in the second heat exchange pipe and the coolant in the fourth heat exchange pipe. In this case, a high-temperature coolant in the fifth coolant loop passes through the heater core from the second heat exchange pipe, and an air conditioner box in the passenger cabin starts a full heating mode. Therefore, an air conditioner first heats air by using the heater core, and then blows out warm air. Then, the high-temperature coolant in the first coolant loop returns to the second heat exchange pipe after passing through the eighth end b28 of the eleven-way valve and the first end b21 of the eleven-way valve. A low-temperature coolant in the seventh coolant loop flows from the fourth heat exchange pipe and returns to the fourth heat exchange pipe after passing through the cooler core, the seventh end b27 of the eleven-way valve, the fifth end b25 of the eleven-way valve, the cooler, the electrical driver, the fourth end b24 of the eleven-way valve, and the sixth end b26 of the eleven-way valve. A cooling capacity required by the system is implemented by recycling heat from the environment and electrical driver through the seventh coolant loop.

In this embodiment of this application, a scenario to which the M18 mode is applicable is, for example, that the user sits in the passenger cabin of the electric vehicle in winter, but an external environment temperature is still within a range tolerable by the battery. Therefore, if the foregoing manner is used to adjust the thermal management system to satisfy the connection relationship required in the M18 mode, only the passenger cabin can be heated.

M19: Mode of heating only the battery

FIG. 7J is a diagram of an example of a connection relationship of the thermal management system in a mode of heating only the battery. As shown in FIG. 7J, in an M19 mode, a controller may connect the seventh end b27 of the eleven-way valve to the fifth end b25 of the eleven-way valve, connect the fourth end b24 of the eleven-way valve to the sixth end b26 of the eleven-way valve, connect the eighth end b28 of the eleven-way valve to the second end b22 of the eleven-way valve, connect the third end b23 of the eleven-way valve to the first end b21 of the eleven-way valve, open the first throttle valve 14, and start the first water pump 20, the second water pump 22, the third water pump 21, and the fourth water pump 23. In this case, the refrigerant loop, the fifth coolant loop, and the seventh coolant loop are connected. High-temperature and high-pressure refrigerant gas output from the compressor 1 passes through the first heat exchange pipe and the second heat exchange pipe for heat exchange and is throttled by using the first throttle valve 14 to obtain a low-temperature and low-pressure refrigerant liquid. The low-temperature and low-pressure refrigerant liquid returns to the compressor 1 after being evaporated in the third heat exchange pipe. A refrigerant liquid in a refrigerant loop passes through the first heat exchange pipe and the third heat exchange pipe to separately provide heat and a cooling capacity for the coolant in the second heat exchange pipe and the coolant in the fourth heat exchange pipe. In this case, a high-temperature coolant in the fifth coolant loop passes through the heater core from the second heat exchange pipe, an air conditioner in the passenger cabin is turned off, inlet air of the passenger cabin passes through the heater core and does not participate in heat exchange, then the high-temperature coolant in the fifth coolant loop flows to the battery after passing through the eighth end b28 of the eleven-way valve, the second end b22 of the eleven-way valve, and the second water pump 22, and returns to the second heat exchange pipe after passing through the third end b23 of the eleven-way valve and the first end b21 of the eleven-way valve, to heat the battery. A low-temperature coolant in the seventh coolant loop is output from the fourth heat exchange pipe and enters the cooler core, an air conditioner in the passenger cabin is turned off, inlet air of the passenger cabin passes through the cooler core and does not participate in heat exchange, then the coolant returns to the fourth heat exchange pipe after passing through the seventh end b27 of the eleven-way valve, the fifth end b25 of the eleven-way valve, the electrical driver, the fourth water pump 23, the fourth end b24 of the eleven-way valve, and the sixth end b26 of the eleven-way valve, to complete a process of absorbing heat from the electrical driver and the external environment. If a heating capability of the coolant cannot meet the heating requirement of the battery, the controller increases the rotational speed of the compressor 1 and increases heat absorption of the coolant in the second heat exchange pipe. In this case, the controller may further control the opening degree of the eleven-way valve that points to the battery, and water-mixing and heating of the coolant in the battery, to achieve a proper heating temperature.

In this embodiment of this application, a scenario to which the M19 mode is applicable is, for example, that a temperature of the battery is low due to impact of an external environment in winter, but the user is not cold or the user is not in the vehicle. To avoid a large electric energy loss and reduction of endurance of the electric vehicle because the battery is in a low-temperature state for a long time, the thermal management system may be adjusted in the foregoing manner to the connection relationship satisfied by the M19 mode, to implement a function of heating only the battery.

The foregoing describes only several modes that can be implemented by the thermal management system in Embodiment 2 of this application as examples. It should be understood that in Embodiment 2 of this application, the thermal management system may further implement another mode in addition to the foregoing several modes, for example, a mode of cooling only the motor, a mode of heating only the motor, or a mode of dehumidifying the entire vehicle. In addition, a same mode may be actually further implemented by using various different loops, and the mode is not limited to those described above. Details are not described herein in this application.

### Embodiment 3

FIG. 8 is a diagram of a structure of an example of a thermal management system according to Embodiment 3 of this application. As shown in FIG. 8, the thermal management system may include a compressor 1, an air conditioner box assembly 3, a water-cooled condenser 2, a water-cooled evaporator 4, a battery, a valve body assembly, a cooler, an electrical driver, an outdoor heat exchanger, a first water pump 30, a second water pump 32, a third water pump 31, a fourth water pump 33, a first loop, a second loop, a third loop, a fourth loop, and a fifth loop. The water-cooled condenser 2 may include a third heat exchange pipe and a fourth heat exchange pipe, the water-cooled evaporator 4 may include a first heat exchange pipe and a second heat exchange pipe, and the air conditioner box assembly 3 may include a heater core and a cooler core. The valve body assembly includes a nine-way valve. The first loop includes a main loop, a first branch, and a second branch. The compressor 1, the heater core, and a stop valve are disposed on the main loop. An outlet of the compressor 1 is connected to an inlet of the heater core, an outlet of the heater core is connected to the inlet of the heater core, the outlet of the heater core is connected to an inlet c11 of the third heat exchange pipe, an outlet c12 of the third heat exchange pipe is connected to an input end c61 of the outdoor heat exchanger, an output end c62 of the outdoor heat exchanger is connected to an inlet of the stop valve 38, and an outlet of the stop valve is connected to an inlet of the compressor 1. A first throttle valve 36 and the first heat exchange pipe of the water-cooled evaporator 4 are disposed on the first branch, an inlet of the first throttle valve 36 is connected to a pipeline between the stop valve 38 and the third heat exchange pipe, an outlet of the first throttle valve 36 is connected to an inlet c31 of the first heat exchange pipe, and an outlet c32 of the first heat exchange pipe is connected to a pipeline between the outlet of the stop valve 38 and the inlet of the compressor 1. A second throttle valve 35 and the cooler core are disposed on the second branch, an inlet of the second throttle valve 35 is connected to a pipeline between the stop valve 38 and the output end c62 of the outdoor heat exchanger, an outlet of the second throttle valve 35 is connected to an inlet of the cooler core, and an outlet c52 of the cooler core is connected to a pipeline between the outlet of the stop valve 38 and the inlet of the compressor 1. An inlet c14 of the fourth heat exchange pipe is connected to an outlet of the first water pump 30, an inlet of the first water pump 30 is connected to a first end c21 of the nine-way valve, an outlet of the first water pump 30 is connected to an inlet c13 of the second heat exchange pipe, and an outlet c14 of the second heat exchange pipe is connected to a second end c28 of the nine-way valve. An outlet c34 of the second heat exchange pipe is connected to an inlet of the third water pump 31, the outlet c34 of the second heat exchange pipe is connected to a fifth end c27 of the nine-way valve, and an inlet of the third water pump 31 is connected to a sixth end c26 of the nine-way valve. A third end c22 of the nine-way valve is connected to an inlet of the second water pump 32, an outlet of the second water pump 32 is connected to an inlet of the battery, and an outlet of the battery is connected to a fourth end c23 of the nine-way valve. A seventh end c25 of the nine-way valve is connected to an inlet of the cooler, an outlet of the cooler is connected to an inlet of the electrical driver, an outlet of the electrical driver is connected to an inlet of the fourth water pump 33, an input end of the fourth water pump 33 is connected to an eighth end c24 of the nine-way valve, and a ninth end c29 of the nine-way valve is connected to a pipeline between the cooler and the electrical driver.

A loop on which the first water pump 30, the fourth heat exchange pipe, and the first end c21 and the second end c28 of the nine-way valve are located is the second loop. A loop on which the second water pump 32, battery, the third end of the nine-way valve, and the fourth end of the nine-way valve are located is the third loop. The third water pump 31, the second heat exchange pipe, the fifth end of the nine-way valve, and the sixth end of the nine-way valve form the fourth loop. The cooler, the electrical driver, a tank, the fourth water pump 33, the seventh end of the nine-way valve, and the eighth end of the nine-way valve form the fifth loop. The outdoor heat exchanger includes a seventh heat exchange pipe.

The throttle valve is configured to: implement pressure reduction and expansion on gas before evaporation and heat absorption, and control a flow rate of a circulating refrigerant. When the throttle valve is completely closed, the refrigerant is not circulated in the throttle valve. In this case, a refrigerant loop is cut off, and the thermal management system cannot perform heating or cooling by using a steam compression cycle.

It should be noted that a connection relationship between components in FIG. 8 is merely an example for description. Positions of components located on a same loop may also be exchanged, but are not limited to the connection relationship shown in FIG. 8. For example, the fourth water pump 33 in FIG. 8 may alternatively be disposed between the cooler and the electrical driver, and this position interchange has no substantial impact on implementation of the solution. The following describes a specific implementation process of the solution by using the thermal management system shown in FIG. 8.

In this embodiment of this application, the cooler is disposed in a front-end cooling module. A first fan is also disposed in the front-end cooling module, and the first fan 5 may implement heat exchange between an ambient temperature and the cooler by using ambient air. Therefore, the heat exchange for the cooler may specifically include heating or cooling. For example, because a temperature of a coolant in winter is lower than an ambient temperature, the front-end cooling module may heat the coolant based on the ambient temperature. Because a temperature of the coolant in summer is higher than an ambient temperature, the front-end cooling module may cool the coolant based on the ambient temperature. For ease of understanding, the following describes only cooling of the front-end cooling module as an example. It should be noted that this does not mean that the front-end cooling module cannot perform heating. In this embodiment of this application, the cooler core and the heater core are disposed in the air conditioner box in the passenger cabin. A second fan 6 may also be disposed in the air conditioner box assembly of the passenger cabin. The second fan 6 may directly blow ambient air to the passenger cabin (without cooling or heating). Alternatively, ambient air may be cooled by the evaporator before the ambient air is blown out, or the air may be heated by the heater core before the ambient air is blown out.

In an optional implementation, still as shown in FIG. 8, the thermal management system may further include at least one tank, an inlet of the tank may be connected to the outlet of the electrical driver, and an outlet of the tank may be connected to the eighth end c24 of the nine-way valve. The tank is a container with an upper opening. The inlet of the tank is located above the tank, and the outlet of the tank is located below the tank. When a gas-liquid mixture enters the tank through the inlet of the tank, a liquid in the gas-liquid mixture flows to a lower end of the tank due to action of gravity and flows out from the outlet of the tank, while gas in the gas-liquid mixture is left in the tank. Therefore, the tank is actually equivalent to a component for purifying the liquid (so that the liquid is not mixed with gas). In this case, the tank is disposed in a coolant loop, so that a coolant liquid in the coolant loop can be purified. When the coolant liquid is purer, temperature adjustment effect of the coolant loop is better.

In an optional implementation, the thermal management system may further include a liquid storage apparatus, and the liquid storage apparatus is configured to store a liquid on the refrigerant loop. The liquid storage apparatus may be a liquid storage tank or a gas-liquid separator. When the liquid storage apparatus is a liquid storage tank, the liquid storage tank may be disposed outside the output end of the second heat exchange pipe, an input end of the liquid storage tank is connected to the output end of the second heat exchange pipe, and an output end of the liquid storage tank is connected to the input end of the high pressure pipe. The liquid storage tank is configured to store a part of a refrigerant liquid in a refrigerant loop. When the liquid storage apparatus is a gas-liquid separator, an input end of the gas-liquid separator may be connected to the input end of a low-pressure pipe, and an output end of the gas-liquid separator may be connected to the input end of the compressor.

In an optional implementation, still refer to FIG. 8. To learn an actual temperature and actual pressure at each key position in the thermal management system, and determine whether temperature control effect needs to be adjusted in a next step, a temperature-pressure sensor like a temperature-pressure sensor P30, a temperature-pressure sensor P31, a temperature-pressure sensor P32, or a temperature-pressure sensor P33 may be further disposed at each key position in the thermal management system. The temperature-pressure sensor P30 is disposed at an outlet of the compressor, and is configured to detect a temperature and pressure of a refrigerant output from the compressor. The temperature-pressure sensor P31 is disposed at an inlet of the compressor, and is configured to detect a temperature and pressure of a refrigerant input by the compressor. The temperature-pressure sensor P32 is disposed at an inlet of the electrical driver, and is configured to detect a temperature and pressure of the electrical driver. The temperature-pressure sensor P33 is disposed at an inlet of the battery, and is configured to detect a temperature and pressure of the battery. It should be understood that the foregoing illustrated key positions are merely examples for description and that this application is not limited to these key positions.

It can be learned from the foregoing content that, in Embodiment 1 of this application, components of the thermal management system are disposed in a same area as many as possible, so that various components are installed more compactly, and pipeline routes between the components may be short. This not only helps reduce space occupied by the thermal management system, but also can reduce a pressure loss of a liquid when the liquid circulates along a pipeline, and improve cooling efficiency or heating efficiency of the thermal management system.

In this embodiment of this application, a modular design may be further implemented for the components of the thermal management system in an integration mode. The modular design means that components with similar functions or structures (or randomly selected components) are integrated into one module. This not only helps reduce the occupied space, but also can freely combine the modules, and improve design flexibility. The modular design may be implemented in a plurality of solutions, which may be performed in the manner of Embodiment 1. Details are not described herein again.

The following first describes several loops that can be formed based on the thermal management system shown in FIG. 8 as examples.

Refrigerant loop: The loop includes a first loop, and a refrigerant such as Freon is preconfigured in the loop. Refrigerant gas in the loop is compressed into high-temperature and high-pressure refrigerant gas at the compressor 1, and then may separately enter the first heat exchange pipe and the cooler core to return to the compressor 1 after passing through the heater core, the third heat exchange pipe, and the outdoor heat exchanger. The high-temperature and high-pressure refrigerant gas output from the compressor 1 first exchanges heat with air in the heater core and the passenger cabin, and is changed into a medium-temperature and high-pressure refrigerant after being used to heat air. Then, after the medium-temperature and high-pressure refrigerant gas undergoes heat exchange processing between the third heat exchange pipe and the fourth heat exchange pipe, a low-temperature refrigerant liquid is obtained (correspondingly, a high-temperature coolant is obtained through heat exchange by using the fourth heat exchange pipe). The low-temperature refrigerant liquid flows into the outdoor heat exchanger, releases heat to an external environment or absorbs heat from an external environment in the outdoor heat exchanger, and enters the third heat exchange pipe and the cooler core that are connected in parallel. After heat exchange processing is performed between the first heat exchange pipe and the second heat exchange pipe, high-temperature refrigerant gas is obtained (correspondingly, a low-temperature coolant is obtained through heat exchange by using the second heat exchange pipe). The low-temperature coolant exchanges heat with air in the passenger cabin at the cooler core, to cool the air in the passenger cabin.

First coolant loop: The loop includes the second loop, and a coolant, for example, a liquid mixture of water and ethanol, is preconfigured in the loop. The coolant in the loop is driven by the first water pump 30 to return to the fourth heat exchange pipe after passing through the inlet c13 of the fourth heat exchange pipe, the outlet c14 of the second heat exchange pipe, the second end c28 of the nine-way valve, and the first end c21 of the nine-way valve in sequence. When the refrigerant loop is connected, the fourth heat exchange pipe can exchange heat to obtain a high-temperature coolant, and the high-temperature coolant circulates in the first coolant loop, thereby entering the nine-way valve to heat another coolant loop. When the refrigerant loop is closed, the second heat exchange pipe cannot perform a heat exchange operation, and therefore a normal-temperature coolant circulates in the first coolant loop.

Second coolant loop: The loop includes the fourth loop, and a coolant is preconfigured in the loop. The coolant in the loop is driven by the third water pump 31 to pass through the third water pump 31, the inlet c34 of the second heat exchange pipe, the fifth end c27 of the nine-way valve, the sixth end c26 of the nine-way valve, and the inlet of the third water pump 31, to form a loop. When the refrigerant loop is connected, the second heat exchange pipe can exchange heat to obtain a low-temperature coolant, and the low-temperature coolant circulates in the second coolant loop, thereby entering the nine-way valve to cool another coolant loop. When the refrigerant loop is closed, the second heat exchange pipe cannot perform a heat exchange operation, and therefore a normal-temperature coolant circulates in the second coolant loop.

Third coolant loop: The loop includes the third loop and the fourth loop, and a coolant is preconfigured in the loop. The coolant in the loop is driven by the second water pump 32 and the third water pump 31 to flow from the second water pump 32 and return to the second water pump 32 after passing through the battery, the fourth end c23 of the nine-way valve, the sixth end c26 of the nine-way valve, the third water pump 31, the second heat exchange pipe, the fifth end c27 of the nine-way valve, and the third end c22 of the nine-way valve in sequence. The third coolant loop is an active cooling loop of the battery. The low-temperature coolant may be partially distributed while flowing through the nine-way valve, so that a water path of a battery module reaches an expected cooling temperature. From another perspective, the second heat exchange pipe may alternatively absorb heat from the battery by using the fourth coolant loop, to implement a function of recycling residual heat of the battery, and meet a heating requirement in winter. When the refrigerant loop is closed, the second heat exchange pipe cannot perform a heat exchange operation, and therefore a normal-temperature coolant circulates in the third coolant loop.

Fourth coolant loop: The loop includes the third loop, the fourth loop, and the fifth loop, and a coolant is preconfigured in the loop. The coolant in the loop is driven by the third water pump 31, the second water pump 32, and the fourth water pump 33 to flow from the second water pump 32 and return to the water pump 32 after passing through the battery, the fourth end c23 of the nine-way valve, the seventh end c25 of the nine-way valve, the cooler, the electrical driver, the fourth water pump 33, the eighth end c24 of the nine-way valve, the sixth end c26 of the nine-way valve, the third water pump 31, the second heat exchange pipe, the fifth end c27 of the nine-way valve, and the second end c22 of the nine-way valve in sequence. The third coolant loop is an active and passive cooling loop of the battery. The low-temperature coolant is partially distributed while flowing through the nine-way valve, so that a water path of a battery module reaches an expected cooling temperature. The fourth coolant loop is similar to the third coolant loop, except that the coolant in the second coolant loop flows through the nine-way valve and then directly flows to the second heat exchange pipe for cooling, but the coolant in the third coolant loop flows through the nine-way valve and then is cooled by the front-end cooling module. Therefore, the third coolant loop is capable of cooling both the battery and the electrical driver, regardless of whether the first refrigerant loop is connected. When the first refrigerant loop is connected, the coolant in the third coolant loop may be cooled through active heat exchange by using the second heat exchange pipe, and then cooled by using the front-end cooling module for a second time. Therefore, cooling effect is good. From another perspective, the second heat exchange pipe may alternatively absorb heat from the battery and the environment by using the fourth coolant loop, to implement a function of recycling residual heat of the battery, and meet a heating requirement in winter. However, when the first refrigerant loop is closed, the coolant in the third coolant loop is cooled only by the front-end cooling module. Therefore, the battery and the electrical driver are actually cooled based on a natural ambient temperature.

Fifth coolant loop: The loop includes the second loop and the third loop, and a coolant is preconfigured in the loop. The coolant in the loop is driven by the first water pump 30 and the second water pump 32 to flow from the second water pump 32 and return to the second water pump 32 after passing through the battery, the fourth end c23 of the nine-way valve, the first end c21 of the nine-way valve, the first water pump 30, the fourth heat exchange pipe, the second end c28 of the nine-way valve, and the third end c22 of the nine-way valve in sequence. The third coolant loop is an active heating loop of the battery. The high-temperature coolant is partially distributed while flowing through the nine-way valve, so that a water path of a battery module reaches an expected cooling temperature. When both the battery and the passenger cabin need to be heated, the refrigerant may exchange heat in the cooler core of the condenser in the passenger cabin. If no much heat is consumed in this process, remaining heat may be further transmitted to the coolant by using the fourth heat exchange pipe. The coolant flows to the battery through the first water pump 30 and the second water pump 32, to heat both the passenger cabin and the battery. When the refrigerant loop is closed, the fourth heat exchange pipe cannot perform a heat exchange operation, and therefore a normal-temperature coolant circulates in the fifth coolant loop.

Sixth coolant loop: The loop includes the fifth loop, and a coolant is preconfigured in the loop. The coolant in the loop is driven by the fourth water pump 33 to flow from the fourth water pump 33 and return to the fourth water pump 33 after passing through the eighth end c24 of the nine-way valve, the seventh end c25 of the nine-way valve, the cooler, and the electrical driver in sequence. The loop is an electrical driver cooling loop, and the coolant flows to the electrical driver after being cooled by using the front-end cooling module, thereby cooling the electrical driver naturally. If a temperature of the electrical driver is excessively low, one part of the coolant output from the fourth water pump 33 may be directly transmitted to the electrical driver through the ninth end c29 of the nine-way valve, and the other part is transmitted to the electrical driver through the seventh end c25 of the nine-way valve and the cooler. In this way, a temperature of the coolant obtained by combining the coolants in the two branches increases, to help alleviate cooling effect of the electrical driver.

Seventh coolant loop: The loop includes the fourth loop and the fifth loop, and a coolant is preconfigured in the loop. The coolant in the loop is driven by the third water pump 31 and the fourth water pump 33 to flow from the fourth water pump 33 and return to the fourth water pump 33 after passing through the eighth end c24 of the nine-way valve, the sixth end c26 of the nine-way valve, the third water pump 31, the second heat exchange pipe, the seventh end c25 of the nine-way valve, the cooler, and the electrical driver in sequence. The loop is an electrical driver cooling loop, and the coolant flows to the electrical driver after passing through the second heat exchange pipe and a front-end cooler in sequence for cooling, so as to actively cool the electrical driver. From another perspective, the second heat exchange pipe may alternatively absorb heat from the electrical driver and the environment by using the seventh coolant loop, to implement a function of recycling residual heat of the electrical driver, and meet a heating requirement in winter. If a temperature of the seventh coolant loop is higher than the ambient temperature during heating, the coolant output from the fourth water pump 33 may be directly transmitted to the electrical driver through the ninth end c29 of the nine-way valve, to avoid a waste caused by heat dissipation into an external environment.

Eighth coolant loop: The loop includes the second loop and the fifth loop, and a coolant is preconfigured in the loop. The coolant in the loop is driven by the first water pump 30 and the fourth water pump 33 to flow from the first water pump 30 and return to the first water pump 30 after passing through the fourth heat exchange pipe, the second end c28 of the nine-way valve, the seventh end c25 of the nine-way valve, the cooler, the electrical driver, the fourth water pump 33, the eighth end c24 of the nine-way valve, and the first end c21 of the nine-way valve in sequence. The coolant loop is an active heating loop of the electrical driver. From another perspective, the second heat exchange pipe may alternatively discharge heat from the electrical driver and the environment by using the eighth coolant loop, thereby improving system efficiency.

Ninth coolant loop: The loop includes the third loop and the fifth loop, and a coolant is preconfigured in the loop. The coolant in the loop is driven by the second water pump 32 and the fourth water pump 33 to flow from the water pump 33 and return to the fourth water pump 33 after passing through the eighth end c24 of the nine-way valve, the third end c22 of the nine-way valve, the second water pump 32, the battery, the fourth end c23 of the nine-way valve, the seventh end c25 of the nine-way valve, the cooler, and the electrical driver in sequence. The loop is an electrical driver and battery cooling loop, and the coolant flows to the electrical driver after being cooled by using the front-end cooling module, thereby cooling the electrical driver and the battery naturally. If a temperature of the electrical driver or the battery is excessively low, one part of the coolant output from the fourth water pump 33 may be directly transmitted to the electrical driver through the ninth end c29 of the nine-way valve, and the other part is transmitted to the electrical driver through the seventh end c25 of the nine-way valve and the cooler. In this way, a temperature of the coolant obtained by combining the coolants in the two branches increases, to help alleviate cooling effect of the electrical driver.

It should be understood that only several possible loops are described as examples. The thermal management system may further form more loops. Details are not described herein.

Based on the foregoing several loops, the following describe some modes that can be implemented by the thermal management system in Embodiment 1 of this application as examples. In this embodiment of this application, a controller may be further disposed in the electric vehicle. A control end of each valve component, a control end of each water pump, and an output end of each temperature-pressure sensor in the thermal management system may be further connected to the controller. The controller can not only implement different temperature modes by controlling each valve component and each water pump, but also obtain a temperature and pressure at each key position from the output end of each temperature-pressure sensor in a control process, and determine, based on the temperature and pressure at each key position, whether the current temperature and pressure meet requirements of a current temperature mode. If the current temperature and pressure do not meet the requirements, the controller may perform a real-time adjustment, to adjust the temperature and pressure based on the current temperature mode.

M10: Mode of cooling both the passenger cabin and the battery

FIG. 9A is a diagram of an example of a connection relationship of the thermal management system in a mode of cooling both the passenger cabin and the battery. As shown in FIG. 9A, in an M10 mode, a controller may connect the fifth end c27 of the nine-way valve to the third end c22 of the nine-way valve, connect the fourth end c23 of the nine-way valve to the sixth end c26 of the nine-way valve, open the first throttle valve 36, the second throttle valve 35, and the third throttle valve 37, close the stop valve 38, and start the third water pump 31 and the second water pump 32. In this case, the refrigerant loop, the third coolant loop, and the eighth coolant loop are connected. A high-temperature and high-pressure refrigerant gas output from the compressor passes through the third heat exchange pipe (the water-cooled condenser) and the outdoor heat exchanger for heat exchanger, and is throttled to obtain a low-temperature and low-pressure refrigerant liquid. The obtained low-temperature and low-pressure refrigerant enters the first heat exchange pipe and the cooler core through the first branch and the second branch to evaporate and absorb heat. After being evaporated at the cooler core, the low-temperature and low-pressure refrigerant gas cools air in the passenger cabin, to cool the passenger cabin. The first heat exchange pipe cools a coolant in the second heat exchange pipe to obtain a low-temperature coolant. The low-temperature coolant returns to the second heat exchange pipe after passing through the seventh end c27 of the nine-way valve, the third end c22 of the nine-way valve, the second water pump 32, the battery, the fourth end c23 of the nine-way valve, and the sixth end c26 of the nine-way valve in sequence, to cool the battery. Heat in the system may be brought to the environment through the eighth coolant loop, or may be brought to the environment through the seventh heat exchange pipe in the outdoor heat exchanger. An air conditioner in the passenger cabin may be set to a full cooling mode, and therefore, the coolant flowing through the heater core flows through an air conditioner box assembly 3 only as a bypass, and does not greatly affect a temperature of a cab.

In an optional implementation, the controller may further obtain, in real time or periodically, a temperature of an air outlet of the air conditioner box in the passenger cabin and data that is of a water inlet of the battery and that is collected by a temperature-pressure sensor P32, to determine a temperature of a passenger cabin and a temperature of the battery. When the temperature of the passenger cabin or the temperature of the battery does not meet a requirement of the M10 mode, the controller may adjust an opening degree of the first throttle valve 36 and an opening degree of the second throttle valve 35 to change an amount of a refrigerant in the refrigerant loop, so as to adjust the temperature of the passenger cabin and the temperature of the battery. For example, it is assumed that in the M10 mode, it is specified that the temperature of the passenger cabin does not exceed 28 degrees and that the temperature of the battery does not exceed 30 degrees. In this case, when a detected temperature of the passenger cabin exceeds 28 degrees, the controller may increase the opening degree of the first throttle valve 35 to enable more refrigerant liquid to flow through the cooler core, to improve cooling effect of the cooler core and improve cooling effect of the passenger cabin. In addition, to prevent the battery from being directly impacted by a cold coolant, a cooling temperature of the coolant in the second heat exchange pipe is controlled by controlling the opening degree of the second throttle valve 36, to meet a battery cooling requirement.

In an optional implementation, a controller may connect the fifth end c27 of the nine-way valve to the third end c22 of the nine-way valve, connect the fourth end c23 of the nine-way valve to the sixth end c26 of the nine-way valve, connect the eighth end c27 of the nine-way valve to the fifth end c25 of the nine-way valve, connect the fourth end c24 of the nine-way valve to the sixth end c26 of the nine-way valve, start the water pump 30, the water pump 31, the water pump 32, and the water pump 33, open the second throttle valve 35, the first throttle valve 36, and the third throttle valve 37, and close the stop valve 38, so that heat in the system is transferred to the environment and an electrical driver loop through the second heat exchange pipe and the seventh heat exchange pipe respectively, and a heat exchange capability on a high-pressure side is further improved.

In this embodiment of this application, a scenario to which the M10 mode is applicable is, for example, that the user drives the electric vehicle in summer. In this scenario, the temperatures of both the passenger cabin and the battery may be high. Battery overheating may cause an accident like a battery explosion, affecting physical and psychological safety of the user. However, overheating of the passenger cabin may reduce user experience. For example, if the user is in an overheating environment for a long time, the user may have a heat stroke. Therefore, if the foregoing manner is used to adjust the thermal management system to satisfy the connection relationship required in the M10 mode, both the passenger cabin and the battery can be cooled. This improves user experience while ensuring safety.

M11: Mode of cooling only the passenger cabin

FIG. 9B is a diagram of an example of a connection relationship of the thermal management system in a mode of cooling only the passenger cabin. As shown in FIG. 9B, in an M11 mode, the second throttle valve 35 and the third throttle valve 37 are opened, and the stop valve 38 and the first throttle valve 36 are closed. In this case, the refrigerant loop is connected. High-temperature and high-pressure refrigerant gas output from the compressor 1 passes through the outdoor heat exchanger for heat exchange and is throttled to obtain a low-temperature and low-pressure refrigerant liquid. The low-temperature and low-pressure refrigerant liquid is transferred to the cooler core to evaporate and absorb heat, to cool the passenger cabin. Then, the low-temperature and low-pressure refrigerant liquid returns to the inlet of the compressor 1. An air conditioner in the passenger cabin may be set to a full cooling mode, and therefore, the coolant flowing through the heater core flows through an air conditioner box only as a bypass, and does not greatly affect a temperature of a cab.

In an optional implementation, the controller may further obtain a temperature of an air outlet of the air conditioner box in the passenger cabin in real time or periodically, to determine a temperature of the passenger cabin. When the temperature of the passenger cabin is higher than a temperature specified in the M11 mode, the controller may increase an opening degree of the second throttle valve 35 and increase a rotational speed of the compressor. In this way, the compressor may obtain refrigerant gas with a higher pressure and a higher temperature through compression. When the refrigerant gas passes through the water-cooled condenser, more refrigerant liquids are obtained. Further, after the refrigerant liquid passes through the second throttle valve 35 with the increased opening degree, more refrigerant liquids enter the cooler core. This helps reduce a temperature of the evaporator of the passenger cabin, and improve cooling effect of the passenger cabin. When the temperature of the passenger cabin is lower than the temperature specified in the M21 mode, the controller may decrease the opening degree of the second throttle valve 35 and decrease the rotational speed of the compressor to reduce the cooling effect of the passenger cabin and avoid discomfort to a user.

In this embodiment of this application, a scenario to which the M11 mode is applicable is, for example, that the user often needs to first lower a temperature of the passenger cabin before entering the passenger cabin to drive the electric vehicle in summer. In this scenario, the temperature of the passenger cabin is quite high, but a temperature of the battery is not high because the electric vehicle is not started. Therefore, if the foregoing manner is used to adjust the thermal management system to satisfy the connection relationship required in the M21 mode, only the passenger cabin can be cooled. In addition, this manner further helps save power and improve endurance of the electric vehicle while meeting a user requirement.

M12: Mode of cooling only the battery

FIG. 9C is a diagram of an example of a connection relationship of the thermal management system in a mode of cooling only the battery. As shown in FIG. 9C, in an M12 mode, a controller may connect the fifth end c27 of the nine-way valve to the third end c22 of the nine-way valve, connect the fourth end c23 of the nine-way valve to the sixth end c26 of the nine-way valve, open the first throttle valve 36 and the third throttle valve 37, close the second throttle valve 35 and the stop valve 38, and start the second water pump 32 and the third water pump 31. In this case, the refrigerant loop, the third coolant loop, and the seventh coolant loop are connected. High-temperature and high-pressure refrigerant gas output from the compressor 1 passes through the outdoor heat exchanger for heat exchange and is throttled by using the first throttle valve 36 to obtain a low-temperature and low-pressure refrigerant liquid. The low-temperature and low-pressure refrigerant liquid is transmitted to the first heat exchange pipe to evaporate and absorb heat. The first heat exchange pipe performs heat exchange with the second heat exchange pipe, so that the coolant in the second heat exchange pipe is cooled to obtain a low-temperature coolant. The low-temperature coolant returns to the second heat exchange pipe after passing through the fifth end c27 of the nine-way valve, the third end c22 of the nine-way valve, the second water pump 32, the battery, the fourth end c23 of the nine-way valve, and the sixth end c26 of the nine-way valve in sequence, to cool the battery. Heat in the system is brought to the environment through the outdoor heat exchanger.

In an optional implementation, the controller may further obtain a temperature of a water inlet of the battery in real time or periodically, to determine a temperature of the battery. When the temperature of the battery is higher than a temperature specified in the M12 mode, the controller may increase an opening degree of the first throttle valve 36 and increase a rotational speed of the compressor. In this way, the compressor may obtain refrigerant gas with a higher pressure and a higher temperature through compression. After heat exchange, the refrigerant liquid passes through the first throttle valve 36 with the increased opening degree, so that more refrigerant liquids enter the first heat exchange pipe. This helps increase cooling effect of the third heat exchange pipe on cooling water in the fourth heat exchange pipe, and further increases cooling effect on the coolant, and improves cooling effect of the battery. When the temperature of the battery is lower than the temperature specified in the M12 mode, the controller may decrease the opening degree of the first throttle valve 36 and decrease the rotational speed of the compressor, to reduce cooling effect on the battery.

In this embodiment of this application, a scenario to which the M12 mode is applicable is, for example, that the user drives the electric vehicle in spring and autumn. In this scenario, the temperature of the passenger cabin is appropriate, but the temperature of the battery may be high because the battery is always providing power. Therefore, if the foregoing manner is used to adjust the thermal management system to satisfy the connection relationship required in the M12 mode, only the battery can be cooled. This helps avoid overheating of the battery and ensure safety of the user.

M13: Mode of cooling the battery but heating the passenger cabin

FIG. 9D is a diagram of an example of a connection relationship of the thermal management system in a mode of cooling the battery but heating the passenger cabin. As shown in FIG. 9D, in an M13 mode, a controller may connect the fifth end c27 of the nine-way valve to the third end c22 of the nine-way valve, connect the fourth end c23 of the nine-way valve to the sixth end c26 of the nine-way valve, open the second throttle valve 35 and the third throttle valve 37, close the first throttle valve 36 and the stop valve 38, and start the second water pump 32 and the third water pump 31. In this case, the refrigerant loop, the first coolant loop, and the third coolant loop are connected. High-temperature and high-pressure refrigerant gas output from the compressor 1 passes through the heater core and the outdoor heat exchanger for heat exchange, to obtain a low-temperature and low-pressure refrigerant liquid. The low-temperature and low-pressure refrigerant liquid returns to the compressor after being evaporated in the first heat exchange pipe. A refrigerant liquid in a refrigerant loop passes through the heater core to provide heat for the passenger cabin. An air conditioner box in the passenger cabin starts a full heating mode. Therefore, an air conditioner first heats air by using the heater core, and then blows out warm air. A low-temperature coolant in the third coolant loop returns to the second heat exchange pipe after passing through the fifth end c27 of the nine-way valve, the third end c22 of the nine-way valve, the second water pump 32, the battery, the fourth end c23 of the nine-way valve, and the sixth end c26 of the nine-way valve, to cool the battery.

In an optional implementation, the controller may further obtain a temperature of an air outlet of the passenger cabin in real time or periodically, to determine a temperature of the passenger cabin. When the temperature of the passenger cabin is lower than a temperature specified in the M13 mode, the controller may increase a rotational speed of the compressor and increase a temperature and pressure of the refrigerant in the heater core to improve heating effect of the condenser in the passenger cabin and heat the passenger cabin. When the temperature of the passenger cabin is higher than the temperature specified in the M13 mode, the controller controls the opening degree of the third throttle valve 37 to enable the outdoor heat exchanger to dissipate heat, to transmit the high-temperature coolant to the front-end cooler to take away more heat. In addition, the controller may further adjust the opening degree of the first throttle valve 36 and the rotational speed of the compressor, so that a temperature of inlet water of the battery reaches an expectation. For a specific adjustment manner, refer to the foregoing content. Details are not described herein again.

In this embodiment of this application, a scenario to which the M13 mode is applicable is, for example, that the user drives the electric vehicle to move quickly in winter, or drives the electric vehicle uphill. In this scenario, the temperature of the passenger cabin is low due to impact of an external environment. However, because the quick movement or uphill movement consumes more power, the temperature of the battery is higher. Therefore, if the foregoing manner is used to adjust the thermal management system to satisfy the connection relationship required in the M13 mode, the battery can be cooled while the passenger cabin is heated. This not only helps improve comfort of the user, but also can avoid overheating of the battery and ensure safety of the user.

M14: Mode of naturally cooling the battery

FIG. 9E is a diagram of an example of a connection relationship of the thermal management system in a mode of naturally cooling the battery. As shown in FIG. 9E, in an M14 mode, a controller may connect the third end c22 of the nine-way valve to the eighth end c24 of the nine-way valve, connect the seventh end c25 of the nine-way valve to the fourth end c23 of the nine-way valve, close the third throttle valve 37, the first throttle valve 36, the second throttle valve 35, and the stop valve 38, and start the second water pump 32 and the fourth water pump 33. In this case, the ninth coolant loop is connected. A coolant in the ninth coolant loop first flows to the front-end cooling module and is cooled at a temperature in a natural environment, and then flows to the electrical driver and the battery in sequence to cool the electrical driver and the battery.

In this embodiment of this application, a scenario to which the M14 mode is applicable is, for example, that the electric vehicle is slowly charged. In this scenario, the battery may be hot when being charged, but this heating is a safe phenomenon specified by factory settings. Therefore, if the foregoing manner is used to adjust the thermal management system to satisfy the connection relationship required in the M14 mode, only the front-end cooling module can be used to naturally cool the battery without starting the compressor to forcibly cool the battery. This saves more power.

M15: Mode of naturally cooling the motor

FIG. 9F is a diagram of an example of a connection relationship of the thermal management system in a mode of naturally the motor. As shown in FIG. 9F, in an M15 mode, a controller may connect the eighth end c24 of the nine-way valve to the seventh end c25 of the nine-way valve, close the third throttle valve 37, the first throttle valve 36, the second throttle valve 35, and the stop valve 38, and start the fourth water pump 33. In this case, the sixth coolant loop is connected. A coolant in the sixth coolant loop first flows to the front-end cooling module and is cooled at a temperature in a natural environment, and then flows to the electrical driver to cool the electrical driver.

In this embodiment of this application, a scenario to which the M15 mode is applicable is, for example, braking in a process of driving the electric vehicle. In this scenario, the braking may cause heating of the electrical driver, and the heating will end in a short time, without requiring forcible cooling. Therefore, if the foregoing manner is used to adjust the thermal management system to satisfy the connection relationship required in the M15 mode, only the front-end cooling module can be used to naturally cool the electrical driver without starting the compressor to forcibly cool the electrical driver. This saves more power.

M16: Mode of heating both the passenger cabin and the battery

FIG. 9G is a diagram of an example of a connection relationship of the thermal management system in a mode of heating both the passenger cabin and the battery. As shown in FIG. 9G, in an M16 mode, a controller may connect the fourth end c23 of the nine-way valve to the first end c21 of the nine-way valve, and connect the third end c22 of the nine-way valve to the second end c28 of the nine-way valve, open the third throttle valve 37, open the stop valve 38, close the second throttle valve 35 and the first throttle valve 36, and start the first water pump 30 and the second water pump 32. In this case, the refrigerant loop and the fifth coolant loop are connected. High-temperature and high-pressure refrigerant gas output from the compressor 1 passes through the heater core and the third heat exchange pipe for heat exchange and is throttled by using the third throttle valve to obtain a low-temperature and low-pressure refrigerant liquid. The low-temperature and low-pressure refrigerant liquid returns to the compressor after being evaporated in the outdoor heat exchanger. An air conditioner box in the passenger cabin starts a full heating mode. Therefore, an air conditioner first heats air by using the heater core, and then blows out warm air. A high-temperature coolant in the fifth coolant loop flows to the battery through the second end c28 of the nine-way valve, the third end c22 of the nine-way valve and the second water pump 32, and returns to the fourth heat exchange pipe after passing through the fourth end c23 of the nine-way valve and the first end c21 of the nine-way valve, to heat the battery. If a heating capability of the coolant cannot meet a heating requirement of the battery, the controller increases the rotational speed of the compressor, to improve heat absorption of the coolant in the fourth heat exchange pipe. If heating effect is excessive, the controller may lower the rotational speed of the compressor, to achieve a proper heating temperature. A cooling capacity required by the system is implemented by recycling heat from the environment through the seventh heat exchange pipe of the refrigerant loop. It may be understood that in this mode, energy of the refrigerant in the refrigerant loop can heat air in the air conditioner box assembly, so that the passenger cabin is heated. The energy can also heat the battery, thereby improving collaboration efficiency of each loop in the thermal management system.

In an optional implementation, the controller may connect the fourth end c23 of the nine-way valve to the first end c21 of the nine-way valve, connect the second end c28 of the nine-way valve to the third end c22 of the nine-way valve, connect the fifth end c27 of the nine-way valve to the seventh end c25 of the nine-way valve, connect the eighth end c24 of the nine-way valve to the sixth end c26 of the nine-way valve, open the third throttle valve 37, open the stop valve, close the second throttle valve 35 and the first throttle valve 36, and start the first water pump 30 and the second water pump 32. A cooling capacity required by the system is implemented by recycling heat from the environment through the outdoor heat exchanger of the refrigerant loop. At the same time, a low-temperature coolant in the seventh coolant loop flows from the fourth heat exchange pipe to the second heat exchange pipe after passing through the fifth end b27 of the nine-way valve, the seventh end b25 of the nine-way valve, the cooler, the electrical driver, the eighth end b24 of the nine-way valve, and the sixth end b26 of the nine-way valve, to recycle heat from the environment and the electrical driver through the seventh coolant loop.

In this embodiment of this application, a scenario to which the M16 mode is applicable is, for example, that the user sits in the passenger cabin of the electric vehicle in winter, but does not drive the electric vehicle. In this scenario, temperatures of the passenger cabin and the battery are low due to impact of the external environment. The low temperatures not only cause poor user experience, but also may cause a large electric energy loss because the battery is in a low temperature state for a long time. Consequently, endurance of the electric vehicle is reduced. Therefore, if the foregoing manner is used to adjust the thermal management system to satisfy the connection relationship required in the M16 mode, the battery can be heated while the passenger cabin is heated. This helps protect battery power and improve user experience.

M17. Mode of heating the battery and dehumidifying the passenger cabin

FIG. 9H is a diagram of an example of a connection relationship of the thermal management system in a mode of heating the battery and dehumidifying the passenger cabin. As shown in FIG. 9H, in an M17 mode, a controller may connect the second end c28 of the nine-way valve to the third end c22 of the nine-way valve, connect the fourth end c23 of the nine-way valve to the first end c21 of the nine-way valve, open the first throttle valve 35 and the third throttle valve 37, close the stop valve 38, and start the first water pump 30 and the second water pump 32. In this case, the refrigerant loop and the fifth coolant loop are connected. High-temperature and high-pressure refrigerant gas output from the compressor passes through the third heat exchange pipe for heat exchange and is throttled by using the third throttle valve and the first throttle valve 36 to obtain a low-temperature and low-pressure refrigerant liquid. The low-temperature and low-pressure refrigerant liquid returns to the compressor 1 after entering the cooler core. A refrigerant liquid in a refrigerant loop provides heat for a coolant in the fourth heat exchange pipe through the third heat exchange pipe. In addition, a refrigerant passes through the heater core and the cooler core to provide heat and a cooling capacity for the condenser and evaporator in the passenger cabin. A high-temperature coolant in the fifth coolant loop flows to the battery through the second end c28 of the nine-way valve, the third end c22 of the nine-way valve, and the second water pump 32, and returns to the fourth heat exchange pipe after passing through the fourth end c23 of the nine-way valve and the first end c21 of the nine-way valve, to heat the battery. Inlet air of the passenger cabin is first cooled and dehumidified by using the cooler core and then is heated by using the heater core. In this case, if the heat or cooling capacity is excessive, specific energy may be output to the outside by using the outdoor heat exchanger. If a heating capability of the coolant cannot meet a heating requirement of the battery, the controller increases the rotational speed of the compressor, to improve heat absorption of the coolant in the fourth heat exchange pipe, so as to achieve an appropriate heating temperature.

In this embodiment of this application, a scenario to which the M17 mode is applicable is, for example, that the user sits in the passenger cabin of the electric vehicle in wet winter, but does not drive the electric vehicle. In this scenario, a temperature of the battery is low due to impact of the external environment, and humidity of the passenger cabin is high due to impact of the external environment. Therefore, if the foregoing manner is used to adjust the thermal management system to satisfy the connection relationship required in the M17 mode, the passenger cabin can be dehumidified while the battery is heated. This helps protect battery power and improve user experience.

M18: Mode of heating only the passenger cabin

FIG. 9I is a diagram of an example of a connection relationship of the thermal management system in a mode of heating only the passenger cabin. As shown in FIG. 9I, in an M18 mode, a controller opens the third throttle valve 37, closes the first throttle valve 36, closes the second throttle valve 35, and opens the stop valve 38. In this case, the refrigerant loop is connected. High-temperature and high-pressure refrigerant gas output from the compressor passes through the heater core and participates in heat exchanger to provide heat energy for the condenser of the passenger cabin, then passes through the third heat exchange pipe for heat exchange and is throttled by using the third throttle valve 37 to obtain a low-temperature and low-pressure refrigerant liquid. The low-temperature and low-pressure refrigerant liquid returns to the compressor after being evaporated in the outdoor heat exchanger. An air conditioner box in the passenger cabin starts a full heating mode. Therefore, an air conditioner first heats air by using the heater core, and then blows out warm air. A cooling capacity required by the system is recycled from the electrical driver loop and environment through the outdoor heat exchanger. In this case, ports of the valve body assembly may be not connected to each other, and energy of a refrigerant in the refrigerant loop can heat air in the air conditioner box assembly, so that the passenger cabin is heated. The energy can also heat the battery, thereby improving collaboration efficiency of each loop in the thermal management system.

In an optional implementation, a controller connects the fifth end c27 of the nine-way valve to the seventh end c25 of the nine-way valve, connects the eighth end c24 of the nine-way valve to the sixth end c26 of the nine-way valve, opens the third throttle valve 37 and the first throttle valve 36, closes the second throttle valve 35 and the stop valve, and starts the third water pump 31 and the fourth water pump 33. In this case, the refrigerant loop and the seventh coolant loop are connected. High-temperature and high-pressure refrigerant gas output from the compressor passes through the heater core and participates in heat exchanger to provide heat energy for the condenser of the passenger cabin, then passes through the third heat exchange pipe for heat exchange and is throttled by using the third throttle valve to obtain a low-temperature and low-pressure refrigerant liquid. The low-temperature and low-pressure refrigerant liquid returns to the compressor after being evaporated in the outdoor heat exchanger and the fourth heat exchange pipe in sequence. An air conditioner box in the passenger cabin starts a full heating mode. Therefore, an air conditioner first heats air by using the heater core, and then blows out warm air. A cooling capacity required by the system is recycled from the electrical driver loop and environment through the seventh coolant loop and the outdoor heat exchanger.

In this embodiment of this application, a scenario to which the M18 mode is applicable is, for example, that the user sits in the passenger cabin of the electric vehicle in winter, but an external environment temperature is still within a range tolerable by the battery. Therefore, if the foregoing manner is used to adjust the thermal management system to satisfy the connection relationship required in the M18 mode, only the passenger cabin can be heated.

M19: Mode of heating only the battery

FIG. 9J is a diagram of an example of a connection relationship of the thermal management system in a mode of heating only the battery. As shown in FIG. 9J, in an M19 mode, a controller may connect the second end c28 of the nine-way valve to the third end c22 of the nine-way valve, connect the fourth end c23 of the nine-way valve to the first end c21 of the nine-way valve, open the third throttle valve 37 and the stop valve 38, close the first throttle valve 36 and the second throttle valve 35, and start the first water pump 30 and the second water pump 32. In this case, the refrigerant loop and the fifth coolant loop are connected. High-temperature and high-pressure refrigerant gas output from the compressor 1 passes through the heater core and does not participate in heat exchange, then passes through the third heat exchange pipe for heat exchange and is throttled by using the third throttle valve to obtain a low-temperature and low-pressure refrigerant liquid. The low-temperature and low-pressure refrigerant liquid returns to the compressor 1 after being evaporated in the outdoor heat exchanger. A high-temperature coolant in the fifth coolant loop flows from the fourth heat exchange pipe to the battery through the second end c28 of the nine-way valve, the third end c22 of the nine-way valve, and the second water pump 32, and returns to the fourth heat exchange pipe after passing through the fourth end c23 of the nine-way valve and the first end c21 of the nine-way valve, to heat the battery. The required heat is absorbed from the external environment through the outdoor heat exchanger. If a heating capability of the coolant cannot meet a heating requirement of the battery, the controller increases the rotational speed of the compressor, to improve heat absorption of the coolant in the fourth heat exchange pipe, so as to achieve an appropriate heating temperature.

In this embodiment of this application, a scenario to which the M19 mode is applicable is, for example, that a temperature of the battery is low due to impact of an external environment in winter, but the user is not cold or the user is not in the vehicle. To avoid a large electric energy loss and reduction of endurance of the electric vehicle because the battery is in a low-temperature state for a long time, the thermal management system may be adjusted in the foregoing manner to the connection relationship satisfied by the M19 mode, to implement a function of heating only the battery.

The foregoing describes only several modes that can be implemented by the thermal management system in Embodiment 3 of this application as examples. It should be understood that in Embodiment 3 of this application, the thermal management system may further implement another mode in addition to the foregoing several modes, for example, a mode of cooling only the motor, a mode of heating only the motor, or a mode of dehumidifying the entire vehicle. In addition, a same mode may be actually further implemented by using various different loops, and the mode is not limited to those described above. Details are not described herein in this application.

In an optional implementation, for any one of the foregoing embodiments, a flow pipe of each coolant may alternatively be disposed in a coolant substrate, and a flow pipe of each refrigerant may be disposed in a refrigerant substrate. The pipe is packaged in the substrate, so that each component can directly lead water or an inlet on the substrate without route interleaving. This helps further simplify routes of various pipes and avoid interference between the routes.

In an optional implementation, for any one of the foregoing embodiments, a flow pipe of each coolant may alternatively be disposed in a coolant substrate, and a flow pipe of each refrigerant may be disposed in a refrigerant substrate. The pipe is packaged in the substrate, so that each component can directly lead water or an inlet on the substrate without route interleaving. This helps further simplify routes of various pipes and avoid interference between the routes.

The thermal management system provided in embodiments of the present invention presents a modular structure in appearance, and has advantages such as a compact overall structure, a simple pipeline connection, and neat appearance.

It should be understood that the thermal management system in this application may be further applicable to any other vehicle driven by the electrical driver, and is not limited to the electric vehicle. This is not specifically limited in this application.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A thermal management system, comprising:
a first loop, wherein a cooler core in an air conditioner box assembly and a first heat exchange pipe are connected in series on the first loop, a first water pump is further disposed on the first loop, the cooler core is configured to get a coolant output from the first heat exchange pipe, a first port of the first loop is connected to a first end of a valve body assembly, and a second port of the first loop is connected to a second end of the valve body assembly; and
a second loop, wherein a battery, a second water pump, a first valve body, and a second valve body are disposed on the second loop, a first port of the second loop is connected to a third end of the valve body assembly, and a second port of the second loop is connected to a fourth end of the valve body assembly; the first valve body is configured to: enable a coolant passing through the third end or the fourth end of the valve body assembly to flow into the battery through the second water pump, and to flow back to the fourth end or the third end of the valve body assembly; or the first valve body is configured to enable a coolant to flow back from the third end or the fourth end of the valve body assembly to the fourth end or the third end of the valve body assembly through the first valve body; and the second valve body is configured to enable a coolant in the battery to flow back from a second end of the battery to a first end of the battery through the second valve body.

2. The thermal management system according to claim 1, wherein the first valve body is a first three-way valve, and the second valve body is a first one-way valve; and
a first end of the first three-way valve is connected to the fourth end of the valve body assembly, a second end of the first three-way valve is connected to the first end of the battery, the second water pump is disposed on a pipeline between the second end of the first three-way valve and the first end of the battery, a third end of the first three-way valve is connected to a pipeline between the second end of the battery and the third end of the valve body assembly, an inlet of the first one-way valve is connected to a pipeline between the third end of the first three-way valve and the second end of the battery, and an outlet of the first one-way valve is connected to a pipeline between the second end of the first three-way valve and the first end of the battery.

3. The thermal management system according to claim 1, wherein the first valve body is a first three-way valve, and the second valve body is a second three-way valve; and
a first end of the first three-way valve is connected to a pipeline between the fourth end of the valve body assembly and the battery, a second end of the first three-way valve is connected to the second end of the battery, a third end of the first three-way valve is connected to the third end of the valve body assembly, a first end of the second three-way valve is connected to the fourth end of the valve body assembly, a second end of the second three-way valve is connected to the first end of the battery, the second water pump is disposed on a pipeline between the second end of the second three-way valve and the first end of the battery, and a third end of the second three-way valve and the second end of the battery are connected to a pipeline between the second end of the first three-way valve and the second end of the battery.

4. The thermal management system according to any one of claims 1 to 3, wherein the thermal management system further comprises a third loop, a fourth loop, a compressor, a water-cooled condenser, and a water-cooled evaporator, wherein the water-cooled evaporator comprises the first heat exchange pipe and a second heat exchange pipe, and the water-cooled condenser comprises a third heat exchange pipe and a fourth heat exchange pipe;
the compressor, the third heat exchange pipe, and the second heat exchange pipe are connected in series in the third loop, and the second heat exchange pipe is configured to perform heat exchange with the first heat exchange pipe; and
the fourth heat exchange pipe and a heater core in the air conditioner box assembly are connected in series in the fourth loop, a third water pump is further disposed in the fourth loop, a first port of the fourth loop is connected to a fifth end of the valve body assembly, and a second port of the fourth loop is connected to a sixth end of the valve body assembly; and the fourth heat exchange pipe is configured to perform heat exchange with the third heat exchange pipe, the fourth heat exchange pipe is configured to transmit a coolant obtained after performing heat exchange with the third heat exchange pipe to the heater core, and the third water pump is configured to flow back a coolant passing through the fifth end of the valve body assembly to the fourth heat exchange pipe.

5. The thermal management system according to claim 4, wherein a throttling apparatus is further disposed in the third loop, the throttling apparatus is configured to perform temperature and pressure reduction on a coolant output from the third heat exchange pipe, and an inlet of the first heat exchange pipe is configured to get a low-temperature low-pressure coolant output from the throttling apparatus.

6. The thermal management system according to claim 4, wherein the thermal management system further comprises a cooler, an electrical driver, a tank, and a fourth water pump; and
the cooler, the electrical driver, the tank, and the fourth water pump are disposed on a fifth loop in sequence, a first port of the fifth loop is connected to a seventh end of the valve body assembly, a second port of the fifth loop is connected to an eighth end of the valve body assembly, and a ninth end of the valve body assembly is connected to a pipeline between the cooler and the electrical driver.

7. The thermal management system according to claim 6, wherein the valve body assembly is a nine-way valve;
on the first loop, a first end of the nine-way valve is connected to an inlet of the first heat exchange pipe, an outlet of the first heat exchange pipe is connected to an inlet of the first water pump, an outlet of the first water pump is connected to the cooler core, and an outlet of the cooler core is connected to a second end of the nine-way valve;
on the second loop, a fourth end of the nine-way valve is configured to be connected to the second end of the battery, and the first end of the battery is configured to be connected to a third end of the nine-way valve;
on the fourth loop, a fifth end of the nine-way valve is connected to an inlet of the third water pump, an outlet of the third water pump is connected to an inlet of the fourth heat exchange pipe, an outlet of the fourth heat exchange pipe is connected to an inlet of the heater core, and an outlet of the heater core is connected to a sixth end of the nine-way valve; and
on the fifth loop, a seventh end of the nine-way valve is connected to an inlet of the cooler, an outlet of the cooler is connected to an inlet of the electrical driver, an outlet of the electrical driver is connected to an inlet of the tank, an outlet of the tank is connected to an inlet of the fourth water pump, and an outlet of the fourth water pump is connected to an eighth end of the nine-way valve, wherein
a ninth end of the nine-way valve is connected to a pipeline between the cooler and the electrical driver.

8. The thermal management system according to any one of claims 4 to 7, wherein the thermal management system further comprises a heater, the heater is disposed on the fourth loop, an inlet of the heater is connected to the outlet of the fourth heat exchange pipe, and an outlet of the heater is connected to the inlet of the heater core.

9. The thermal management system according to any one of claims 4 to 7, wherein the thermal management system further comprises a third valve body, a fourth valve body, and a fifth valve body, a first end of the third valve body is connected to the outlet of the first heat exchange pipe, a second end of the third valve body is connected to an inlet of the cooler core, and a third end of the third valve body is connected to the second end of the valve body assembly;
a first end of the fourth valve body is connected to the outlet of the heater core, a second end of the fourth valve body is connected to the inlet of the cooler core, and a third end of the fourth valve body is connected to the sixth end of the valve body assembly;
a first end of the fifth valve body is connected to the outlet of the cooler core, a second end of the fifth valve body is connected to the sixth end of the valve body assembly, and a third end of the fifth valve body is connected to the sixth end of the valve body assembly; and
when the heater core gets a high-temperature coolant output from the fourth heat exchange pipe, a coolant output from the heater core gets the cooler core through the first end and the second end of the fourth valve body, and a coolant output from the cooler core gets the sixth end of the valve body assembly through the first end of the fifth valve body and the third end of the fifth valve body.

10. The thermal management system according to any one of claims 4 to 7, wherein the thermal management system further comprises a sixth valve body, a seventh valve body, and an eighth valve body, a first end of the sixth valve body is connected to the outlet of the first heat exchange pipe, a second end of the sixth valve body is connected to an inlet of the cooler core, and a third end of the sixth valve body is connected to the second end of the valve body assembly;
a first end of the seventh valve body is connected to the outlet of the fourth heat exchange pipe, a second end of the seventh valve body is connected to the inlet of the heater core, and a third end of the seventh valve body is connected to a pipeline between the inlet of the cooler core and the second end of the sixth valve body;
a first end of the eighth valve body is connected to the outlet of the cooler core, a second end of the eighth valve body is connected to the second end of the valve body assembly, and a third end of the eighth valve body is connected to the sixth end of the valve body assembly; and
when both the cooler core and the heater core are configured to get a high-temperature coolant output from the fourth heat exchange pipe, a coolant output from the cooler core flows back to the fourth heat exchange pipe through the first end of the eighth valve body, the second end of the eighth valve body, and the sixth end and the fifth end of the valve body assembly, and a coolant output from the heater core flows back to the fourth heat exchange pipe through the sixth end and the fifth end of the valve body assembly.

11. The thermal management system according to any one of claims 4 to 7, wherein the thermal management system further comprises an inlet air heat exchanger and a ninth valve body, the inlet air heat exchanger is disposed at an inlet of the air conditioner box assembly, an inlet of the inlet air heat exchanger is connected to a first end of the ninth valve body, and an outlet of the inlet air heat exchanger is connected to the sixth end of the valve body assembly; and
a second end of the ninth valve body is connected to the outlet of the heater core, and a third end of the ninth valve body is connected to the sixth end of the valve body assembly.

12. The thermal management system according to any one of claims 4 to 7, wherein the thermal management system further comprises a tenth valve body, an eleventh valve body, and a twelfth valve body, a first end of the tenth valve body is connected to the outlet of the first heat exchange pipe, a second end of the tenth valve body is connected to an inlet of the cooler core, and a third end of the tenth valve body is connected to the second end of the valve body assembly;
a first end of the eleventh valve body is connected to the outlet of the fourth heat exchange pipe, a second end of the eleventh valve body is connected to the inlet of the heater core, and a third end of the eleventh valve body is connected to the inlet of the cooler core;
a first end of the twelfth valve body is connected to the outlet of the cooler core, a second end of the twelfth valve body is connected to the second end of the valve body assembly, and a third end of the eleventh valve body is connected to the sixth end of the valve body assembly;
both the cooler core and the heater core are configured to get a high-temperature coolant output from the second heat exchange pipe, a coolant output from the cooler core flows back to the fourth heat exchange pipe through the eleventh valve body and the sixth end and the fifth end of the valve body assembly, and the cooler core is reused as the heater core; and
a coolant output from the heater core flows back to the fourth heat exchange pipe through a middle inlet of the fourth heat exchange pipe.

13. The thermal management system according to any one of claims 4 to 7, wherein the thermal management system further comprises a thirteenth valve body and a fourteenth valve body, a first end of the thirteenth valve body is connected to the outlet of the fourth heat exchange pipe, a second end of the thirteenth valve body is connected to the outlet of the first heat exchange pipe, and a third end of the thirteenth valve body is connected to the inlet of the heater core; and
an outlet of the fourteenth valve body is connected to a pipeline between the heater core and the valve body assembly, and an inlet of the fourteenth valve body is connected to a pipeline between the cooler core and the valve body assembly.

14. The thermal management system according to any one of claims 4 to 7, wherein the air conditioner box assembly further comprises an additional core, and the thermal management system further comprises a fifteenth valve body, a sixteenth valve body, and a seventeenth valve body; and
a first end of the fifteenth valve body is connected to the outlet of the first heat exchange pipe, a second end of the fifteenth valve body is connected to an inlet of the cooler core, a third end of the fifteenth valve body is connected to a first end of the sixteenth valve body, a second end of the sixteenth valve body is connected to the outlet of the fourth heat exchange pipe, a third end of the sixteenth valve body is connected to the inlet of the heater core, an inlet of the additional core is connected to a pipeline between the third end of the fifteenth valve body and the first end of the sixteenth valve body, an outlet of the additional core is connected to a first end of the seventeenth valve body, a second end of the seventeenth valve body is connected to a pipeline between the second end of the fifteenth valve body and the inlet of the cooler core, and a third end of the seventeenth valve body is connected to a pipeline between the third end of the sixteenth valve body and the inlet of the heater core.

15. The thermal management system according to any one of claims 7 to 14, wherein the thermal management system further comprises a heat-recovery liquid collector, the heat-recovery liquid collector is disposed on the third loop, an inlet of a fifth heat exchange pipe in the heat-recovery liquid collector is connected to an outlet of the third heat exchange pipe, an outlet of the fifth heat exchange pipe is connected to an inlet of the throttling apparatus, an inlet of a sixth heat exchange pipe in the heat-recovery liquid collector is connected to an outlet of the second heat exchange pipe, and an outlet of the sixth heat exchange pipe is connected to an inlet of the compressor.

16. The thermal management system according to claim 15, wherein the heat-recovery liquid collector comprises a regenerator and a first gas-liquid separator, the regenerator comprises the fifth heat exchange pipe and the sixth heat exchange pipe, an inlet of the first gas-liquid separator is connected to the outlet of the sixth heat exchange pipe, and an outlet of the first gas-liquid separator is connected to the inlet of the compressor.

17. The thermal management system according to claim 15, wherein the heat-recovery liquid collector comprises a regenerator and a liquid storage tank, the regenerator comprises the fifth heat exchange pipe and the sixth heat exchange pipe, an inlet of the fifth heat exchange pipe is connected to an outlet of the liquid storage tank, and an inlet of the liquid storage tank is connected to the outlet of the third heat exchange pipe.

18. The thermal management system according to any one of claims 7 to 14, wherein the throttling apparatus is a first throttle valve.

19. The thermal management system according to claim 18, wherein a second throttle valve, and a first valve, an end of the second throttle valve is connected to the outlet of the third heat exchange pipe, a second end of the second throttle valve is connected to an inlet of the outdoor heat exchanger, an outlet of the outdoor heat exchanger is connected to an inlet of the first throttle valve, one end of the first valve is connected to the outlet of the third heat exchange pipe, and the other end of the first valve is connected to the inlet of the first throttle valve.

20. The thermal management system according to claim 18, wherein the thermal management system further comprises a second gas-liquid separator, the second gas-liquid separator is located on the third loop, an inlet of the second gas-liquid separator is connected to an outlet of the second heat exchange pipe, and an outlet of the second gas-liquid separator is connected to an inlet of the compressor.

21. The thermal management system according to any one of claims 7 to 14, wherein the throttling apparatus comprises an ejector and a third gas-liquid separator; and
an injection end of the ejector is connected to an outlet of the third heat exchange pipe, a drainage end of the ejector is connected to an outlet of the second heat exchange pipe, an output end of the ejector is connected to an inlet of the third gas-liquid separator, a gas-phase output end of the third gas-liquid separator is connected to an inlet of the compressor, and a liquid-phase output end of the third gas-liquid separator is connected to an inlet of the second heat exchange pipe.

22. The thermal management system according to claim 21, wherein the throttling apparatus further comprises a first electronic expansion valve, an inlet of the first electronic expansion valve is connected to the gas-phase output end of the third gas-liquid separator, and an outlet of the first electronic expansion valve is connected to the inlet of the second heat exchange pipe.

23. The thermal management system according to claim 21 or 22, wherein the throttling apparatus further comprises a second electronic expansion valve, an inlet of the second electronic expansion valve is connected to the outlet of the third heat exchange pipe, and an outlet of the second electronic expansion valve is connected to the injection end of the ejector.

24. The thermal management system according to claim 21, wherein the throttling apparatus further comprises a third electronic expansion valve, a second valve, a third valve, a fourth valve, and a fifth valve; and
an inlet of the second valve is connected to the outlet of the third heat exchange pipe, an outlet of the second valve is connected to the injection end of the ejector, one end of the third valve is connected to the outlet of the second heat exchange pipe, the other end of the third valve is connected to the drainage end of the ejector, one end of the fourth valve is connected to the outlet of the second heat exchange pipe, the other end of the fourth valve is connected to a pipeline between the output end of the ejector and the inlet of the third gas-liquid separator, one end of the fifth valve is connected to the liquid-phase output end of the third gas-liquid separator, the other end of the fifth valve is connected to the inlet of the second heat exchange pipe, one end of the third electronic expansion valve is connected to a pipeline between the inlet of the second valve and the outlet of the third heat exchange pipe, and the other end of the third electronic expansion valve is connected to a pipeline between an outlet of the fifth valve and the inlet of the second heat exchange pipe.

25. The thermal management system according to claim 7, wherein the thermal management system further comprises a first integrated unit, and one or more of the first water pump, the second water pump, the third water pump, the fourth water pump, the first valve body, and the valve body assembly are integrated into the first integrated unit.

26. The thermal management system according to claim 7, wherein the thermal management system further comprises a second integrated unit and a third integrated unit, and the water-cooled condenser, the water-cooled evaporator, the heater, and the throttling apparatus are integrated into the second integrated unit.

27. The thermal management system according to claim 7, wherein the water-cooled condenser, the water-cooled evaporator, the heater, the heat-recovery liquid collector, the throttling apparatus, and the compressor are integrated into a third integrated unit.

28. A control method for the thermal management system according to any one of claims 1 to 27, comprising:
controlling a first end of a valve body assembly to connect to a third end of the valve body assembly, controlling a second end of the valve body assembly to connect to a fourth end of the valve body assembly, wherein a coolant in a first heat exchange pipe passes through a cooler core for cooling gas passing through the cooler core;
controlling each end of a first valve body to be open or closed, and to make sure that the coolant passing through the cooler core, after passing through the second end of the valve body assembly and the fourth end of the valve body assembly, flows back to the third end of the valve body assembly and the first end of the valve body assembly through the first valve body to enter the first heat exchange pipe; and controlling the second valve body to make sure that a coolant in a battery flows back from a second end of the battery to a first end of the battery through a second valve body; or
controlling each end of a first valve body to be open or closed, and to make sure that the coolant passing through the cooler core, after passing through the second end of the valve body assembly and the fourth end of the valve body assembly, flows back to the third end of the valve body assembly and the first end of the valve body assembly through the first valve body and the battery to enter the first heat exchange pipe.

29. A thermal management system, comprising:
a first loop, wherein a compressor, an air conditioner box assembly, a water-cooled evaporator, and a stop valve are disposed on the first loop, and the air conditioner box assembly comprises a heater core and a cooler core;
the first loop comprises a main loop, a first branch, and a second branch, the compressor, the heater core, and the stop valve are disposed on the main loop, an outlet of the compressor is connected to an inlet of the heater core, an outlet of the heater core is configured to be connected to an inlet of the stop valve, and an outlet of the stop valve is connected to an inlet of the compressor;
a first throttle valve and a first heat exchange pipe of the water-cooled evaporator are disposed on the first branch, an inlet of the first throttle valve is connected to a pipeline between the stop valve and the heater core, an outlet of the first throttle valve is connected to an inlet of the first heat exchange pipe, and an outlet of the first heat exchange pipe is connected to a pipeline between the outlet of the stop valve and the inlet of the compressor; and
a second throttle valve and the cooler core are disposed on the second branch, an inlet of the second throttle valve is connected to a pipeline between the stop valve and the heater core, an outlet of the second throttle valve is connected to an inlet of the cooler core, and an outlet of the cooler core is connected to a pipeline between the outlet of the stop valve and the inlet of the compressor.

30. The thermal management system according to claim 29, wherein the thermal management system further comprises a water-cooled condenser, a valve body assembly, a second loop, and a third loop, and the water-cooled condenser comprises a third heat exchange pipe and a fourth heat exchange pipe;
an inlet of the third heat exchange pipe is connected to the outlet of the heater core, and an outlet of the third heat exchange pipe is connected to the inlet of the stop valve;
a first water pump and the fourth heat exchange pipe are disposed on the second loop, the fourth heat exchange pipe is configured to perform heat exchange with the third heat exchange pipe, a first port of the second loop is connected to a first end of the valve body assembly, and a second port of the second loop is connected to a second end of the valve body assembly; and
the third loop passes through a battery to perform heat exchange with the battery, a second water pump configured to enable a coolant in the third loop to flow is disposed on the third loop, a first port of the third loop is connected to a third end of the valve body assembly, and a second port of the third loop is connected to a fourth end of the valve body assembly.

31. The thermal management system according to claim 30, wherein the thermal management system further comprises a fourth loop, and the water-cooled evaporator comprises the first heat exchange pipe and a second heat exchange pipe; and
a third water pump and the second heat exchange pipe of the water-cooled evaporator are disposed on the fourth loop, the second heat exchange pipe is configured to perform heat exchange with the first heat exchange pipe, a first port of the fourth loop is connected to a fifth end of the valve body assembly, and a second port of the fourth loop is connected to a sixth end of the valve body assembly.

32. The thermal management system according to claim 30, wherein a third throttle valve and an outdoor heat exchanger are further disposed on the main loop; an inlet of the third throttle valve is connected to the outlet of the third heat exchange pipe, an outlet of the third throttle valve is connected to an inlet of the outdoor heat exchanger, and an outlet of the outdoor heat exchanger is connected to the inlet of the stop valve.

33. The thermal management system according to any one of claims 30 to 32, wherein the thermal management system further comprises a fifth loop, and a cooler, an electrical driver, a tank, and a fourth water pump that are disposed on the fifth loop, wherein a first port of the fifth loop is connected to a seventh end of the valve body assembly, a second port of the fifth loop is connected to an eighth end of the valve body assembly, and a ninth end of the valve body assembly is connected to a pipeline between the cooler and the electrical driver.

34. The thermal management system according to claim 33, wherein the valve body assembly is a nine-way valve;
on the second loop, a first end of the nine-way valve is connected to an inlet of the first water pump, an outlet of the first water pump is connected to an inlet of the fourth heat exchange pipe, and an outlet of the fourth heat exchange pipe is connected to a second end of the nine-way valve;
on the third loop, a third end of the nine-way valve is connected to an inlet of the second water pump, an outlet of the second water pump is connected to an inlet of the battery, and an outlet of the battery is connected to a fourth end of the nine-way valve;
on the fourth loop, a fifth end of the nine-way valve is connected to an inlet of the third water pump, an outlet of the third water pump is connected to an inlet of the second heat exchange pipe, and an outlet of the second heat exchange pipe is connected to a sixth end of the nine-way valve; and
on the fifth loop, a seventh end of the nine-way valve is connected to an inlet of the cooler, an outlet of the cooler is connected to an inlet of the electrical driver, an outlet of the electrical driver is connected to an inlet of the tank, an outlet of the tank is connected to an inlet of the fourth water pump, and an outlet of the fourth water pump is connected to an eighth end of the nine-way valve, wherein
a ninth end of the nine-way valve is connected to a pipeline between the cooler and the electrical driver.

35. A thermal management system, comprising: a compressor, a first pipe, a second pipe, a throttling apparatus, and a heat-recovery liquid collector, wherein
an outlet of the compressor is connected to an inlet of the first pipe, an outlet of the first pipe is connected to an inlet of a third pipe in the heat-recovery liquid collector, an outlet of the third pipe is connected to an inlet of the throttling apparatus, an outlet of the throttling apparatus is connected to an inlet of the second pipe, an outlet of the second pipe is connected to an inlet of a fourth pipe in the heat-recovery liquid collector, and an outlet of the fourth pipe is connected to an inlet of the compressor.

36. The thermal management system according to claim 35, wherein the heat-recovery liquid collector comprises a regenerator and a gas-liquid separator, the regenerator comprises the third pipe and the fourth pipe, an inlet of the gas-liquid separator is connected to the outlet of the fourth pipe, and an outlet of the gas-liquid separator is connected to the inlet of the compressor.

37. The thermal management system according to claim 35, wherein the heat-recovery liquid collector comprises a regenerator and a liquid storage tank, the regenerator comprises the third pipe and the fourth pipe, an inlet of the third pipe is connected to an outlet of the liquid storage tank, and an inlet of the liquid storage tank is connected to the outlet of the first pipe.

38. A vehicle, comprising the thermal management system according to any one of claims 1 to 27 and 29 to 37.
